# EUROPEAN PATENT APPLICATION

(11) **EP 3 993 394 A1**
(43) Date of publication of application: **04.05.2022**
(21) Application number: 20847855.2
(22) Date of filing: 16.07.2020
(51) Int. Cl.: H04N 5/232, H04N 5/76, H04N 5/92, H04N 5/926, G06F 16/51, G06F 16/583

(54) **FILE PROCESSING DEVICE, FILE PROCESSING METHOD, AND PROGRAM**

(30) Priority: 30.07.2019 JP 2019139686
(71) Applicant: Sony Group Corporation, Tokyo 108-0075 (JP)
(72) Inventor: FUNAMOTO Daisuke, Tokyo 108-0075 (JP); ITO Ryogo, Tokyo 108-0075 (JP); ISOBE Yukio, Tokyo 108-0075 (JP); ISHIZAKA Toshihiro, Tokyo 108-0075 (JP); SHIINA Hiroki, Tokyo 108-0075 (JP); KIKUCHI Seigo, Tokyo 108-0075 (JP)
(74) Representative: D Young & Co LLP
(86) International application number: PCT/JP2020/027631
(87) International publication number: WO 2021/020142

(57) **Abstract**

The present technology relates to a file processing device, a file processing method, and a program that achieve quick index display.

A file control unit generates a proxy file storing a related image related to an image in a high efficiency image file format (HEIF) file, the proxy file being another HEIF file. Furthermore, the file control unit detects an image corresponding to a selected related image selected from related images stored in the proxy file. The present technology can be applied to, for example, a case where index display of thumbnail images is performed.

## Description

### TECHNICAL FIELD

The present technology relates to a file processing device, a file processing method, and a program, and particularly relates to a file processing device, a file processing method, and a program that achieve, for example, quick index display.

### BACKGROUND ART

As a file format for efficiently storing images, there is a high efficiency image file format (HEIF) (see Non Patent Document 1).

### CITATION LIST

### NON PATENT DOCUMENT

Non Patent Document 1: ISO/IEC 23008-12:2017, Information technology -- High efficiency coding and media delivery in heterogeneous environments -- Part 12: Image File Format

### SUMMARY OF THE INVENTION

### PROBLEMS TO BE SOLVED BY THE INVENTION

It is expected that HEIF files conforming to the high efficiency image file format (HEIF) will be needed to quickly perform index display.

The present technology has been made in view of such circumstances, and is intended to achieve quick index display.

### SOLUTIONS TO PROBLEMS

A first file processing device or program of the present technology is a file processing device including a file control unit, or a program for causing a computer to function as such a file processing device, in which the file control unit generates a proxy file storing a related image related to an image in a high efficiency image file format (HEIF) file, the proxy file being another HEIF file.

A first file processing method of the present technology is a file processing method including generating a proxy file storing a related image related to an image in a high efficiency image file format (HEIF) file, the proxy file being another HEIF file.

In the first file processing device, file processing method, and program of the present technology, a proxy file storing a related image related to an image in a high efficiency image file format (HEIF) file, the proxy file being another HEIF file, is generated.

A second file processing device or program of the present technology is a file processing device including a file control unit, or a program for causing a computer to function as such a file processing device, in which the file control unit detects an image in a high efficiency image file format (HEIF) file, the image corresponding to a selected related image selected from a related image that is related to the image and stored in a proxy file being another HEIF file.

A second file processing method of the present technology is a file processing method including detecting an image in a high efficiency image file format (HEIF) file, the image corresponding to a selected related image selected from a related image that is related to the image and stored in a proxy file being another HEIF file.

In the second file processing device, file processing method, and program of the present technology, an image in a high efficiency image file format (HEIF) file, the image corresponding to a selected related image selected from a related image that is related to the image and stored in a proxy file being another HEIF file, is detected.

Note that the first and second file processing devices may be independent devices, or may be internal blocks that form one device.

Furthermore, the first and second programs can be provided by being recorded on a recording medium or by being transmitted via a transmission medium.

### BRIEF DESCRIPTION OF DRAWINGS

Fig. 1 is a block diagram illustrating a configuration example of an embodiment of a digital camera to which the present technology is applied.
Fig. 2 is a view illustrating an example of a format of a joint photographic experts group (JPEG) file conforming to JPEG.
Fig. 3 is a view illustrating an example of an ISO base media file format.
Fig. 4 is a view illustrating an example of a format of a HEIF file conforming to HEIF.
Fig. 5 is a view illustrating an example of a format of a HEIF file in an image item format.
Fig. 6 is a view illustrating an example of an iprp box.
Fig. 7 is a view illustrating an example of a format of a HEIF file in an image sequence format.
Fig. 8 is a view illustrating an example of a trak box.
Fig. 9 is a view illustrating an example of a normal collection file in which a master image and a thumbnail image are stored.
Fig. 10 is a view illustrating an example of a first association-type collection file.
Fig. 11 is a view illustrating an example of a second association-type collection file.
Fig. 12 is a view illustrating an example of a third association-type collection file.
Fig. 13 is a view illustrating an example of a normal sequence file in which a track of a master image and a track of a thumbnail image of the master image are stored.
Fig. 14 is a view illustrating an example of an association-type sequence file.
Fig. 15 is a flowchart for explaining an outline of an example of generation processing of generating an association-type HEIF file.
Fig. 16 is a flowchart for explaining an outline of an example of reproduction processing of reproducing an association-type HEIF file.
Fig. 17 is a flowchart for explaining an example of reproduction processing of reproducing a collection file.
Fig. 18 is a flowchart for explaining an example of processing of reading a reproduction target image in step S32.
Fig. 19 is a flowchart for explaining a first example of processing of acquiring a reproduction target item ID in step S31.
Fig. 20 is a flowchart for explaining a second example of the processing of acquiring a reproduction target item ID in step S31.
Fig. 21 is a flowchart for explaining an example of processing of acquiring a uuid as specification information of a RAW file of a predetermined master image from the first association-type collection file.
Fig. 22 is a flowchart for explaining an example of processing of acquiring a uuid as specification information of a RAW file of a predetermined master image from the second association-type collection file.
Fig. 23 is a flowchart for explaining an example of processing of acquiring a uuid as specification information of a RAW file of a predetermined master image from the third association-type collection file.
Fig. 24 is a flowchart for explaining an example of processing of acquiring a list of item IDs of a master image from a collection file.
Fig. 25 is a flowchart for explaining an example of processing of reproducing a thumbnail image of (a frame of) a master image with respect to predetermined time information, from a sequence file.
Fig. 26 is a flowchart for explaining an example of processing of acquiring a uuid as specification information of a RAW file of (a frame of) a predetermined master image, from an association-type sequence file.
Fig. 27 is a view illustrating an example of storing a uuid into a RAW file in a case of adopting a RAW file of a master image as external data and generating association-type collection file.
Fig. 28 is a view illustrating an example of storing a uuid into a RAW file in a case of adopting a RAW file of a master image as external data and generating an association-type sequence file.
Fig. 29 is a view illustrating an example of storing a uuid into a WAV file in a case of adopting a WAV file of a master image as external data and generating association-type collection file.
Fig. 30 is a view illustrating an example of storing a uuid into a WAV file in a case of adopting a WAV file of a master image as external data and generating an association-type sequence file.
Fig. 31 is a view for explaining an example of index display on a digital camera 10.
Fig. 32 is a view for explaining an example of index display on an external device other than the digital camera 10.
Fig. 33 is a view illustrating an example of index display for a first association-type collection file.
Fig. 34 is a view illustrating another example of index display for a first association-type collection file.
Fig. 35 is a view illustrating an example of index display for an association-type sequence file.
Fig. 36 is a view for explaining a first example of a proxy file.
Fig. 37 is a view for explaining a second example of a proxy file.
Fig. 38 is a view for explaining a third example of a proxy file.
Fig. 39 is a view for explaining a fourth example of a proxy file.
Fig. 40 is a view for explaining an example of writing a uuid as specification information of a master image as external data to a sequence file #1 as a proxy target file.
Fig. 41 is a view for explaining an example of generation of a proxy file with a first association-type collection file serving as a proxy target file.
Fig. 42 is a view for explaining another example of generation of a proxy file with a first association-type collection file serving as a proxy target file.
Fig. 43 is a view for explaining an example of generation of a proxy file with an association-type sequence file serving as a proxy target file.
Fig. 44 is a view for explaining a mode taken by a set of a proxy target file and a proxy file generated by proxy file generation processing performed with the proxy target file.
Fig. 45 is a view illustrating a detailed example of a second mode taken by a set of a proxy target file and a proxy file.
Fig. 46 is a view illustrating a detailed example of a third mode taken by a set of a proxy target file and a proxy file.
Fig. 47 is a view for explaining an example of index display employing a proxy file on the digital camera 10.
Fig. 48 is a view for explaining an example of index display employing a proxy file on an external device other than the digital camera 10.
Fig. 49 is a view for explaining an example of selection of a HEIF file serving as a proxy target file.
Fig. 50 is a view for explaining another example of selection of a HEIF file serving as a proxy target file.
Fig. 51 is a view for explaining proxy file generation processing for generating a proxy file of the first mode and addition processing for adding a thumbnail image to the proxy file.
Fig. 52 is a flowchart for explaining an example of proxy file generation processing for generating a proxy file of the first mode.
Fig. 53 is a flowchart for explaining an example of addition processing for adding a thumbnail image to a proxy file of the first mode.
Fig. 54 is a view for explaining proxy file generation processing for generating a proxy file of the second or third mode and addition processing for adding a thumbnail image to the proxy file.
Fig. 55 is a flowchart for explaining an example of proxy file generation processing for generating a proxy file of the second or third mode.
Fig. 56 is a flowchart for explaining an example of addition processing for adding a thumbnail image to a proxy file of the second or third mode.
Fig. 57 is a view for explaining an example of detection processing for detecting a master image corresponding to a thumbnail image stored in a proxy file of the second mode.
Fig. 58 is a view for further explaining an example of detection processing for detecting a master image corresponding to a thumbnail image stored in a proxy file of the second mode.
Fig. 59 is a flowchart for explaining an example of detection processing for detecting a master image corresponding to a thumbnail image stored in a proxy file of the second mode.
Fig. 60 is a view for explaining an example of detection processing for detecting a master image corresponding to a thumbnail image stored in a proxy file of the third mode.
Fig. 61 is a view for further explaining an example of detection processing for detecting a master image corresponding to a thumbnail image stored in a proxy file of the third mode.
Fig. 62 is a view for explaining a first example of detection processing for detecting a master image corresponding to a thumbnail image stored in a proxy file of the third mode.
Fig. 63 is a flowchart for explaining a first example of detection processing for detecting a master image corresponding to a thumbnail image stored in a proxy file of the third mode.
Fig. 64 is a view for explaining a second example of detection processing for detecting a master image corresponding to a thumbnail image stored in a proxy file of the third mode.
Fig. 65 is a view for explaining a third example of detection processing for detecting a master image corresponding to a thumbnail image stored in a proxy file of the third mode.
Fig. 66 is a view for explaining a fourth example of detection processing for detecting a master image corresponding to a thumbnail image stored in a proxy file of the third mode.
Fig. 67 is a view for explaining proxy file generation processing and addition processing performed in a case where a thumbnail image to be stored in a proxy file of the first mode is generated when a proxy target file is generated.
Fig. 68 is a flowchart for explaining an example of proxy file generation processing performed in a case where a thumbnail image to be stored in a proxy file of the first mode is generated when a proxy target file is generated.
Fig. 69 is a flowchart for explaining an example of addition processing performed in a case where a thumbnail image to be stored in a proxy file of the first mode is generated when a proxy target file is generated.
Fig. 70 is a view for explaining proxy file generation processing and addition processing performed in a case where a thumbnail image to be stored in a proxy file of the third mode is generated when a proxy target file is generated.
Fig. 71 is a flowchart for explaining an example of proxy file generation processing performed in a case where a thumbnail image to be stored in a proxy file of the third mode is generated when a proxy target file is generated.
Fig. 72 is a flowchart for explaining an example of addition processing performed in a case where a thumbnail image to be stored in a proxy file of the third mode is generated when a proxy target file is generated.
Fig. 73 is a flowchart for explaining an example of proxy file generation processing in which an already existing HEIF file is used as a proxy target file.
Fig. 74 is a flowchart for explaining an example of addition processing in which an already existing HEIF file is used as a proxy target file.
Fig. 75 is a block diagram illustrating a configuration example of an embodiment of a computer to which the present technology is applied.

### MODE FOR CARRYING OUT THE INVENTION

### <One embodiment of digital camera to which present technology is applied>

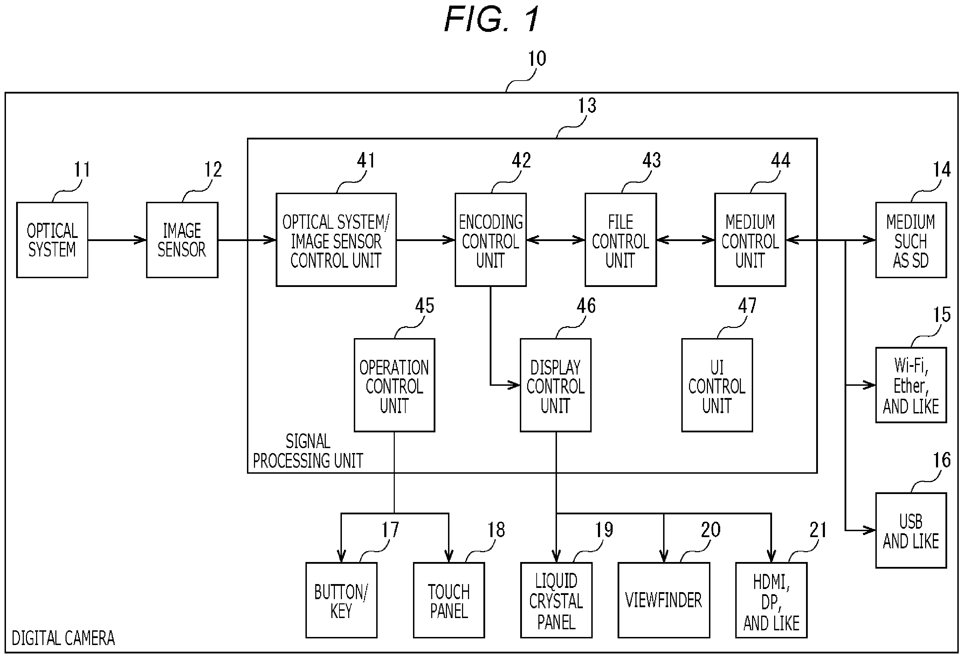

Fig. 1 is a block diagram illustrating a configuration example of an embodiment of a digital camera to which the present technology is applied.

A digital camera 10 includes an optical system 11, an image sensor 12, a signal processing unit 13, a medium 14, interfaces 15 and 16, a button/key 17, a touch panel 18, a liquid crystal panel 19, a viewfinder 20, an interface 21, and the like.

The optical system 11 condenses light from a subject on the image sensor 12.

The image sensor 12 receives light from the optical system 11 and performs imaging for photoelectric conversion, to generate image data as an electric signal and supply to the signal processing unit 13.

The signal processing unit 13 includes an optical system/image sensor control unit 41, an encoding control unit 42, a file control unit 43, a medium control unit 44, an operation control unit 45, a display control unit 46, and a UI control unit 47.

The optical system/image sensor control unit 41 controls the optical system 11 and the image sensor 12, and supplies, to the encoding control unit 42, (data of) an image obtained by imaging performed in accordance with the control.

The encoding control unit 42 supplies the image from the optical system/image sensor control unit 41 to the display control unit 46, and encodes the image as necessary and supplies to the file control unit 43. Furthermore, the encoding control unit 42 decodes the image supplied from the file control unit 43 as necessary, and supplies to the display control unit 46.

The file control unit 43 generates a file storing the image supplied from the encoding control unit 42, and supplies to the medium control unit 44. Furthermore, the file control unit 43 reproduces a file supplied from the medium control unit 44, that is, reads data such as an image stored in the file, and the like. For example, the image read from the file is supplied from the file control unit 43 to the encoding control unit 42.

The medium control unit 44 controls exchange of files between with the medium 14 and the interfaces 15 and 16. For example, the medium control unit 44 causes the file from the file control unit 43 to be recorded on the medium 14 or transmitted from the interfaces 15 and 16. Furthermore, the medium control unit 44 reads a file from the medium 14, or causes the interfaces 15 and 16 to receive a file, and supplies to the file control unit 43.

The operation control unit 45 supplies, in accordance with an operation of the button/key 17 or the touch panel 18 by a user, an operation signal corresponding to the operation to a necessary block.

The display control unit 46 performs display control and the like to supply an image and the like supplied from the encoding control unit 42 to the liquid crystal panel 19, the viewfinder 20, and the interface 21, to display.

The UI control unit 47 manages user interface (UI) control.

The medium 14 is, for example, a storage medium such as an SD card. The interface 15 is, for example, an interface of a local area network (LAN) such as Wi-Fi (registered trademark) or Ethernet (registered trademark). The interface 16 is, for example, a universal serial bus (USB) interface. The button/key 17 and the touch panel 18 are operated by the user when inputting a command or other information to the digital camera 10. The touch panel 18 can be formed integrally with the liquid crystal panel 19. The liquid crystal panel 19 and the viewfinder 20 display an image and the like supplied from the display control unit 46. The interface 21 is an interface that transmits at least an image, such as high-definition multimedia interface (HDMI) (registered trademark) or display port (DP).

In the digital camera 10 configured as described above, from an image (hereinafter, also referred to as a RAW image) of RAW data obtained by imaging by the image sensor 12, the optical system/image sensor control unit 41 generates, for example, a YUV image having the same resolution (the number of pixels) as that of the RAW image as a master image of a HEIF file, and supplies to the encoding control unit 42.

From a master image of YUV, the encoding control unit 42 generates, for example, an image (hereinafter, also referred to as a screen nail image) of YUV having a resolution lower than that of the master image for display use on the liquid crystal panel 19 or an external display as a first other image based on the master image, and generates, for example, an image (hereinafter, also referred to as a thumbnail image) of YUV having a resolution lower than that of the screen nail image for index display (list display) use as a second other image based on the master image. For example, the encoding control unit 42 supplies the screen nail image to the liquid crystal panel 19 via the display control unit 46, to display as a so-called through image. As the thumbnail image, for example, an image having a size of 320 pixels or less on a long side can be adopted. A ratio of a size (number of pixels) between the master image and the screen nail image as the first other image based on the master image or the thumbnail image as the second other image based on the master image can be, for example, 200 times or less. Similarly, a ratio of sizes between the master image and the screen nail image as the first other image based on the master image and the thumbnail image as the second other image based on the master image can also be 200 times or less. As the screen nail image, for example, an image having a resolution of 4K or more can be adopted. Furthermore, as the screen nail image, for example, a 4K (QFHD) or FHD image can be adopted in accordance with a user's selection. Moreover, images having the same resolution can be adopted as the master image and the screen nail image. In a case where images having the same resolution are adopted as the master image and the screen nail image, both the master image and the screen nail image can be stored in the HEIF file, or the master image can be stored without the screen nail image being stored. In a case where the master image is stored in the HEIF file without the screen nail image being stored, the master image can be resized and used as the screen nail image.

Furthermore, the encoding control unit 42 encodes the master image, the screen nail image, and the thumbnail image corresponding to the RAW image (the master image, the screen nail image, and the thumbnail image generated from the same RAW image) as necessary, and supplies to the file control unit 43 together with the RAW image.

The file control unit 43 generates a RAW file storing the RAW image, and generates a HEIF file, a JPEG file, or the like storing the corresponding master image, screen nail image, and thumbnail image (the master image, the screen nail image, and the thumbnail image generated from the same RAW image), and supplies to the medium control unit 44. The HEIF file is a file conforming to high efficiency image file format (HEIF), and the JPEG file is a file conforming to joint photographic experts group (JPEG).

The medium control unit 44 records the RAW file and the HEIF file or the JPEG file from the file control unit 43 on the medium 14, or causes the RAW file and the HEIF file or the JPEG file to be transmitted from the interface 15 or 16.

In the file control unit 43, which one of the HEIF file and the JPEG file is to be generated can be selected, for example, in accordance with a user's operation. Furthermore, while the HEIF file includes an image item format and an image sequence format as described later, for example, which one of the image item format and the image sequence format is to be adopted can be selected in accordance with a user's operation. Moreover, the file control unit 43 can perform mutual conversion between the HEIF file and the JPEG file in accordance with a user's operation.

Moreover, in generating the HEIF file, the file control unit 43 can associate internal data (data stored in the HEIF file), which is in the HEIF file and is to be associated with external data (data not stored in the HEIF file) outside the HEIF file, with specification information specifying the external data, and store into the HEIF file. The HEIF file in which the internal data and the specification information of the external data to be associated with the internal data are stored in association with each other is also referred to as an association-type HEIF file. The association-type HEIF file can store the internal data and the specification information in association with each other, for example, by storing association information associating the internal data and the specification information, or the like.

### <JPEG File>

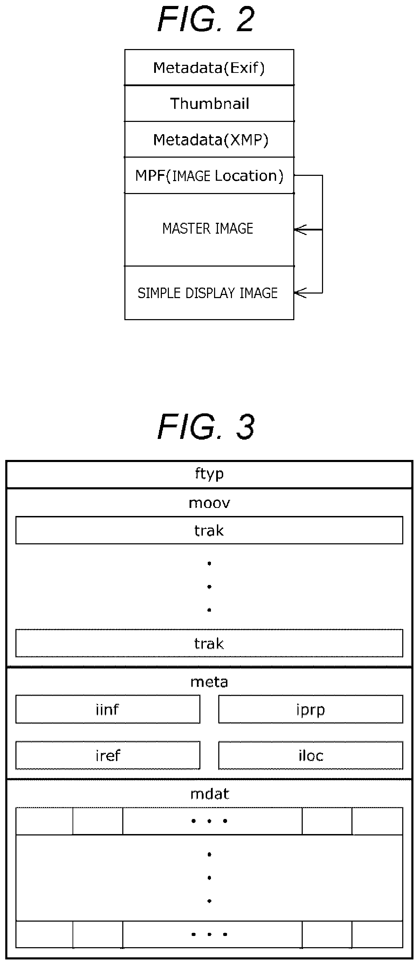

Fig. 2 is a view illustrating an example of a format of a joint photographic experts group (JPEG) file conforming to JPEG.

The JPEG file is configured by storing, for example, Exif metadata, a thumbnail image, and extensible metadata platform (XMP) (registered trademark) metadata, MPF representing storage locations (positions) and the like of a master image and a simple display image, the master image, and the simple display image. As the simple display image, for example, the screen nail image can be adopted.

### <ISO base media file format>

Fig. 3 is a view illustrating an example of an ISO base media file format.

HEIF (ISO/IEC 23008-12) is a file format conforming to the ISO base media file format (ISO/IEC 14496-12), and therefore, the HEIF file is conforming to the ISO base media file format.

The ISO base media file format is formed with units called boxes as containers to store data, and has a structure called a box structure.

The box includes a type (box type), actual data (data), and the like. The type represents a type of actual data in the box. As the actual data, it is possible to adopt reproducible media data such as an image (a still image or a moving image), audio, and subtitles, an attribute name (field name) and an attribute value (field value) of (a variable represented by) the attribute name, and other various other data.

Moreover, a box can be adopted as the actual data. That is, the box can have a box as the actual data, which enables a hierarchical structure.

The base media file conforming to the ISO base media file format can have an ftyp box, a moov box (MovieBox), a meta box (MetaBox), an mdat box (MediaDataBox), and the like. The ftyp box stores identification information for identifying a file format. The moov box can store a trak box and the like. The meta box can store an iinf box, an iprp box, an iref box, an iloc box, and the like. The mdat box can store media data (AV data) and any other data.

The HEIF conforms to the ISO base media file format as described above.

### <HEIF File>

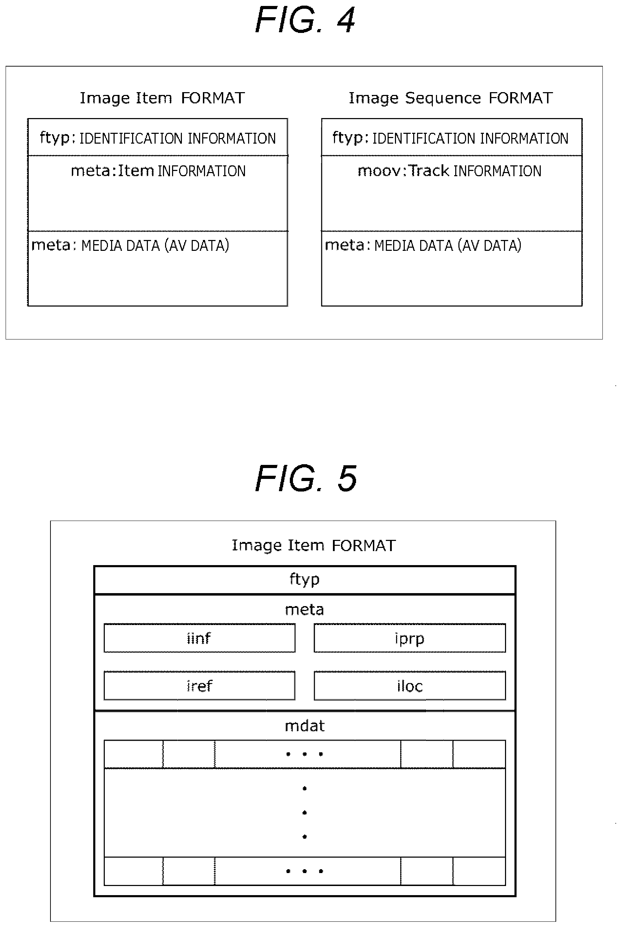

Fig. 4 is a view illustrating an example of a format of a HEIF file conforming to HEIF.

The HEIF file is roughly divided into the image item format and the image sequence format. Moreover, the image item format includes a single image format having only one item to be described later and an image collection format having a plurality of items.

The HEIF file in the image item format has an ftyp box, a meta box, and an mdat box.

The HEIF file in the image sequence format has an ftyp box, a moov box, and an mdat box.

Note that the HEIF file can also have both the meta box and the moov box, rather than having only one of them.

The ftyp box stores identification information for identifying a file format, for example, such as the fact that the file is a HEIF file in the image item format or the image sequence format.

The meta box and the moov box store metadata necessary for reproduction, management, and the like of the media data stored in the mdat box, for example, metadata such as a storage location of the media data.

The mdat box stores media data (AV data) and the like.

In the digital camera 10, which HEIF file of the HEIF files in the image item format and the image sequence format is to be generated can be selected in accordance with a user's operation, for example. Furthermore, in a case where an image is encoded and stored in the mdat box of the HEIF file, only intra coding is allowed for the image item format, and intra coding and inter coding are allowed for the image sequence format. Therefore, for example, in a case where priority is given to high-speed access to data stored in the HEIF file, generation of the HEIF file in the image item format can be selected. Whereas, in a case where priority is given to reducing a size (data amount) of the HEIF file, generation of the HEIF file in the image sequence format can be selected.

Fig. 5 is a view illustrating an example of a format of a HEIF file in the image item format.

The HEIF file in the image item format stores information indicating that the HEIF file is in the image item format, for example, mif1 or the like (as an attribute value), in the ftyp box.

The meta box stores an iinf box, an iref box, an iprp box, and an iloc box.

The iinf box stores (an attribute name and an attribute value representing) the number of items that are media data (AV data) stored in the mdat box, and the like. The item is one data stored in the mdat box of the HEIF file in the image item format, and for example, one image (screen) is the item. In the present specification, one image is also referred to as a frame regardless of a still image and a moving image. One frame is one item.

The iref box stores information indicating a relationship between items. For example, in the mdat box, each of the corresponding master image, screen nail image, and thumbnail image can be stored as an item. In a case where the mdat box stores an item I1 as the master image, an item I2 as the screen nail image, and an item I3 as the thumbnail image, the iref box stores information indicating that the item I2 is the screen nail image of the master image as the item I1 and information indicating that the item I3 is the thumbnail image of the master image as the item I1.

The iprp box stores information regarding a property of an item.

The iloc box stores information regarding a storage location of an item stored in the mdat box.

The mdat box (of the HEIF file) in the image item format stores, for example, a frame of an image as an item. In the mdat box, one or more items can be stored. Furthermore, a frame as an item can be encoded and stored in the mdat box. However, the encoding of the frame as an item stored in the mdat box in the image item format is limited to intra encoding. As an encoding method (codec) for encoding a frame as an item, for example, HEVC or the like can be adopted.

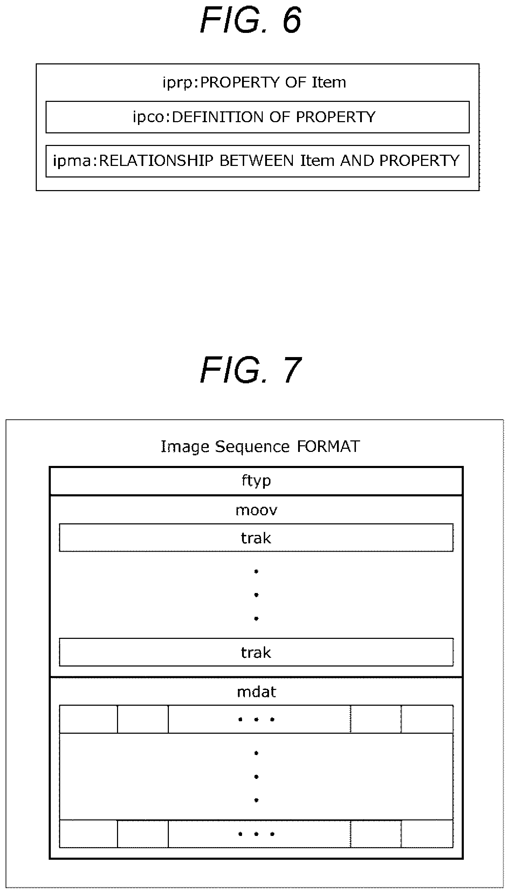

Fig. 6 is a view illustrating an example of the iprp box of Fig. 5.

The iprp box stores an ipco box and an ipma box related to a property of an item. The ipco box stores a property of an item stored in the mdat box, for example, codec information regarding a codec of an image as the item and image size information regarding a size. The ipma box stores an index (pointer) of an item stored in the mdat box to the property stored in the ipco box.

Fig. 7 is a view illustrating an example of a format of a HEIF file in the image sequence format.

The HEIF file in the image sequence format stores information indicating that the HEIF file is in the image sequence format, for example, msf1 or the like, in the ftyp box.

The moov box stores a trak box. The trak box stores information regarding a track stored in the mdat box.

The track includes one independent piece of media data, such as an image or audio, to be reproduced in accordance with a timeline. For example, the track includes an image of one or more frames that are to be an elementary stream. For the track stored in the mdat box, a plurality of tracks, for example, individual tracks of an image and audio recorded at the same time can be reproduced at the same time.

The media data of the track is formed in units called samples. The sample is a minimum unit (access unit) in a case where the media data in the HEIF file is accessed. Therefore, the media data in the HEIF file cannot be accessed in units finer than the samples.

For image media data, for example, one frame or the like is one sample. Furthermore, for audio media data, for example, one audio frame or the like defined in the standard of the audio media data is one sample.

In the mdat box (of the HEIF file) in the image sequence format, the media data of the track is arranged in units called chunks. The chunk is a set of one or more samples arranged at logically continuous addresses.

In a case where a plurality of tracks as media data is stored in the mdat box, the plurality of tracks is interleaved and arranged in units of chunks.

As described above, in the mdat box in the image sequence format, one or more tracks including media data such as an image and audio are stored.

In the mdat box, frames of images constituting a track can be encoded and stored. For the encoding of the frames constituting the track stored in the mdat box in the image sequence format, a long group of picture (GOP) can be adopted as a GOP, and either of intra encoding and inter encoding can be adopted. As a codec to encode the frames constituting the track, for example, HEVC or the like can be adopted.

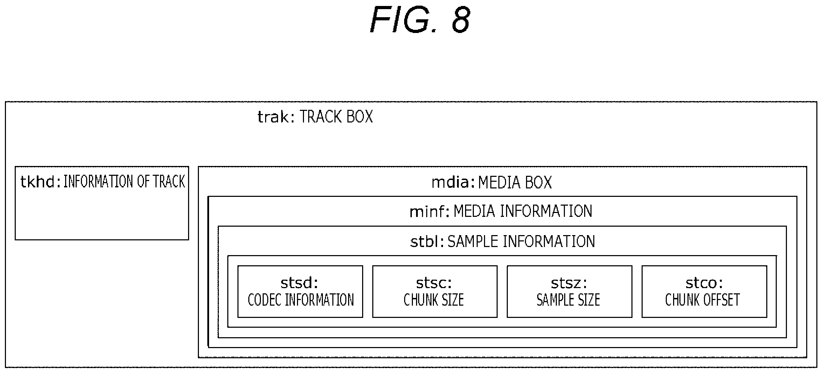

Fig. 8 is a view illustrating an example of a trak box.

The trak box can store a tkhd box and an mdia box. The tkhd box stores header information of a track, such as creation date and time of a track managed by the trak box. The mdia box stores an minf box and the like. The minf box stores an stbl box. The stbl box stores an stsd box, an stsc box, an stsz box, and an stco box that store a sample of a track and, consequently, information for accessing a chunk. The stsd box stores codec information regarding a codec of a track. The stsc box stores a chunk size (the number of samples of one chunk). The stsz box stores a sample size. The stco box stores a chunk offset, that is, an offset of an arrangement position of each chunk of a track stored in the mdat box.

Here, the HEIF file in the image item format is also referred to as a collection file, and the HEIF file in the image sequence format is also referred to as a sequence file. Moreover, the association-type HEIF file in the image item format is also referred to as an association-type collection file, and the association-type HEIF file in the image sequence format is also referred to as an association-type sequence file.

In the digital camera 10, it is possible to generate the HEIF file (including the association-type HEIF file) that stores a master image, and further stores one or both of a necessary screen nail image and thumbnail image.

### <Collection file>

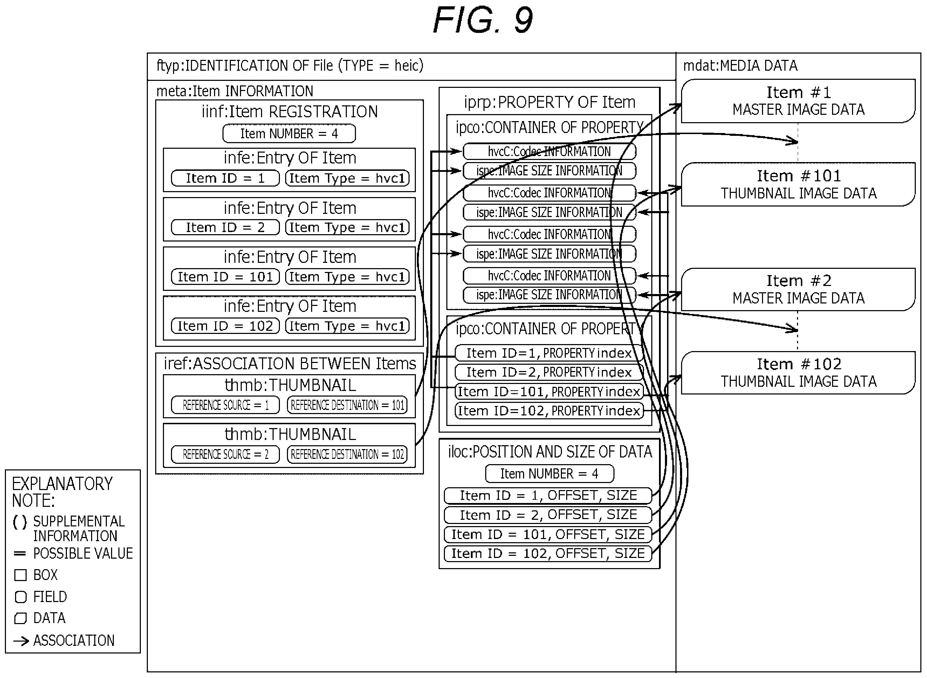

Fig. 9 is a view illustrating an example of a normal collection file in which a master image and a thumbnail image are stored.

Here, the normal collection file means a collection file in which internal data in the collection file is not associated with specification information of external data.

Now, it is assumed that a frame (item) is encoded by HEVC and stored in the mdat box of the collection file.

The ftyp box stores, as identification information for identifying a file format, heic indicating that the format is the image item format and that the codec is HEVC.

The iinf box stores the number (item number) of items stored in the mdat box. In Fig. 9, the mdat box stores a total of four items (frames) of: a master image (hereinafter, also described as a master image Item #1) specified by an item ID #1; a master image Item #2; a thumbnail image (hereinafter, also described as a thumbnail image Item #101) specified by an item ID #101; and a thumbnail image Item #102. Therefore, the number of items is 4. Note that the thumbnail image Item #101 is a thumbnail image of the master image Item #1, and the thumbnail image Item #102 is a thumbnail image of the master image Item #2.

Moreover, the iinf box further stores, for example, an infe box for every item stored in the mdat box. In the infe box, an item ID for specifying the item and an item type are registered. In Fig. 9, there is the infe box of each of the master images Item #1 and Item #2 and the thumbnail images Item #101 and Item #102.

The iref box stores, for example, a thmb box as information for associating items stored in the mdat box. In the thmb box, a reference source and a reference destination as information for associating a master image with a thumbnail image of the master image are correlated with each other and stored. In the thmb box, the reference source represents an item ID of the master image, and the reference destination represents an item ID of the thumbnail image of the master image specified by the item ID of the reference source. Therefore, according to the reference destination correlated with the reference source, the item ID of the thumbnail image of the master image specified by the item ID represented by the reference source can be recognized. Furthermore, according to the reference source correlated with the reference destination, the item ID of the master image of the thumbnail image specified by the item ID represented by the reference destination can be recognized.

As described in Fig. 6, the ipco box and the ipma box are stored in the iprp box. The ipco box stores, as described in Fig. 6, a property of a frame as an item stored in the mdat box, for example, codec information regarding a codec and image size information regarding a size. As described in Fig. 6, the ipma box stores an index of the item stored in the mdat box to the property stored in the ipco box.

The iloc box stores, as described in Fig. 6, information regarding a storage location of an item in the mdat box. In Fig. 9, the iloc box stores that the number of items is 4. Moreover, in the iloc box, an offset to each storage location and a size of the master images Item #1 and Item #2 and the thumbnail images Item #101 and Item #102 stored in the mdat box are stored in correlation with an item ID.

Hereinafter, an association-type collection file in which internal data and specification information of external data are stored in association with each other in the normal collection file of Fig. 9 will be described.

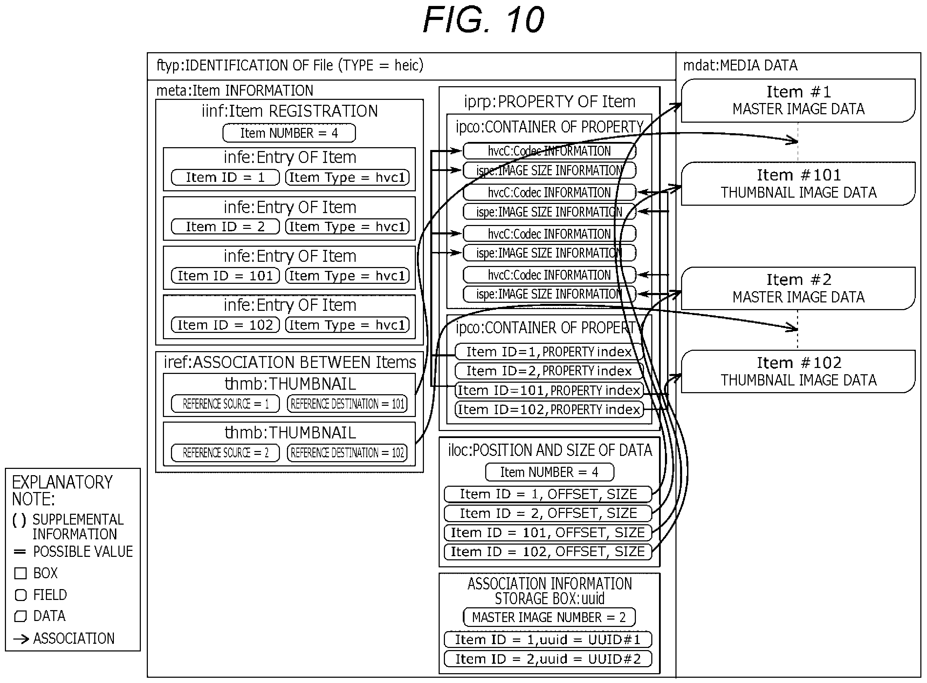

Fig. 10 is a view illustrating an example of a first association-type collection file.

Here, it is assumed that, as external data to be associated with a master image as internal data in the HEIF file, for example, (a RAW file that stores) a RAW image of the master image is adopted.

In the first association-type collection file, the master image and specification information of the RAW file storing the RAW image are stored in association with each other, by storing association information associating the master image as the internal data with the specification information of (the RAW image stores in) the RAW file storing the RAW image as the external data. Moreover, in the first association-type collection file, the association information is stored in the meta box.

As the specification information of the RAW file storing the RAW image as the external data, it is possible to adopt any information that can specify (the RAW image stored in) the RAW file, in addition to a file name of the RAW file, a universally unique identifier (uuid) issued for the RAW file, and a uniform resource locator (URL).

For the first association-type collection file, as a new box to be stored in the meta box, an association information storage box storing association information is defined and stored in the meta box. The association information storage box of the first association-type collection file stores association information in which, for example, an item ID for specifying a master image is correlated with a uuid as specification information specifying (the RAW image stored in) the RAW file (that stores the RAW image) to be associated with the master image. Moreover, the association information storage box stores the number of master images (master image number) to be associated with (the RAW image stored in) the RAW file. The master image number stored in the association information storage box is the number of master images to be associated with the RAW file, and thus is to be a value equal to or less than the number of master images stored in the mdat box.

In Fig. 10, a uuid of the RAW file of the master image Item #1 (a uuid of the RAW image associated with the master image Item #1) is a UUID #1, and a uuid of the RAW file of the master image Item #2 is a UUID #2. Now, assuming that a RAW file whose uuid is a UUID #i is described as a RAW file UUID #i, in Fig. 10, the association information storage box stores association information in which the item ID #1 of the master image Item #1 is correlated with the uuid of the RAW file UUID #1, and an item ID #2 of the master image Item #2 is correlated with the uuid of the RAW file UUID #2.

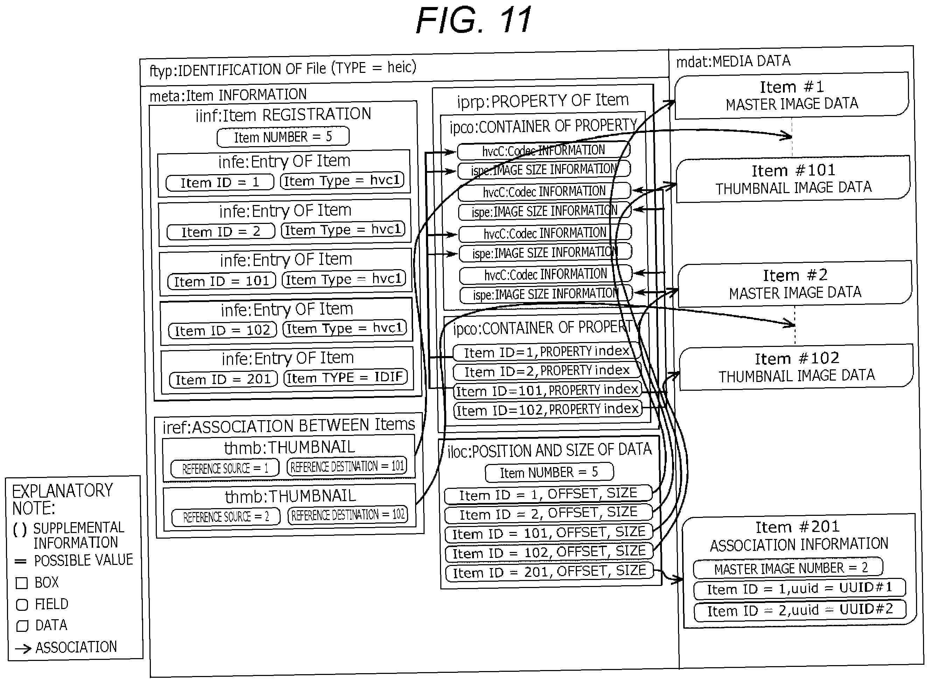

Fig. 11 is a view illustrating an example of a second association-type collection file.

In the second association-type collection file, similarly to the first association collection file, a master image and specification information of a RAW file are stored in association with each other, by storing association information associating the master image as internal data with specification information of the RAW file as external data. However, in the second association-type collection file, the association information is stored in the mdat box.

For the second association-type collection file, for example, association information similar to a case of the first association collection file is stored as an item in the mdat box. In Fig. 11, the association information is stored in the mdat box as an item with an item ID #201.

As described above, in the second association-type collection file, information to be stored in the meta box in response to the storage of the association information as an item Item #201 in the mdat box is different from that in a case of the normal collection file in Fig. 9. In the second association-type collection file, metadata of the association information as the item Item #201 is stored in the meta box.

Specifically, in the second association-type collection file, the number of items stored in the iinf box and the iloc box is 5, which is obtained from 4 in the case of Fig. 9 by adding 1 of the item Item #201 to 4. Moreover, an infe box for the item Item #201 is added to the iinf box, and an offset to a storage location and a size of the item Item #201 are added to the iloc box. The infe box for the item Item #201 stores the item ID #201 of the item Item #201 and an item type identifying data info (IDIF) indicating that the item Item #201 is association information. The IDIF is a newly defined attribute value (field value) indicating that the item is the association information.

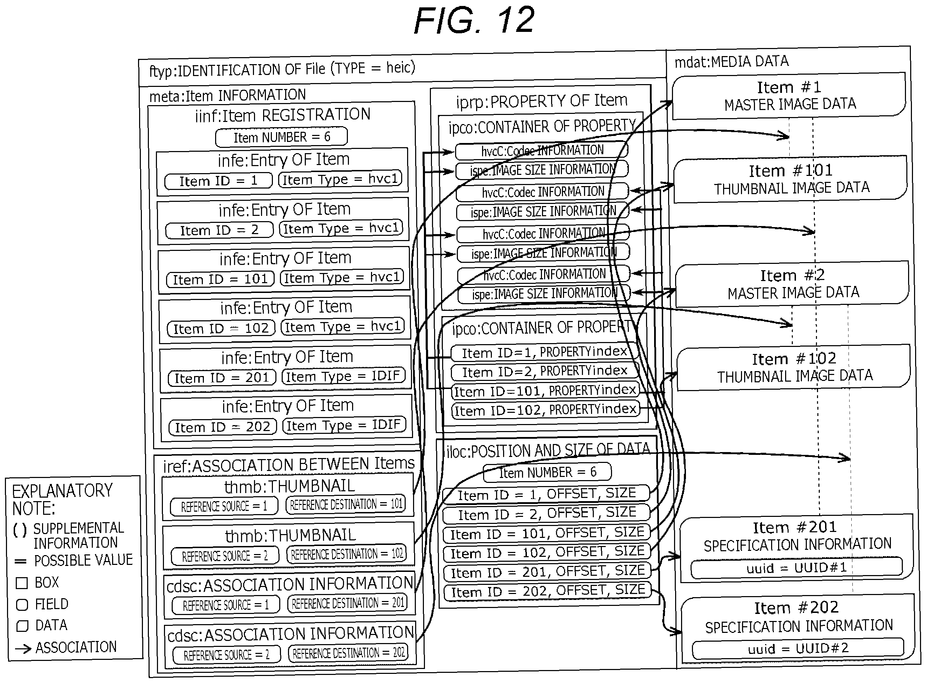

Fig. 12 is a view illustrating an example of a third association-type collection file.

In the third association-type collection file, a master image and specification information of a RAW file are stored in association with each other, by storing the specification information of the RAW file as external data into the mdat box as an item for every piece of the specification information, and storing, into a meta box, association information associating the master image as the internal data with the specification information of the RAW file as the external data. However, in the third association-type collection file, the association information is information in which an item ID of the master image as an item is correlated with an item ID of the specification information (of the RAW file) as an item, and is stored in the cdsc box stored in the iref box in the meta box.

The cdsc box can store a reference source and a reference destination as information for associating the master image with items as individual pieces of the specification information in the RAW file of the master image in correlation with each other. In the cdsc box, the reference source represents the item ID of the master image, and the reference destination represents the item ID of the specification information as an item of the RAW file of the master image specified by the item ID of the reference source.

In Fig. 12, the UUID #1 that is the uuid as the specification information of the RAW file of the master image Item #1 is stored in the mdat box as the item Item #201, and the UUID #2 that is the uuid as specification information of the RAW file of the master image Item #2 is stored as an item Item #202 in the mdat box. Moreover, the iref box stores a cdsc box storing association information in which the item ID #1 of the master image Item #1 and the item ID #201 of the specification information UUID #1 are correlated with each other respectively as the reference source and the reference destination, and the iref box stores a cdsc box storing association information in which the item ID #2 of the master image Item #2 and the item ID #202 of the specification information UUID #2 are correlated with each other respectively as the reference source and the reference destination.

### <Sequence file>

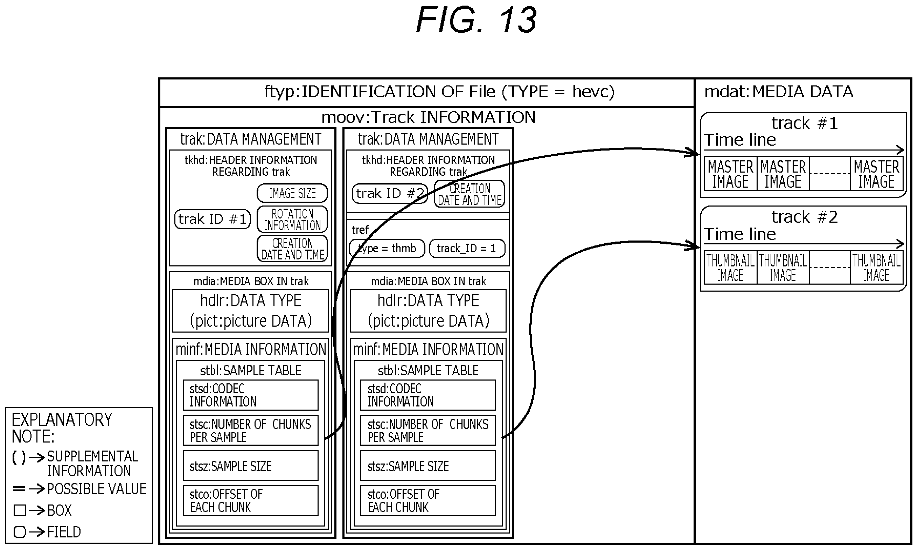

Fig. 13 is a view illustrating an example of a normal sequence file in which a track of a master image and a track of a thumbnail image of the master image are stored.

Here, the normal sequence means a sequence file in which internal data in the sequence file is not associated with specification information of external data.

Now, it is assumed that a frame is encoded by HEVC and stored in the mdat box of the sequence file.

The ftyp box stores, as identification information for identifying a file format, hevc indicating that the format is the image sequence format and that the codec is HEVC.

The moov box stores, as described in Fig. 7, the trak box that manages each track stored in the mdat box. In Fig. 13, the mdat box stores a track (hereinafter, also described as a track #1) of a master image specified by the track ID #1 and a track #2 of a thumbnail image of the master image specified by the track #1. Therefore, in the moov box, the trak box that manages the track #1 and the trak box that manages the track #2 are stored. (A frame of) an n-th thumbnail image (from the head) of the track #2 is a thumbnail image of an n-th master image of the track #1.

For example, in a case where continuous shooting is performed by the digital camera 10, the sequence file is useful in a case where master images and thumbnail images of a plurality of frames obtained by the continuous shooting are recorded as one track, or the like.

The tkhd box of the trak box that manages the track #1 of the master image stores: a track ID #1 specifying the track #1; an image size of a master image constituting the track #1; rotation information indicating an orientation of the digital camera 10 when the master image is captured; and a creation date and time of the track #1. In the tkhd box of the trak box that manages the track #2 of the thumbnail image, the track ID #2 specifying the track #2 and the creation date and time of the track #2 are stored.

In the trak box, in addition to the tkhd box and the mdia box described in Fig. 7, a tref box can be stored. The tref box stores a track ID for specifying another track related to a track managed by the trak box in which the tref box is stored, information indicating contents of the track, and the like. In Fig. 13, the tref box is provided in the trak box that manages the track #2. Then, the tref box stores information indicating that another track related to the track #2 is the track #1 (track_ID = 1), and that data constituting the track #2 is a thumbnail image (the track #2 is a track of a thumbnail image) (type = thmb).

In the mdia box of the trak box, in addition to the minf box described in Fig. 8, an hdlr box can be stored. The hdlr box stores information indicating a type of data constituting a track managed by the trak box in which the hdlr box is stored. In the hdlr box stored (in the mdia box stored) in the trak box that manages the track #1 of the master image, information (pict) indicating that data constituting the track #1 is a picture (frame) is stored. In the hdlr box stored in the trak box that manages the track #2 of the thumbnail image, information indicating that data constituting the track #2 is a picture is stored.

The minf box is as described in Fig. 8.

Hereinafter, an association-type sequence file in which internal data and specification information of external data are stored in association with each other in the normal sequence file of Fig. 13 will be described.

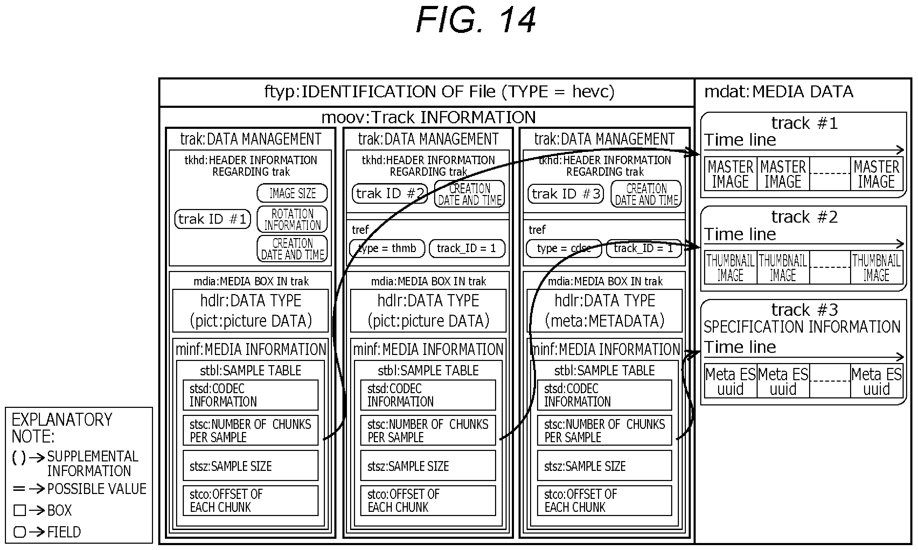

Fig. 14 is a view illustrating an example of an association-type sequence file.

In the association-type sequence file, a track #3 of a (elementary) stream (Meta ES) of a uuid as specification information of a RAW file as external data is added to the mdat box, and a trak box that manages the track #3 is added to the moov box.

Here, the track #1 is a time series of one or more frames of the master image aligned on a timeline, and the track #3 is a time series of a uuid of a RAW file of each frame of the master image aligned on the timeline.

An n-th uuid (from the head) of the track #3 is specification information of a RAW file of a frame of an n-th master image of the track #1. Furthermore, (data of) a plurality of tracks stored in the mdat box can be synchronously reproduced in accordance with time information on one timeline. Therefore, by storing, into the mdat box, the track #1 of the master image and the track #3 of (a stream of) the uuid of the RAW file of each frame of the master image constituting the track #1, the frame of the n-th master image of the track #1 and the uuid of the RAW file of (the frame of) the master image are stored in association with each other. In this case, it can be said that the frame of the master image of the track #1 and the uuid of the RAW file of (the frame of) the master image are associated with each other by the time information on the timeline.

Note that the n-th uuid (from the head) of the track #3 is specification information of the RAW file of the n-th frame of the track #1, and it can also be understood that (the frame of) the master image constituting the track #1 and the uuid constituting the track #3 are associated with each other in accordance with the order of arrangement in the track.

In the association-type sequence file, in response to the addition of the track #3 of the uuid of the RAW file to the mdat box, a trak box that manages the track #3 is added to the moov box.

In the trak box that manages the track #3 of the uuid of the RAW file, a tkhd box, a tref box, an mdia box, and the like are stored.

In the tkhd box of the trak box that manages the track #3, the track ID #3 specifying the track #3 and a creation date and time of the track #3 are stored.

The tref box of the trak box that manages the track #3 stores a track ID for specifying another track related to the track #3 managed by the trak box in which the tref box is stored, and information or the like indicating contents of the track #3. The uuid constituting the track #3 is specification information of the RAW file of the master image constituting the track #1. Since the track #3 is related to the track #1, the tref box of the trak box to manage the track #3 in Fig. 14 stores information indicating that another track related to the track #3 is the track #1 (track_ID = 1) and that the track #3 is a track of metadata (here, specification information) (type = cdsc).

In the mdia box of the trak box that manages the track #3, an hdlr box and a minf box are stored. In the trak box that manages the track #3, the hdlr box stores information indicating that data constituting the track #3 is metadata (of the master image), and the minf box stores an stsc box, an stsc box, an stsz box, and an stco box for the track #3.

### <Generation and reproduction of HEIF file>

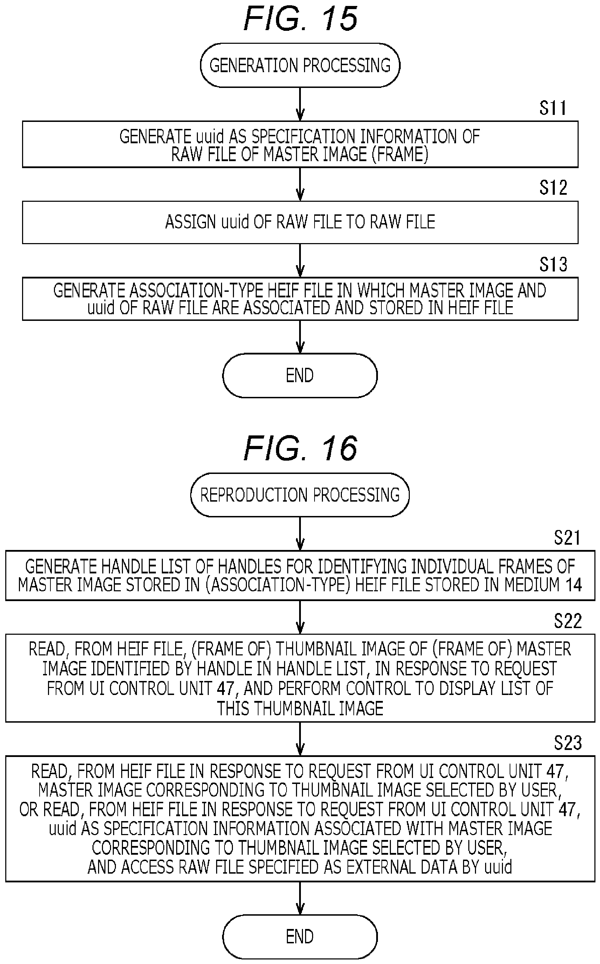

Fig. 15 is a flowchart for explaining an outline of an example of generation processing of generating an association-type HEIF file.

In the generation processing, in step S11, the file control unit 43 generates a uuid as specification information of a RAW file (RAW image) of a frame of a master image, and the process proceeds to step S12.

In step S12, the file control unit 43 assigns the uuid generated in step S11 to the RAW file (RAW image) of the frame of the master image, and the process proceeds to step S13.

In step S13, the file control unit 43 generates an association-type HEIF file in which the frame of the master image and the uuid of the RAW file of the frame are stored in association with each other in the HEIF file, and the generation processing ends.

Fig. 16 is a flowchart for explaining an outline of an example of reproduction processing of reproducing an association-type HEIF file.

In the reproduction processing, in step S21, the file control unit 43 generates, for example, a handle list of handles for identifying individual frames of the master image stored in the HEIF file stored in the medium 14, and the process proceeds to step S22.

Here, the handle of the frame of the master image includes a file name of the HEIF file in which the frame is stored. Moreover, the handle of the frame (item) of the master image stored in the collection file further includes an item ID of the frame. Moreover, the handle of the frame of the master image stored in the sequence file further includes time information of the frame. According to the handle of the frame of the master image, the frame for the handle can be uniquely identified (specified) .

Note that, the handle of the frame of the master image stored in the sequence file can include, instead of the time information of the frame, a track ID of a track including the frame and the order (what number the frame is) of the frame in the track.

Regardless of whether one or a plurality of tracks including the frame of the master image is stored in the sequence file, time information of each frame is unique. Therefore, according to the time information of the frame, even if a plurality of tracks is stored in the sequence file, the frame of the time information included in the handle can be uniquely specified from the frame constituting each of the plurality of tracks. Therefore, in a case where the time information of the frame is included in the handle of the frame of the master image, the frame corresponding to the time information can be uniquely specified even if there is no track ID of the track in which the frame exists.

The handle list can be generated for all the frames of the master image stored in the HEIF file stored in the medium 14, or can also be generated only for a frame narrowed down under a specific condition, such as a frame of a specific creation date and time.

After generating the handle list, the file control unit 43 accesses the HEIF file with reference to the handle list, as necessary.

In step S22, for example, after waiting for an operation and the like by the user on the digital camera 10 to display a thumbnail image, the UI control unit 47 requests the file control unit 43 to display the thumbnail image. In response to the request for display of the thumbnail image from the UI control unit 47, the file control unit 43 reads, from the HEIF file, (the frame of) the thumbnail image of the frame of the master image identified by the handle of the handle list. Then, the file control unit 43 causes, for example, the liquid crystal panel 19 (Fig. 1) to display a list of thumbnail images read from the HEIF file, and the process proceeds from step S22 to step S23.

In step S23, for example, after waiting for selection or the like by the user on (a frame of) a desired thumbnail from the list of thumbnail images, the UI control unit 47 requests the file control unit 43 for transmitting a master image corresponding to the thumbnail image selected by the user. The file control unit 43 reads the master image from the HEIF file in response to the request for the master image from the UI control unit 47. The file control unit 43 can cause the liquid crystal panel 19 to display the master image read from the HEIF file, as necessary.

Alternatively, the UI control unit 47 requests the file control unit 43 for the uuid of the RAW file of the master image corresponding to the thumbnail image selected by the user. In response to the uuid request from the UI control unit 47, the file control unit 43 reads the uuid from the association-type HEIF file. The file control unit 43 can access the RAW file specified by the uuid read from the association-type HEIF file, as necessary.

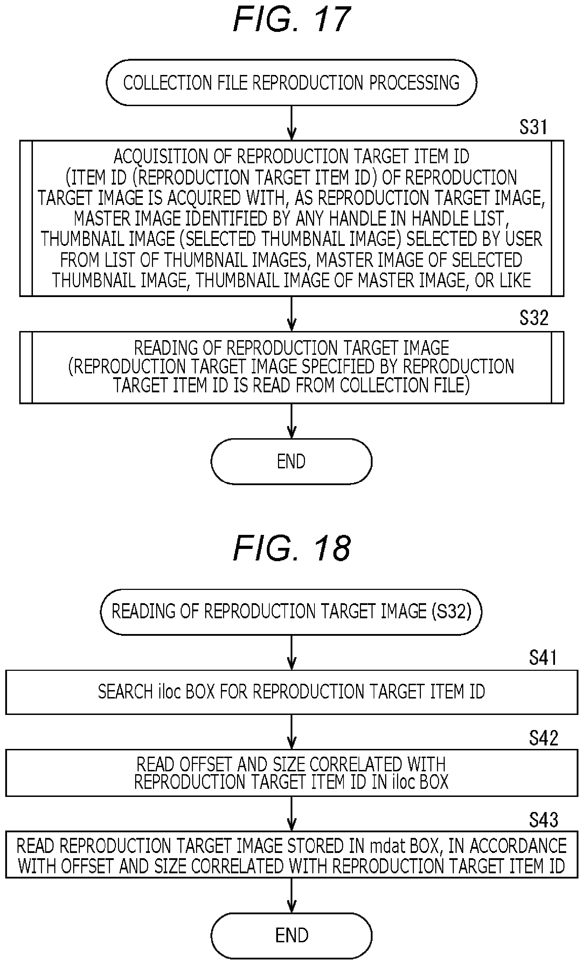

Fig. 17 is a flowchart for explaining an example of reproduction processing of reproducing a collection file.

In step S31, the file control unit 43 acquires an item ID (hereinafter, also referred to as a reproduction target item ID) of a reproduction target image, which is an image (item) to be reproduced, and the process proceeds to step S32.

In the acquisition of the reproduction target item ID, the item ID (reproduction target item ID) of the reproduction target image is acquired with, as the reproduction target image, for example, a master image identified by any handle in the handle list, a thumbnail image of the master image, a thumbnail image (hereinafter, also referred to as a selected thumbnail image) selected by the user from the list of thumbnail images, a master image of the selected thumbnail image, or the like.

In step S32, the file control unit 43 reads the reproduction target image in accordance with the reproduction target item ID acquired in step S31.

In the reading of the reproduction target image, the reproduction target image specified by the reproduction target item ID is read from the collection file.

Fig. 18 is a flowchart for explaining an example of processing of reading the reproduction target image in step S32 of Fig. 17.

In step S41, the file control unit 43 searches the iloc box of the collection file (Figs. 9 to 12) for the reproduction target item ID, and the process proceeds to step S42.

In step S42, the file control unit 43 reads an offset and a size correlated with the reproduction target item ID searched for in step S41 in the iloc box, and the process proceeds to step S43.

In step S43, the file control unit 43 reads the reproduction target image stored in the mdat box of the collection file in accordance with the offset and the size correlated with the reproduction target item ID, and the process ends.

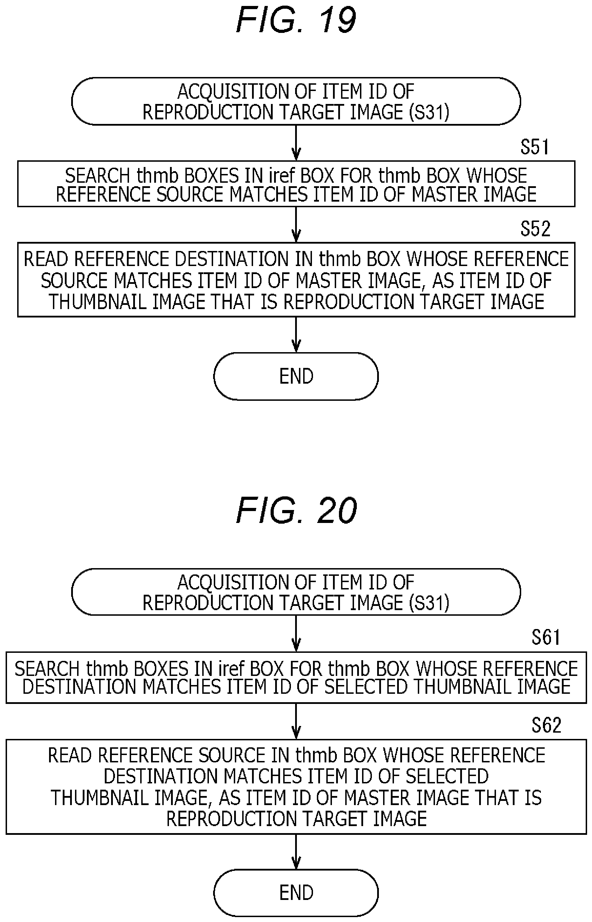

Fig. 19 is a flowchart for explaining a first example of processing of acquiring the reproduction target item ID in step S31 in Fig. 17.

That is, Fig. 19 illustrates an example of acquiring an item ID of a thumbnail image that is the reproduction target image, with the thumbnail image as the reproduction target image.

Note that, in Fig. 19, it is assumed that the file control unit 43 has recognized an item ID of a master image of the thumbnail image as the reproduction target image, for example, from the handle.

In step S51, the file control unit 43 searches the thmb boxes in the iref box of the collection file (Figs. 9 to 12) for a thmb box whose reference source matches the item ID of the master image, and the process proceeds to step S52.

In step S52, as the item ID of the thumbnail image as the reproduction target image, the file control unit 43 reads the reference destination in the thmb box searched for in step S51 and has the reference source matching the item ID of the master image, and the process ends.

Fig. 20 is a flowchart for explaining a second example of the processing of acquiring the reproduction target item ID in step S31 in Fig. 17.

That is, Fig. 20 illustrates an example of acquiring an item ID of a master image that is the reproduction target image, with the master image as the reproduction target image.

Note that, in Fig. 20, for example, it is assumed that the user has selected a thumbnail image (selected thumbnail image) from the list of thumbnail images, and the file control unit 43 has recognized the item ID of the selected thumbnail image.

In step S61, the file control unit 43 searches the thmb boxes in the iref box of the collection file (Figs. 9 to 12) for a thmb box whose reference destination matches the item ID of the selected thumbnail image, and the process proceeds to step S62.

In step S62, as the item ID of the master image as the reproduction target image, the file control unit 43 reads a reference source in the thmb box searched for in step S61 and has the reference destination matching the item ID of the selected thumbnail image, and the process ends.

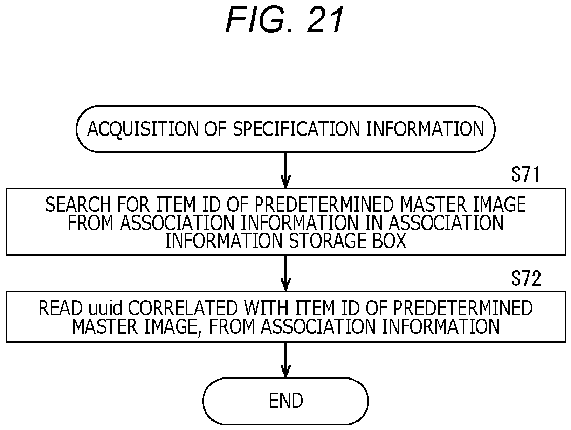

Fig. 21 is a flowchart for explaining an example of processing of acquiring a uuid as specification information of a RAW file of a predetermined master image from the first association-type collection file in Fig. 10.

Note that, in Fig. 21, for example, it is assumed that the file control unit 43 has recognized the item ID of a predetermined master image by a handle list or the like.

In step S71, the file control unit 43 searches for the item ID of the predetermined master image from association information in the association information storage box of the first association-type collection file (Fig. 10), and the process proceeds to step S72.

In step S72, the file control unit 43 reads a uuid correlated with the item ID of the predetermined master image searched for in step S71 in the association information, and the process ends.

The file control unit 43 can access the RAW file of the predetermined master image by the uuid read as described above.

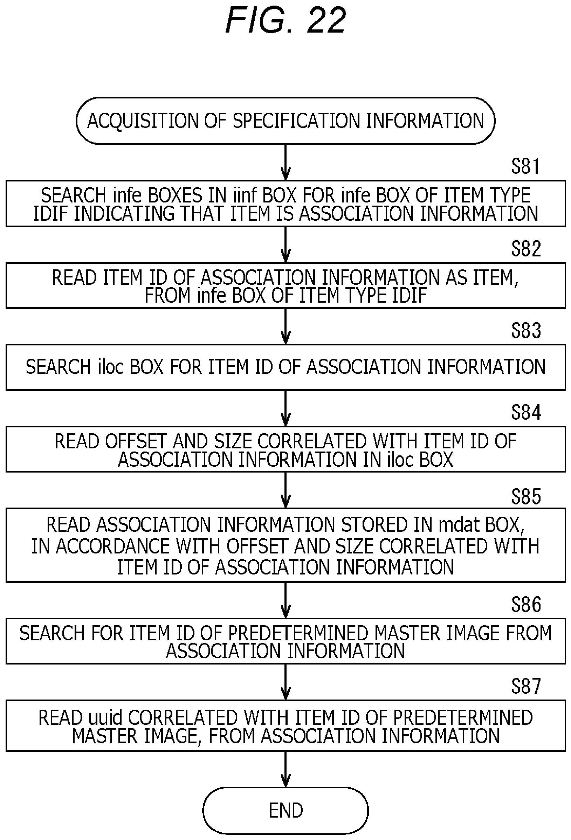

Fig. 22 is a flowchart for explaining an example of processing of acquiring a uuid as specification information of a RAW file of a predetermined master image from the second association-type collection file in Fig. 11.

Note that, in Fig. 22, for example, it is assumed that the file control unit 43 has recognized the item ID of the predetermined master image by a handle list or the like.

In step S81, the file control unit 43 searches the infe boxes in the iinf box of the second association-type collection file (Fig. 11) for an infe box of an item type IDIF indicating that the item is the association information, and the process proceeds to step S82.

In step S82, the file control unit 43 reads the item ID of the association information as an item from the infe box of the item type IDIF searched for in step S81, and the process proceeds to step S83.

In step S83, the file control unit 43 searches the iloc box of the second association-type collection file for the item ID of the association information read in step S82, and the process proceeds to step S84.

In step S84, the file control unit 43 reads an offset and a size correlated with the item ID of the association information searched for in step S83 in the iloc box, and the process proceeds to step S85.

In step S85, in accordance with the offset and the size correlated with the item ID of the association information read in step S84, the file control unit 43 reads the association information as an item stored in the mdat box of the second association-type collection file, and the process proceeds to step S86.

In step S86, the file control unit 43 searches for the item ID of the predetermined master image from the association information read in step S85, and the process proceeds to step S87.

In step S87, the file control unit 43 reads the uuid correlated with the item ID of the predetermined master image searched for in step S86 in the association information, and the process ends.

The file control unit 43 can access the RAW file of the predetermined master image by the uuid read as described above.

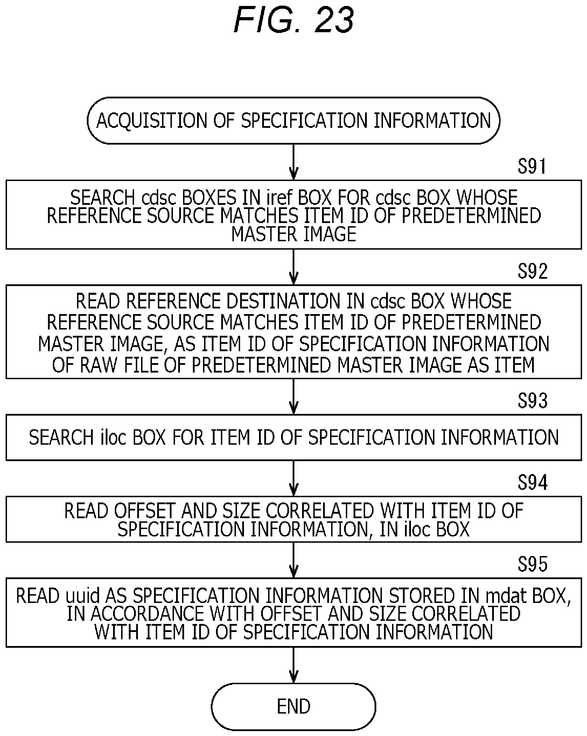

Fig. 23 is a flowchart for explaining an example of processing of acquiring a uuid as specification information of a RAW file of a predetermined master image from the third association-type collection file in Fig. 12.

Note that, in Fig. 23, for example, it is assumed that the file control unit 43 has recognized the item ID of the predetermined master image by a handle list or the like.

In step S91, the file control unit 43 searches the cdsc boxes in the iref box of the third association-type collection file (Fig. 12) for a cdsc box whose reference source matches the item ID of the predetermined master image, and the process proceeds to step S92.

In step S92, as an item ID of specification information of the RAW file of the predetermined master image as an item, the file control unit 43 reads the reference destination in the cdsc box searched for in step S91 and has the reference source matching the item ID of the predetermined master image, and the process proceeds to step S93.

In step S93, the file control unit 43 searches the iloc box of the third association-type collection file for the item ID of the specification information as an item read in step S92, and the process proceeds to step S94.

In step S94, the file control unit 43 reads an offset and a size correlated with the item ID of the specification information searched for in step S93 in the iloc box, and the process proceeds to step S95.

In step S95, in accordance with the offset and the size correlated with the item ID of the specification information read in step S94, the file control unit 43 reads a uuid as specification information of the RAW file of the predetermined master image stored in the mdat box of the third association-type collection file, and the process ends.

The file control unit 43 can access the RAW file of the predetermined master image by the uuid read as described above.

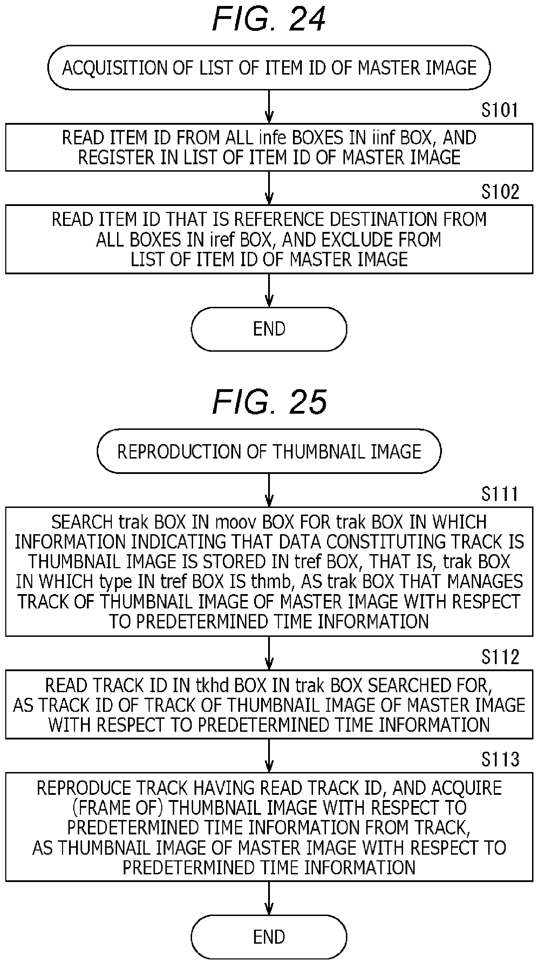

Fig. 24 is a flowchart for explaining an example of processing of acquiring a list of item IDs of a master image from a collection file.

The processing of acquiring the list of the item IDs of the master image from the collection file is performed, for example, in a case where a handle list is generated, and the like.

In step S101, the file control unit 43 reads the item IDs from all the infe boxes in the iinf box of the collection file (Figs. 9 to 12) and registers in the list of item IDs of the master image (hereinafter, also referred to as a master image list), and the process proceeds to step S102.

In step S102, the file control unit 43 reads the item ID that is a reference destination from all the boxes in the iref box of the collection file, excludes the item ID from the master image list, and the process ends.

After the above processing, the item ID registered in the master image list becomes the item ID of the master image.

Fig. 25 is a flowchart for explaining an example of processing of reproducing a thumbnail image of (a frame of) a master image with respect to predetermined time information, from a sequence file.

Note that, in Fig. 25, for example, it is assumed that the file control unit 43 has recognized time information (or order) of the predetermined master image by a handle list or the like.

In step S111, as a trak box that manages a track of a thumbnail image of a master image with respect to predetermined time information, the file control unit 43 searches the trak box in the moov box of the sequence file (Figs. 13 and 14) for a trak box in which information indicating that data constituting the track is a thumbnail image is stored in the tref box, that is, a trak box in which the type in the tref box is thmb, and the process proceeds to step S112.

In step S112, the file control unit 43 reads a track ID in the tkhd box in the trak box searched for in step S111 as the track ID of the track of the thumbnail image of the master image with respect to the predetermined time information, and the process proceeds to step S113.

In step S113, the file control unit 43 reproduces a track having the track ID read in step S112, and acquires (a frame of) a thumbnail image corresponding to predetermined time information (or order) from the track as the thumbnail image of the master image corresponding to the predetermined time information, and the process ends.

Note that the processing of reproducing the track of the image stored in the sequence file is similar to the processing of reproducing a moving image of an MP4 file.

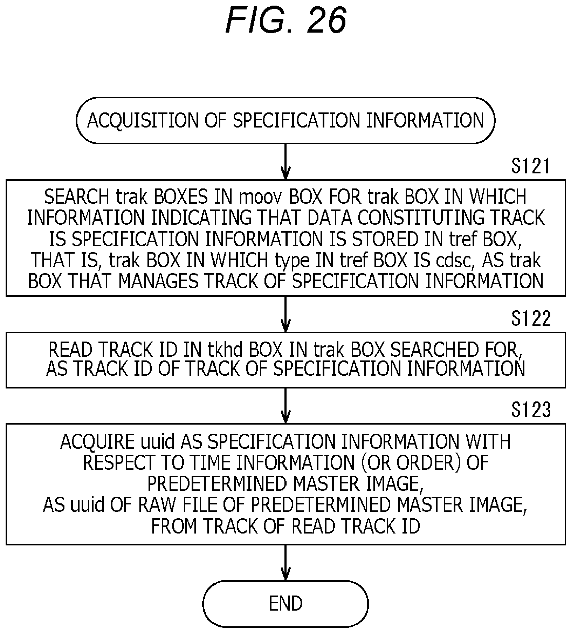

Fig. 26 is a flowchart for explaining an example of processing of acquiring a uuid as specification information of a RAW file of (a frame of) a predetermined master image, from an association-type sequence file.

Note that, in Fig. 26, for example, it is assumed that the file control unit 43 has recognized time information (or order) of the predetermined master image by a handle list or the like.

In step S121, the file control unit 43 searches the trak boxes in the moov box of the association-type sequence file (Fig. 14) for a trak box in which information indicating that data constituting a track is specification information is stored in the tref box, that is, a trak box in which a type in the tref box is cdsc, as a trak box that manages a track of specification information, and the process proceeds to step S122.

In step S122, the file control unit 43 reads the track ID in the tkhd box in the trak box searched for in step S121 as the track ID of the track of the specification information, and the process proceeds to step S123.

In step S123, from a track having the track ID read in step S122, the file control unit 43 acquires a uuid as specification information with respect to time information (or order) of the predetermined master image, as a uuid of a RAW file of the predetermined master image, and the process ends.

The file control unit 43 can access the RAW file of the predetermined master image by the uuid acquired as described above.

As described above, the file control unit 43 generates and reproduces an association-type HEIF file storing, in association with each other in a HEIF file conforming to HEIF, a master image in the HEIF file and specification information specifying external data that is outside the HEIF file and is to be associated with the master image. Therefore, the master image stored in the HEIF file can be associated with external data outside the HEIF file.

Furthermore, in a case where a uuid is used as the specification information, even if a file name of the external data is changed, association between the master image in the HEIF file and the external data with the changed file name can be maintained by the uuid.

### <Storage of specification information assigned to external data>

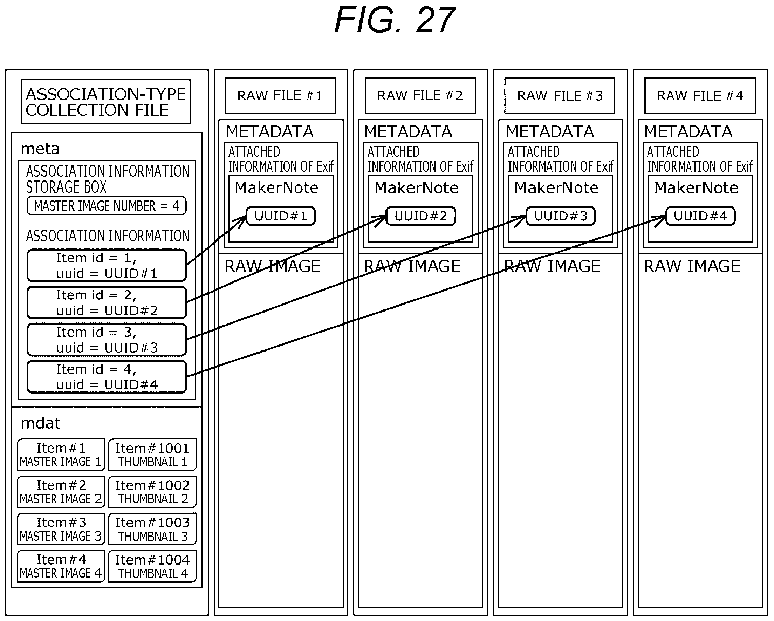

Fig. 27 is a view illustrating an example of storing a uuid into a RAW file in a case of adopting a RAW file of a master image as (a file storing) external data and generating an association-type collection file.

Note that, in Fig. 27, the first association-type collection file is adopted as the association-type collection file.

The RAW file has an area called a marker note (MakerNote) as a partial area of an area for storing attached information of Exif as metadata.

The file control unit 43 can store the uuid assigned to the RAW file (RAW image) into, for example, the marker note of the RAW file.

In Fig. 27, master images Item #1, Item #2, Item #3, and Item #4 as four items are stored in the association-type collection file, and RAW files #1, #2, #3, and #4 storing RAW images of the master images Item #1, Item #2, Item #3, and Item #4 are generated. Then, a UUID #i is assigned to a RAW file #i (RAW image), and the association information storage box stores, as association information associating the master image Item #i with the UUID #i of the RAW file #i of the master image Item #i, association information in which an item ID #i specifying the master image Item #i is correlated with the UUID #i of the RAW file #i to be associated with the master image Item #i.

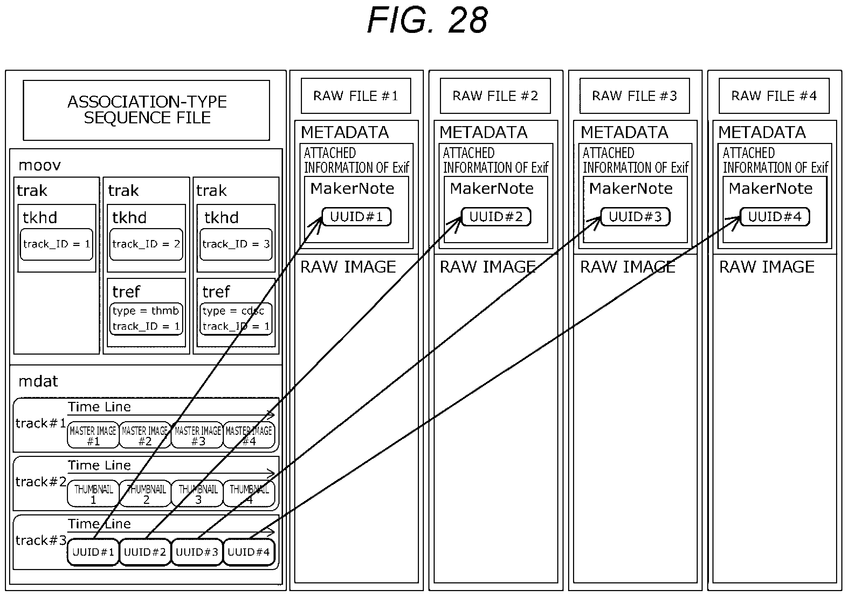

Fig. 28 is a view illustrating an example of storing a uuid into a RAW file in a case of adopting a RAW file of a master image as external data and generating an association-type sequence file.

Also in a case of generating the association-type sequence file, similarly to the case of generating the association-type collection file described in Fig. 27, the file control unit 43 can store the uuid assigned to the RAW file into the marker note of the RAW file.

In Fig. 28, a track #1 including master images #1, #2, #3, and #4 as four frames is stored in the association-type sequence file, and RAW files #1, #2, #3, and #4 storing RAW images of the master images #1, #2, #3, and #4 are generated. Then, the UUID #i is assigned to the RAW file #i, and the association-type sequence file stores the track #3 configured such that the UUID #i of the RAW file #i is arranged so as to have the same time information as a master image #i corresponding to the RAW file #i (RAW image).

As described above, when the track #3 is configured such that the UUID #i of the RAW file #i is arranged so as to have the same time information as the master image #i corresponding to the RAW file #i, the i-th master image #i of the track #1 and the i-th UUID #i of the track #3, that is, the UUID #i of the RAW file #i of the master image #i are associated and stored in the association-type sequence file.

In the above description, the RAW file (RAW image) of the master image is adopted as the external data, but other data can be adopted as the external data. As the external data, for example, audio (sound) or the like recorded together with imaging of the master image can be adopted. As a file to store audio, for example, a WAV file in a WAV format, an MP4 file in an MP4 format, or the like can be adopted. Hereinafter, for example, it is assumed that a WAV file is adopted as the file storing the audio.

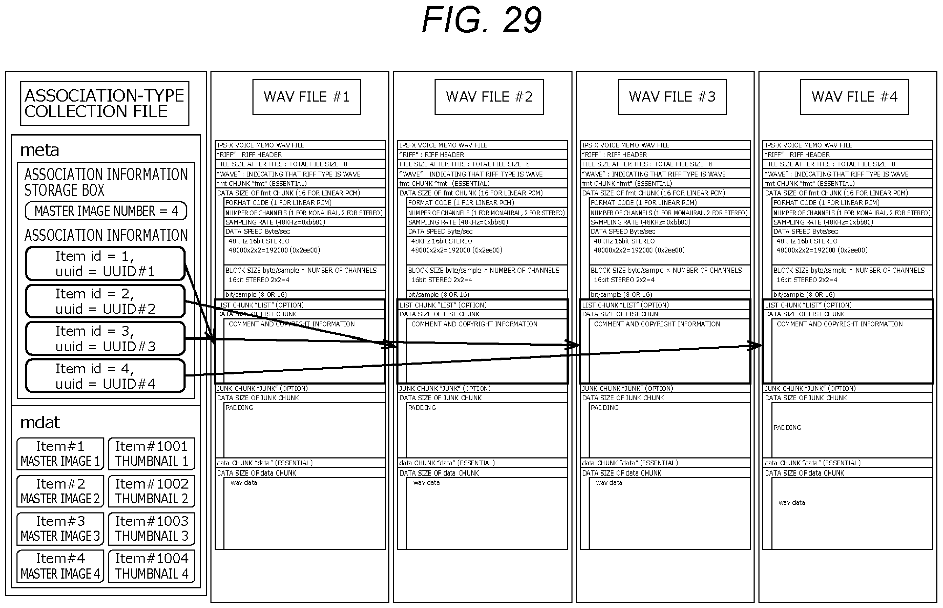

Fig. 29 is a view illustrating an example of storing a uuid into a WAV file in a case of adopting a WAV file of a master image as (a file storing) external data and generating an association-type collection file.

Note that, in Fig. 29, the first association-type collection file is adopted as the association-type collection file.

The WAV file has an area called a List chunk as a partial area of an area in which metadata is described.

The file control unit 43 can store the uuid assigned to the WAV file (audio) into, for example, the List chunk of the WAV file.

In Fig. 29, the master images Item #1, Item #2, Item #3, and Item #4 as four items are stored in the association-type collection file, and WAV files #1, #2, #3, and #4 of the master images Item #1, Item #2, Item #3, and Item #4 are generated. Then, the UUID #i is assigned to a WAV file #i (audio), and the association information storage box stores, as association information for associating the master image Item #i with the UUID #i of the WAV file #i of the master image Item #i, association information in which the item ID #i specifying the master image Item #i is correlated with the UUID #i of the WAV file #i to be associated with the master image Item #i.

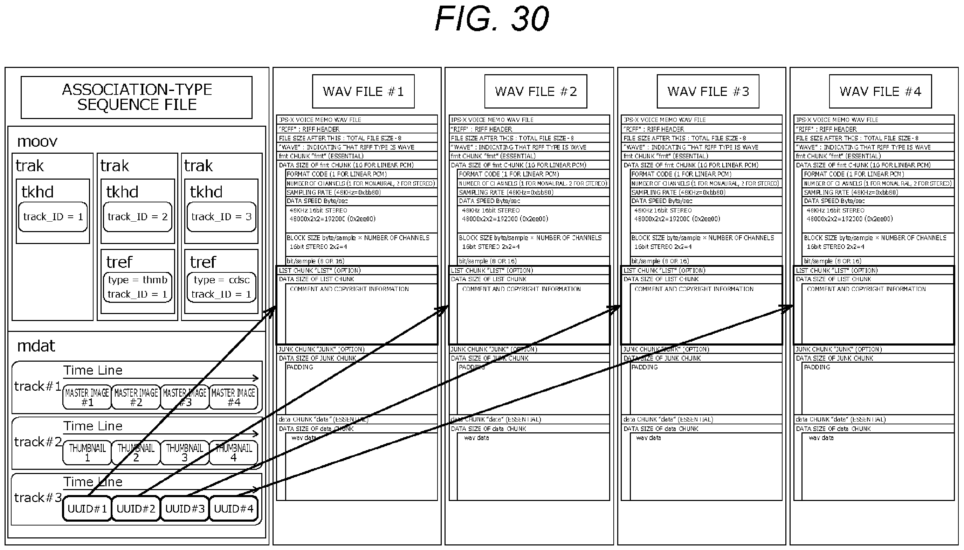

Fig. 30 is a view illustrating an example of storing a uuid into a WAV file in a case of adopting a WAV file of a master image as external data and generating an association-type sequence file.

Also in a case of generating the association-type sequence file, similarly to the case of generating the association-type collection file described in Fig. 29, the file control unit 43 can store the uuid assigned to the WAV file into the List chunk of the WAV file.

In Fig. 30, a track #1 including master images #1, #2, #3, and #4 as four frames is stored in the association-type sequence file, and WAV files #1, #2, #3, and #4 of the master images #1, #2, #3, and #4 are generated. Then, the UUID #i is assigned to the WAV file #i, and the association-type sequence file stores the track #3 configured such that the UUID #i of the WAV file #i is arranged so as to have the same time information as the master image #i corresponding to the WAV file #i.

As described above, when the track #3 is configured with the UUID #i of the WAV file #i arranged so as to have the same time information as the master image #i corresponding to the WAV file #i, the i-th master image #i of the track #1 and the i-th UUID #i of the track #3, that is, the UUID #i of the WAV file #i of the master image #i are associated and stored in the association-type sequence file.

Note that, in addition to the HEIF file, the present technology can be applied to, for example, an ISO base media file, an MP4 file, a Miaf file, and the like having a box structure, other than the HEIF file.

Furthermore, the present technology can be applied to, for example, a file or the like that stores an image (master image) having no box structure and another image in which the resolution of the image is reduced.

Moreover, the present technology can be applied to a case where the external data is associated with a screen nail image or a thumbnail image in the HEIF file, in addition to a case where the external data is associated with a master image in the HEIF file.

Furthermore, the present technology can be applied, for example, to a case where external data is associated with internal data other than an image such as a master image in a HEIF file.

### <Index display>

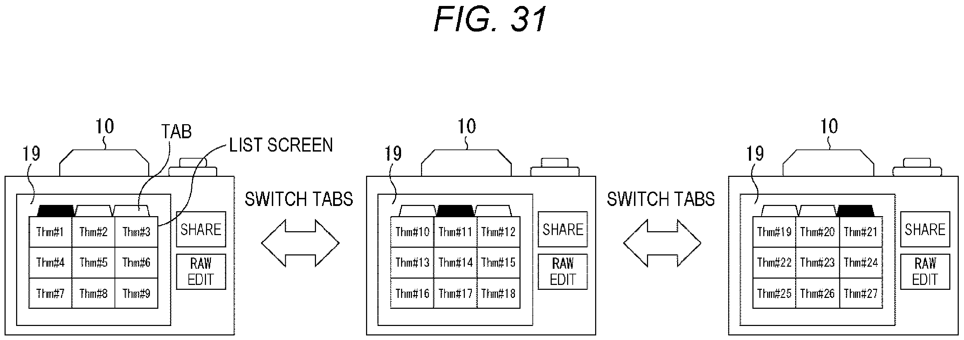

Fig. 31 is a view for explaining an example of index display on the digital camera 10.

The digital camera 10 can display a list of images stored in various files such as HEIF files (including association-type HEIF files) as index display. For simplicity of explanation, it is assumed that the file targeted for index display is a HEIF file.

For index display, the digital camera 10 reads thumbnail images Thm #i stored in HEIF files, and displays, on the liquid crystal panel 19, a list screen in which the thumbnail images Thm #i are arranged in a matrix.

In Fig. 31, a list screen in which thumbnail images Thm #i are arranged in 3 rows × 3 columns is generated.

In a case where the total number of thumbnail images Thm #i stored in the HEIF files targeted for index display exceeds the number of thumbnail images (nine in this example) that can be arranged on the list screen, the necessary number of tabs are provided on top of the list screen. In Fig. 31, the black tab is the selected tab.

By default, the first tab (from the left) is selected, and the list screen in which thumbnail images Thm #1 to Thm #9 stored in the first nine HEIF files targeted for index display are arranged is displayed.

When the user selects the second tab, the list screen in which thumbnail images Thm #10 to Thm #18 stored in the next nine HEIF files targeted for index display are arranged is displayed.

Similarly, the list screen in which thumbnail images stored in the nine (or less) HEIF files corresponding to the tab selected by the user are arranged is displayed. Here, thumbnail images in the list screen are not limited to a 3 × 3 arrangement.

Note that the digital camera 10 in Fig. 31 is provided with a share button and a RAW edit button.

When the share button is operated in a state where the thumbnail image Thm #i in the list screen is selected, the master image corresponding to the thumbnail image Thm #i selected in the list screen is transmitted to an external device other than the digital camera 10 and shared with the external device.

When the RAW edit button is operated in a state where the thumbnail image Thm #i in the list screen is selected, in the digital camera 10, for example, the RAW image (associated with the master image) corresponding to the thumbnail image Thm #i selected in the list screen is read from a RAW file and the RAW image is displayed on the liquid crystal panel 19 instead of the list screen. As a result, the digital camera 10 goes into the state where the RAW image can be edited.

In the index display as described above, when a greater number of HEIF files are targeted for index display, such greater number of HEIF files need to be opened/closed, and thus it may take time to display the list screen.

Moreover, in a case where a sequence file is included in HEIF files targeted for index display, and the thumbnail image Thm #i stored in the sequence file is coded by long GOP, the processing performed for index display may be redundant.

For example, in a case where, among 15-frame thumbnail images Thm #i constituting a GOP, thumbnail images Thm #1 to Thm #9 of the 1st to 9th frames are arranged in the first list screen and thumbnail images Thm #10 to Thm #15 of the 10th to 15th frames are arranged on the second list screen, when list screen display is switched from a screen other than the second list screen to the second list screen, in order to decode thumbnail images Thm #10 to Thm #15 of the 10th to 15th frames arranged in the second list screen, it is necessary to decode, among thumbnail images Thm #1 to Thm #9 of the 1st to 9th frames not arranged in the second list screen, the thumbnail image Thm #i necessary for decoding thumbnail images Thm #10 to Thm #15 of the 10th to 15th frames.

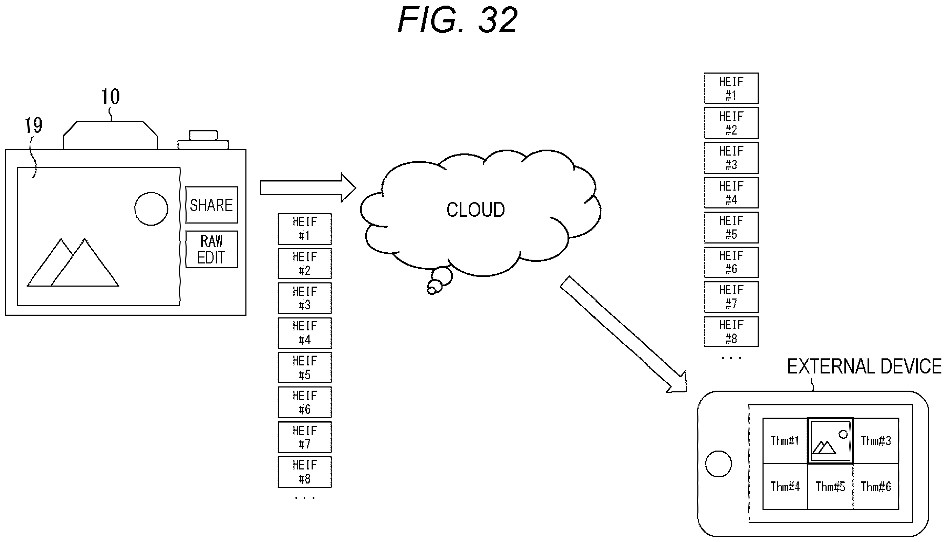

Fig. 32 is a view for explaining an example of index display on an external device other than the digital camera 10.

Concerning an image stored in a HEIF file obtained by the digital camera 10, index display can be performed on an external device other than the digital camera 10.

In a case where index display is performed on an external device, for example, the HEIF file targeted for index display is transmitted to the external device via a network, and index display is performed on the external device in a similar manner to the index display on the digital camera 10.

A HEIF file can be transmitted from the digital camera 10 to the external device via the Internet, a LAN, USB, or any other wired or wireless network. Furthermore, a HEIF file can also be transmitted from the digital camera 10 to the external device via a cloud computer.

As with the case of performing index display on the digital camera 10, in a case where index display is performed on an external device for an image stored in a HEIF file obtained by the digital camera 10, it may take time to display the list screen and the processing performed for the index display may be redundant.

Moreover, when index display is performed on an external device, it takes time to transmit a HEIF file necessary for generating the list screen from the digital camera 10 to the external device. For example, responsiveness from when the user requests index display on the external device until the list screen is actually displayed may be decreased.

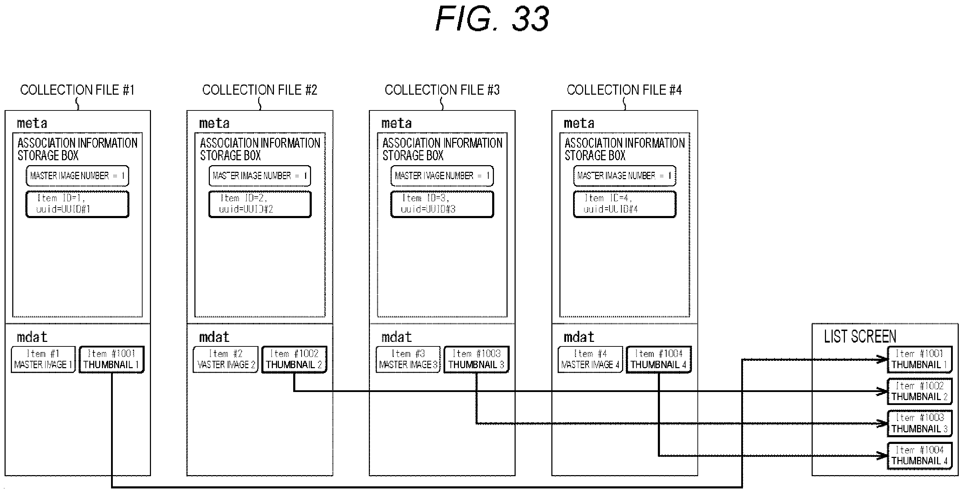

Fig. 33 is a view illustrating an example of index display for a first association-type collection file.

Here, a certain HEIF file A and another HEIF file B different from the HEIF file A can use a duplicate item ID. For example, the item ID of one item in the HEIF file A may be set to 1, while the item ID of one item in the HEIF file B may be set to 1. However, in the present embodiment, for easier-to-understand explanation, unique item IDs are used in the HEIF file A and the HEIF file B as appropriate.

In Fig. 33, four first association-type collection files (HEIF files) #1 to #4 are targeted for index display.

In the first association-type collection file #i in Fig. 33, a master image Item #i of one frame and a thumbnail image Item #(1000 + i) of the master image Item #i are stored in the mdat box. Furthermore, the association information storage box having the association information that indicates that the number of master images is 1 and correlates the item ID #i of the master image Item #i with the UUID #i as specification information of external data associated with the master image Item #i is stored in the meta box.

In a case where index display is performed for the four first association-type collection files #1 to #4 as described above, for example, the thumbnail images Item #1001 to Item #1004 are read from the four first association-type collection files #1 to #4, respectively. Then, a list screen in which the thumbnail images Item #1001 to Item #1004 are arranged is generated.

Therefore, in a case where index display is performed on the digital camera 10 and an external device, in order to read the thumbnail images Item #1001 to Item #1004 from the first association-type collection files #1 to #4, respectively, each of the four, in other words a plurality of, first association-type collection files #1 to #4 needs to be opened/closed, and thus the responsiveness for index display may be decreased.

Moreover, in a case where index display is performed on an external device, the four, in other words a plurality of, first association-type collection files #1 to #4 need to be transmitted from the digital camera 10 to the external device, and thus it takes time to transmit the files and the responsiveness for index display may be decreased.

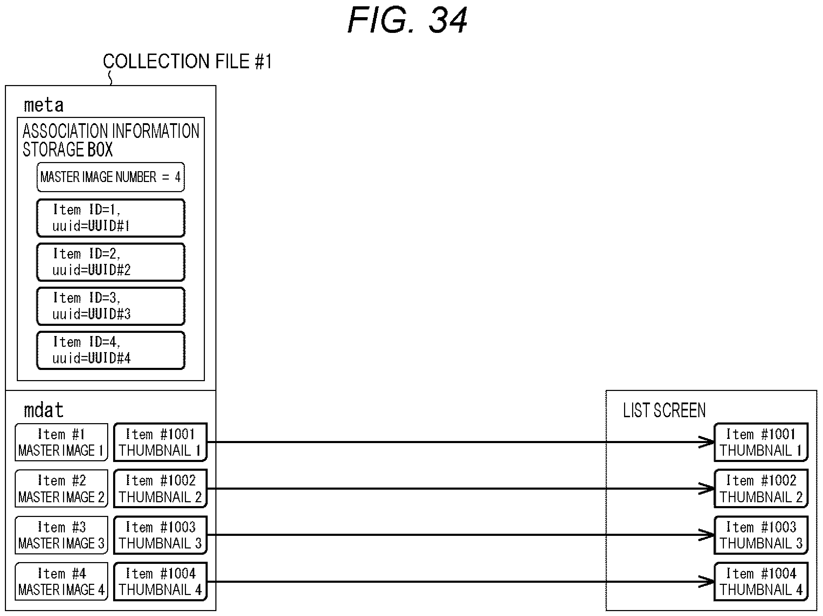

Fig. 34 is a view illustrating another example of index display for a first association-type collection file.

In Fig. 34, one first association-type collection file (HEIF file) #1 is targeted for index display.

In the first association-type collection file #1 in Fig. 34, master images Item #1 to Item #4 of four, in other words a plurality of, frames, and thumbnail images Item #1001 to Item #1004 of their corresponding master images Item #1 to Item #4 are stored in the mdat box.

Furthermore, the association information storage box having the association information that indicates that the number of master images is 4 and, for each of the master images Item #1 to Item #4 of four frames, correlates the item ID #i of the master image Item #i with the UUID #i as specification information of external data associated with the master image is stored in the meta box.

In a case where index display is performed for the first association-type collection file #1 as described above, for example, the thumbnail images Item #1001 to Item #1004 are read from the first association-type collection file #1. Then, a list screen in which the thumbnail images Item #1001 to Item #1004 are arranged is generated.

Therefore, in a case where index display is performed on the digital camera 10 and an external device, in order to only read the thumbnail images Item #1001 to Item #1004 from the first association-type collection file #1, seek is done on the first association-type collection file #1, and thus the responsiveness for index display is decreased.

Furthermore, the first association-type collection file in Fig. 34 stores the master images Item #1 to Item #4 of four, in other words a plurality of, frames, and thus the file size is large.

Therefore, in a case where index display is performed on an external device, the first association-type collection file #1, which has a large file size, needs to be transmitted from the digital camera 10 to the external device, and thus it takes time to transmit the file and the responsiveness for index display may be decreased.

Note that index display for a collection file other than an association-type collection file can be performed in a similar manner to the index display for an association-type collection file.

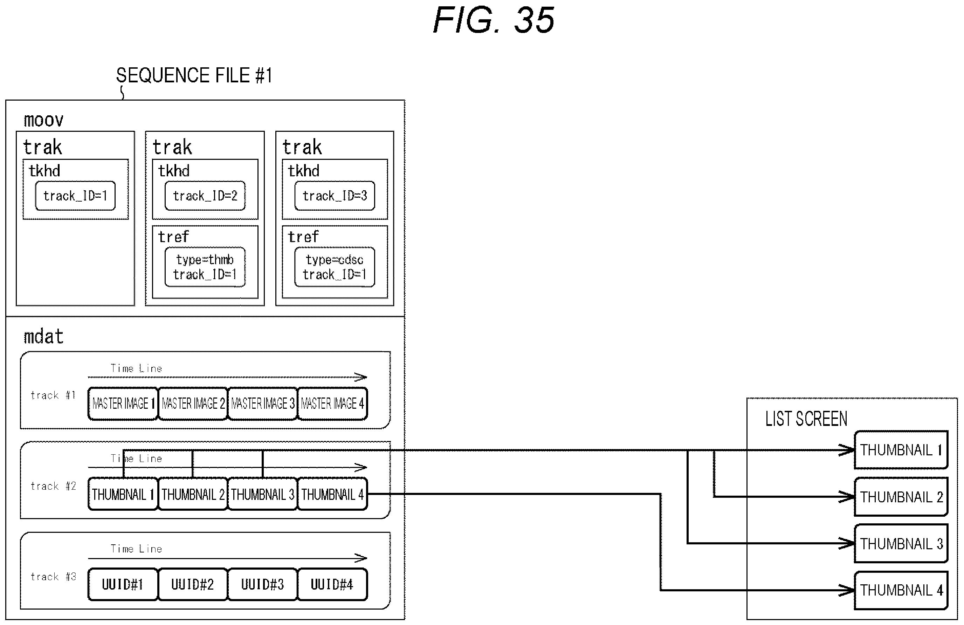

Fig. 35 is a view illustrating an example of index display for an association-type sequence file.

In Fig. 35, one association-type sequence file (HEIF file) #1 is targeted for index display.

In the association-type sequence file #1 in Fig. 35, a track #1 including master images of four, in other words a plurality of, frames, a track #2 including thumbnail images of four frames of their corresponding master images, and a track #3 including UUID #1 to UUID #4 as specification information of external data associated with the master images of four frames, respectively, are stored in the mdat box.

Moreover, trak boxes managing the tracks #1 to #3, respectively, are stored in the moov box.

Each of the trak boxes managing the tracks #1 to #3 includes a tkhd box that stores a track ID of a track managed by the trak box. The trak box managing the track #2 further includes a tref box that stores (information indicating) that another track related to the track #2 is the track #1 (track_ID = 1) and that the track #2 is a track of a thumbnail image (type = thmb). The trak box managing the track #3 further includes a tref box that stores information indicating that another track related to the track #3 is the track #1 (track_ID = 1) and that the track #3 is a track of metadata (specification information) (type = cdsc).

In a case where index display is performed for the association-type sequence file #1 as described above, for example, (coded data of) thumbnail images of four frames are read from the association-type sequence file #1 and decoded. Then, a list screen in which thumbnail images of four frames are arranged is generated.

An association-type sequence file stores a thumbnail image in the state where the thumbnail image is coded by long GOP, for example.

Therefore, in order to decode (reproduce) an inter-coded thumbnail image, it is necessary to decode another thumbnail image referred to by the thumbnail image. Moreover, in a case where another thumbnail image refers to still another thumbnail image, it is necessary to decode such thumbnail image.

Since an association-type sequence file can store an inter-coded image, its file size can be made smaller than that of a collection file that is not allowed to store an inter-coded image. However, arising from the inter coding, decoding a certain thumbnail image may require decoding other thumbnail images of one or more frames.

Therefore, when, for example, the list screen is scrolled or switched between tabs on the digital camera 10 and an external device, it takes time to decode a thumbnail image to be displayed after the scrolling or switching between tabs, and the responsiveness for index display may be decreased.

Note that index display for a sequence file other than an association-type sequence file can be performed in a similar manner to the index display for an association-type sequence file.

Thus, the digital camera 10 is capable of generating, as a proxy file representing one or more HEIF files, another HEIF file storing related images related to master images, such as thumbnail images of master images stored in one or more HEIF files. Then, the digital camera 10 and an external device are enabled to perform index display using the proxy file.

By using a proxy file to perform index display, the digital camera 10 and an external device can reduce the time required to display a list screen as the index display, thereby achieving quick index display.

Furthermore, it is made possible to prevent the processing performed for index display from being redundant.

Moreover, by transmitting a proxy file from the digital camera 10 to an external device, it is made possible to reduce the time required for file transmission and to suppress a decrease in responsiveness of the external device as compared with the case of transmitting a HEIF file necessary for generating a list screen.

Furthermore, a proxy file facilitates management of thumbnail images because the proxy file collects thumbnail images of master images stored in one or more HEIF files.

### <Proxy file>

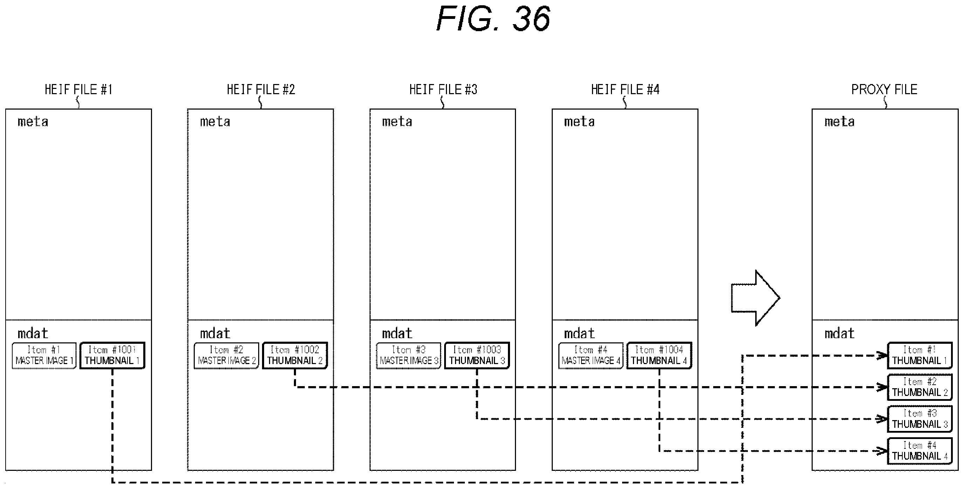

Fig. 36 is a view for explaining a first example of a proxy file.

The file control unit 43 is capable of generating a proxy file that stores, as master images in a HEIF file, related images related to master images stored in HEIF files (including association-type HEIF files).

As the proxy file, for example, a HEIF file, or a collection file in particular, can be adopted. In addition, a sequence file or a file other than HEIF files can be adopted as the proxy file.

Furthermore, a proxy file is capable of storing, in addition to a related image related to a master image stored in a HEIF file, a related image related to an image stored in, for example, a JPEG file or a RAW file other than HEIF files.

As a related image related to a master image stored in a HEIF file, an image that is the same as the master image in content but is different from the master image in the number of pixels (size), that is, for example, a thumbnail image having a smaller number of pixels (size) than the master image, an image that is the same as the master image in content but is different from the master image in YUV signal format, an image that is the same as the master image in content but is different from the master image in bit allocation per pixel (gradation), and other images related to the master image can be adopted.

For example, in a case where a HEIF file stores a master image and a thumbnail image, as a related image related to the master image, a thumbnail image generated by reducing pixels from the master image or a thumbnail image obtained by copying the thumbnail image stored in the HEIF file may be used.

That is, in a case where a thumbnail image of a master image is adopted as an image related to the master image, if a HEIF file stores a master image and a thumbnail image, a thumbnail image may be newly generated from the master image stored in the HEIF file and the thumbnail image may be stored in a proxy file as the related image, or (a copy of) the thumbnail image stored in the HEIF file may be stored in the proxy file as the related image. The following description assumes that, for example, a thumbnail image of a master image is adopted as a related image of the master image.

Here, an item in a HEIF file being a proxy file is also referred to as a proxy item in order to distinguish the item from items in HEIF files being non-proxy files.

In Fig. 36, there are four HEIF files #1 to #4, which are collection files, and the mdat box in each HEIF file #i stores one master image Item #i and a thumbnail image Item #(1000 + i) of the master image Item #i.

In addition, in Fig. 36, there is generated a proxy file in which (copies of) the thumbnail images Item #1001 to Item #1004 stored in the HEIF files #1 to #4 are stored as proxy items Item #1 to Item #4.

The proxy item Item #i is, as an image, a thumbnail image of the master image Item #i in the HEIF file #i, but is a master image in the (HEIF file as a) proxy file.

In a first example of a proxy file, as a master image corresponding to the thumbnail image as the proxy item #i, the master image Item #i' that most closely matches the thumbnail image as the proxy item #i or the master image Item #i' corresponding to the thumbnail image Item #(1000 + i') that most closely matches the thumbnail image as the proxy item #i can be detected by, for example, matching the thumbnail image as the proxy item #i in the proxy file with each of the master images Item #1 to Item #4 in the HEIF files #1 to #4 or with each of the thumbnail images Item #1001 to Item #1004.

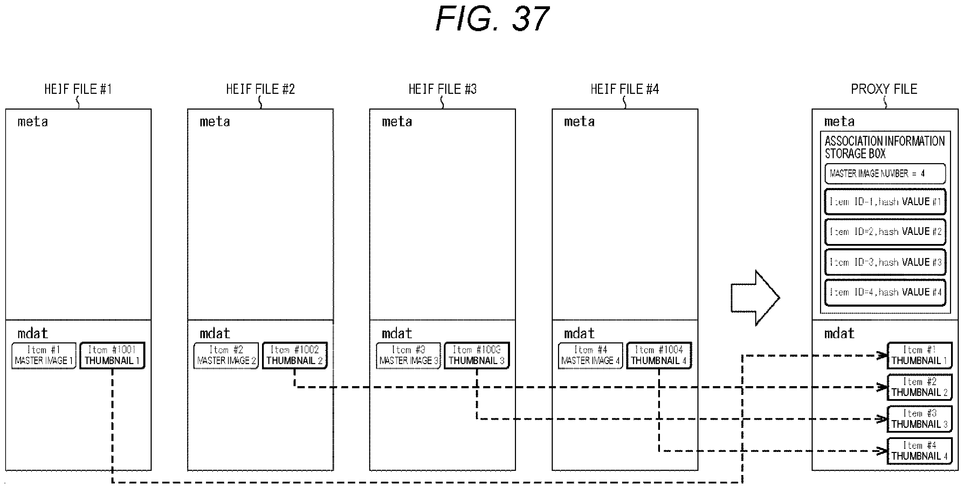

Fig. 37 is a view for explaining a second example of a proxy file.

As in Fig. 36, in Fig. 37, there is generated a proxy file in which the thumbnail images Item #1001 to Item #1004 stored in the HEIF files #1 to #4 are stored as proxy items Item #1 to Item #4.

Moreover, in Fig. 37, the file generated as the proxy file is an association-type HEIF file in which, while the thumbnail image as the proxy item Item #i (a master image in the proxy file) is used as internal data in the proxy file and the master image Item #i corresponding to the thumbnail image is used as external data outside the proxy file, the internal data (the thumbnail image as the proxy item Item #i) and specification information of the external data (the master image Item #i) are stored in association with each other.

That is, in Fig. 37, the meta box in the HEIF file as a proxy file stores the association information storage box storing association information that correlates the item ID #i of the thumbnail image as the proxy item Item #i (a master image in the proxy file) with the hash value #i as specification information of the master image Item #i corresponding to the thumbnail image. Accordingly, the proxy file in Fig. 37 is a first association-type collection file (Fig. 10).

As the hash value #i as specification information of the master image Item #i, for example, a hash value obtained by using the master image Item #i as an input can be employed.

Furthermore, Fig. 37 shows that, in the association information storage box in the proxy file, the number of master images is four, which is the number of thumbnail images, as the proxy items Item #1 to Item #4 stored in the proxy file, of the master images Item #1 to Item #4, that is, the number of sets of a correlated item ID and a hash value as specification information.

Note that, as (the file format of) a proxy file, an association-type HEIF file other than the first association-type collection file, that is, a second association-type collection file (Fig. 11), a third association-type collection file (Fig. 12), or an association-type sequence file (Fig. 14) can be adopted.

In a second example of a proxy file, for example, the master image specified by the hash value as the specification information associated with the thumbnail image as the proxy item #i (the hash value correlated with the item ID of the thumbnail image), that is, the master image Item #i' providing the hash value matching the hash value #i, among hash values generated by using the individual master images Item #1 to Item #4 in the HEIF files #1 to #4 as inputs, can be detected as the master image corresponding to the thumbnail image as the proxy item #i.

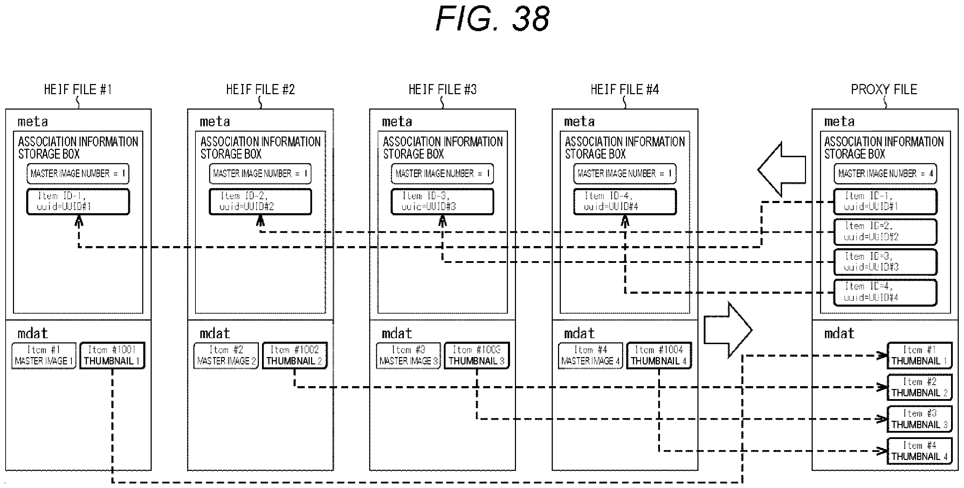

Fig. 38 is a view for explaining a third example of a proxy file.

As in Fig. 37, in Fig. 38, there is generated a proxy file in which the thumbnail images Item #1001 to Item #1004 stored in the HEIF files #1 to #4, which are collection files, are stored as proxy items Item #1 to Item #4.

Moreover, as in Fig. 37, in Fig. 38, the file generated as the proxy file is an association-type HEIF file in which, while the thumbnail image as the proxy item Item #i (a master image in the proxy file) is used as internal data in the proxy file and the master image Item #i corresponding to the thumbnail image is used as external data outside the proxy file, the internal data (the thumbnail image as the proxy item Item #i) and specification information of the external data (the master image Item #i) are stored in association with each other.

That is, as in Fig. 37, in Fig. 38, the meta box in the HEIF file as a proxy file stores the association information storage box storing association information that correlates the item ID #i of the thumbnail image as the proxy item Item #i with the specification information of the master image Item #i corresponding to the thumbnail image. Accordingly, the proxy file in Fig. 38 is a first association-type collection file.

However, in Fig. 38, a uuid is adopted as specification information of the master image Item #i, instead of a hash value.

In a case where a uuid is adopted as specification information of the master image Item #i as external data, as with the cases described with reference to Figs. 27 to 30, it is necessary to write (store) the UUID #i as specification information of the master image Item #i into the HEIF file #i storing the master image Item #i as external data.

Therefore, the file control unit 43 writes the UUID #i of the master image Item #i as external data into the HEIF file #i storing the master image Item #i.

For writing the UUID #i into the HEIF file #i storing the master image Item #i as external data, the UUID #i can be written to the meta box or the mdat box in the HEIF file #i. For writing the UUID #i into the HEIF file #i storing the master image Item #i as external data, the UUID #i can be written, for example, in accordance with the format of an association-type HEIF file, that is, in such a way that the format after the UUID #i is written is the format of an association-type HEIF file.

In Fig. 38, the UUID #i is written into the HEIF file #i storing the master image Item #i as external data, in accordance with the file format of a first association-type collection file.

That is, in Fig. 38, the association information storage box in which the UUID #i of the master image Item #i and the item ID #i of the master image Item #i are stored in association with each other is stored in the meta box in the HEIF file #i, so that the HEIF file #i is a first association-type collection file (compliant with the format of a first association-type collection file).

Furthermore, Fig. 38 shows that, in the association information storage box in the HEIF file #i (which has become a first association-type collection file), the number of master images is 1, which is the number of master images Item #i stored in the HEIF file #i, that is, the number of sets of a correlated item ID and a uuid as specification information.

Here, the HEIF file that stores the target master image for a thumbnail image to be stored as a related image in a proxy file is the target HEIF file for generating a proxy file, and such HEIF file is hereinafter also referred to as a proxy target file.

The UUID #i can be written to the HEIF file #i as a proxy target file in accordance with the format of any one of first to third association-type collection files when the HEIF file #i is a collection file, or in accordance with the format of an association-type sequence file when the HEIF file #i is a sequence file.

Note that, for the HEIF file #i as a proxy target file to which the UUID #i has been written, the master image Item #i in the HEIF file #i is internal data to the HEIF file #i, and the thumbnail image as the proxy item Item #i in a proxy file is external data to the HEIF file #i.

In addition, for the proxy file, the UUID #i written to the HEIF file #i as a proxy target file is specification information of the master image #Item #i that is external data to the proxy file. However, the UUID #i can also be regarded as specification information specifying the proxy item #i.

In this case, the HEIF file #i as a proxy target file to which the UUID #i has been written can be regarded as a first association-type HEIF file in which the master image Item #i as internal data and the proxy item Item #i as external data, that is, the specification information UUID #i of the thumbnail image (of the master image Item #i) in the proxy file, are stored in association with each other.

In a third example of a proxy file, for example, the master image specified by the uuid as the specification information associated with the thumbnail image as the proxy item #i (the uuid correlated with the item ID of the thumbnail image), that is, the master image Item #i of the item ID #i correlated with the UUID #i, among the master images Item #1 to Item #4 in the HEIF files #1 to #4, can be detected as the master image corresponding to the thumbnail image as the proxy item #i.

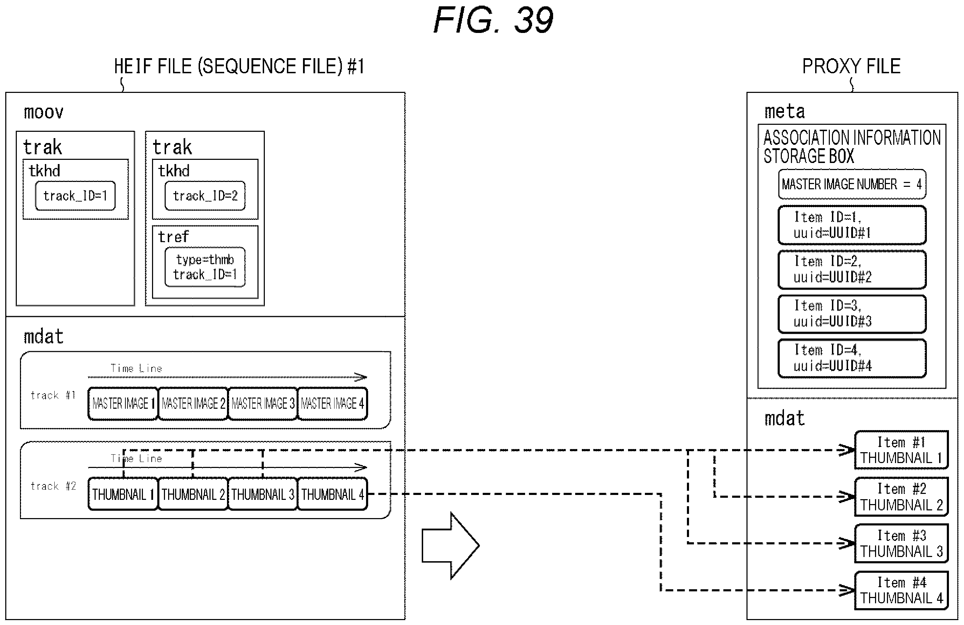

Fig. 39 is a view for explaining a fourth example of a proxy file.

The fourth example of a proxy file in Fig. 39 is different from the third example of a proxy file in Fig. 38 in that the HEIF file as a proxy target file is a single sequence file #1 in Fig. 39 while the HEIF file as a proxy target file is four collection files in Fig. 38.

Here, the collection file #1 as a proxy target file in Fig. 39 is not an association-type sequence file but a normal sequence file.

In the sequence file #1 in Fig. 39, a track # 1 including master images of four, in other words a plurality of, frames and a track #2 including four-frame thumbnail images of their corresponding master images of four frames are stored in the mdat box.

Moreover, trak boxes managing the tracks #1 and #2, respectively, are stored in the moov box.

Each of the trak boxes managing the tracks #1 to #2 includes a tkhd box that stores a track ID of a track managed by the trak box.

The trak box managing the track #2 further includes a tref box that stores information indicating that another track related to the track #2 is the track #1 (track_ID = 1) and that the track #2 is a track of a thumbnail image (type = thmb).

The thumbnail images of four frames stored in the sequence file #1 in Fig. 39 are, for example, decoded and intra-coded.

Then, a proxy file storing the intra-coded thumbnail images of four frames as proxy items Item #1 to Item #4 is generated. Moreover, in the proxy file, while the thumbnail image as the proxy item Item #i (a master image in the proxy file) is used as internal data in the proxy file and the master image Item #i of the i-th frame (the frame in the i-th place) in the track #1 in the sequence file #1 corresponding to the thumbnail image is used as external data outside the proxy file, the internal data (the thumbnail image as the proxy item Item #i) and specification information of the external data (the master image of the i-th frame) are stored in association with each other.

That is, as in Fig. 38, in Fig. 39, the association information storage box storing association information that correlates the item ID #i of the thumbnail image as the proxy item Item #i with the specification information of the master image of the i-th frame corresponding to the thumbnail image is stored in the meta box in the HEIF file as a proxy file. Accordingly, the proxy file in Fig. 39 is a first association-type collection file.

As in Fig. 38, in Fig. 39, a uuid is adopted as specification information of a master image as external data. The uuid of the master image of the i-th frame as external data is UUID #i.

As described above, in Fig. 39, a uuid is adopted as specification information of a master image as external data, and therefore, as in Fig. 38, a uuid as specification information of a master image as external data is written (stored) into the sequence file #1 as a proxy target file that stores the master image as external data.

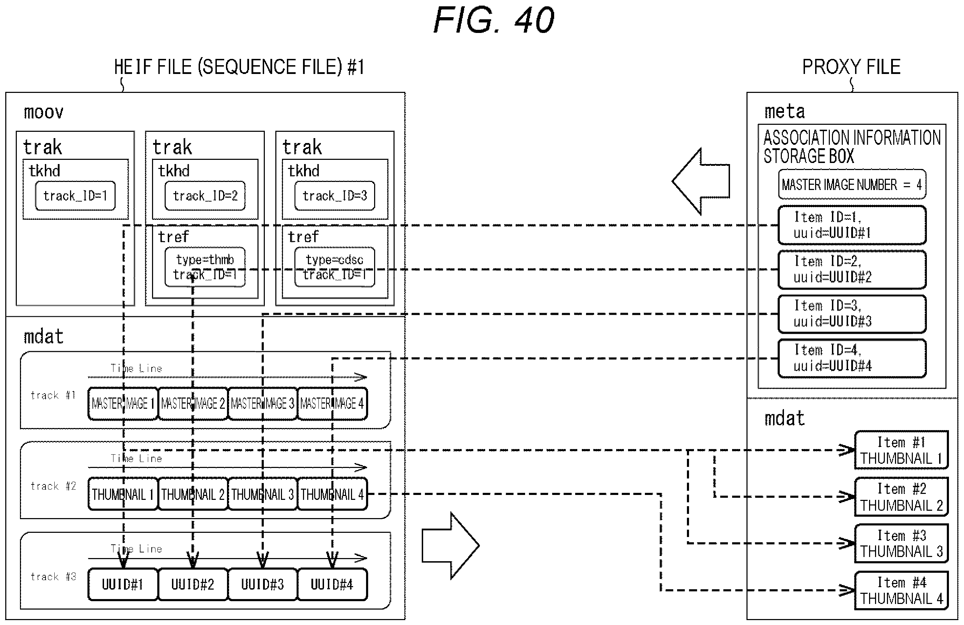

Fig. 40 is a view for explaining an example of writing a uuid as specification information of a master image as external data into a sequence file #1 as a proxy target file.

For writing a uuid of a master image as external data into the sequence file #i storing the master image, the uuid can be written to the moov box or the mdat box in the sequence file #i. For writing a uuid of a mater image into the sequence file #i storing the master image, the uuid can be written, for example, in accordance with the format of an association-type HEIF file, that is, in such a way that the format after the uuid is written is the format of an association-type HEIF file.

In Fig. 40, a uuid is written into the sequence file #1 storing a master image as external data, in accordance with the file format of an association-type sequence file.

That is, in Fig. 40, a track #3 for the UUID #1 to the UUID #4 of the master images of the 1st to 4th frames included in the track #1 is generated, a trak box managing the track #3 is generated, the track #3 is stored in the mdat box, and the trak box managing the track #3 is stored in the moov box, whereby the sequence file #1 is an association-type sequence file (compliant with the format of an association-type sequence file).

In the track #3, the UUID #1 to the UUID #4 of the master images of the 1st to 4th frames, respectively, are included and arranged such that the master image of the i-th frame in the track #1 is associated with the UUID #i of the master image in accordance with time information on a timeline or the order of arrangement in the track #3.

The trak box managing the track #3 includes a tkhd box that stores the track ID of the track #3 managed by the trak box.

The trak box managing the track #3 further includes a tref box that stores information indicating that another track related to the track #3 is the track #1 (track_ID = 1) and that the track #3 is a track of metadata (specification information) (type = cdsc).

In a fourth example of a proxy file, for example, the master image of the i-th frame in the track #1, as associated with the UUID #i, can be detected as the master image corresponding to the thumbnail image as the proxy item #i, from among the master images of four frames included in the track #1 in the (association-type) sequence file #1.

Note that, for the sequence file #1 as a proxy target file to which the UUID #i has been written, the master image in the sequence file #1 is internal data to the sequence file #1, and the thumbnail image as the proxy item Item #i in a proxy file is external data to the sequence file #1.

In addition, for the proxy file, the UUID #i written to the sequence file #1 as a proxy target file is specification information of the i-th frame master image that is external data to the proxy file. However, the UUID #i can also be regarded as specification information specifying the proxy item #i.

In this case, the sequence file #1 as a proxy target file to which the UUID #i has been written can be regarded as an association-type sequence file in which the i-th frame master image as internal data and the proxy item Item #i as external data, that is, the specification information UUID #i of the thumbnail image of the i-th frame master image, are stored in association with each other.

The proxy file as described above makes it possible to quickly perform index display of, for example, thumbnail images as related images of master images stored in HEIF files. Moreover, it is made possible to easily detect master images corresponding to the thumbnail images as related images in index display.

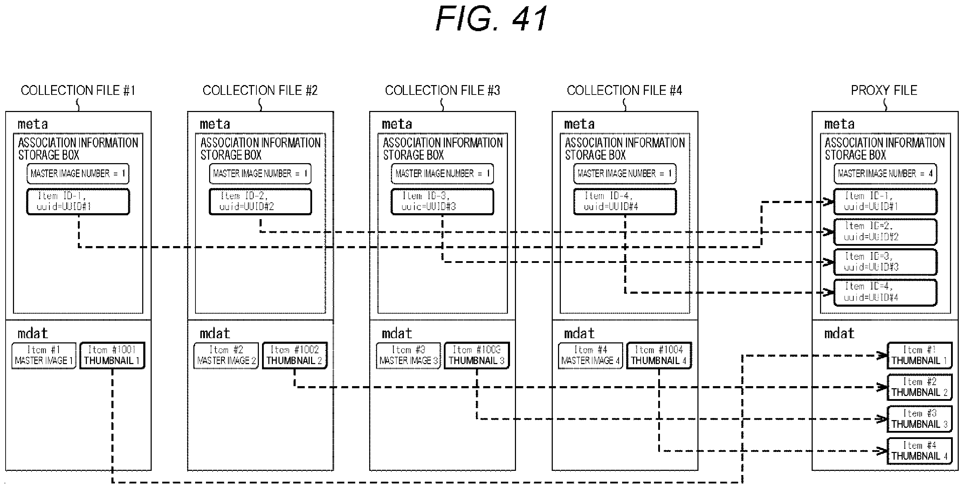

Fig. 41 is a view for explaining an example of generation of a proxy file with a first association-type collection file serving as a proxy target file.

With reference to Figs. 36 to 40, description has been given about a proxy file generated with a normal HEIF file (a HEIF file other than association-type HEIF files) serving as a proxy target file. However, a proxy file can be generated with, as a proxy target file, an association-type HEIF file in addition to a normal HEIF file.

In Fig. 41, proxy target files are four first association-type collection files #1 to #4.

In the first association-type collection file #i in Fig. 41, the master image Item #i of one frame and the thumbnail image Item #(1000 + i) of the master image Item #i are stored in the mdat box. Furthermore, the association information storage box having the association information that indicates that the number of master images is 1 and correlates the item ID #i of the master image Item #i with the UUID #i as specification information of external data (not illustrated) associated with the master image Item #i is stored in the meta box.

As described above, in the first association-type collection file #i, the meta box stores the association information storage box having the association information that correlates the item ID #i of the master image Item #i with the UUID #i as specification information of some external data associated with the master image Item #i, and, with the UUID #i serving as specification information of some external data, the master image Item #i is already associated with the external data. Some external data already associated with the master image Item #i in a first association-type collection file #i is also referred to as already associated external data.

In a case where the proxy file generation processing for generating a proxy file is performed by using a first association-type collection file #i as a proxy target file as described above, the file control unit 43 can generate a proxy file by using, in a shared manner, the UUID #i that is already used as specification information of already associated external data, as specification information of the master image Item #i that is external data to the proxy file.

That is, in the proxy file generation processing, while using the thumbnail images Item #1001 to Item #1004 stored in the first association-type collection files #1 to #4 as proxy items Item #1 to Item #4, using the thumbnail images (master images in a proxy file) as the proxy item Item #i as internal data in the proxy file, and using the master image Item #i corresponding to the thumbnail image as external data outside the proxy file, the file control unit 43 generates, as the proxy file, an association-type HEIF file in which the internal data (the thumbnail image as the proxy item Item #i) and specification information of the external data (the master image Item #i) are stored in association with each other.

For example, the file control unit 43 generates, as a proxy file, a first association-type collection file in which the meta box stores the association information storage box storing association information that correlates the item ID #i of the thumbnail image as the proxy item Item #i with specification information of the master image Item #i corresponding to the thumbnail image.

In the proxy file generation processing with the first association-type collection file #i as a proxy target file as described above, the UUID #i, which is specification information of the already associated external data associated with the master image Item #i in the first association-type collection file #i, can be used as specification information of the master image Item #i being external data to the proxy file.

In this case, concerning the UUID #i serving as specification information of the master image Item #i that is external data to the proxy file, unlike the description provided with reference to Fig. 38, it is not necessary to write the UUID #i into the first association-type collection file #i. This is because the first association-type collection file #i is in the state where the UUID #i has already been written thereto.

In the proxy file in Fig. 41, as with the third example of a proxy file in Fig. 38, for example, the master image Item #i of the item ID #i associated with the UUID #i, among the master images Item #1 to Item #4 in the first HEIF files #1 to #4, can be detected as the master image corresponding to the thumbnail image as the proxy item #i.

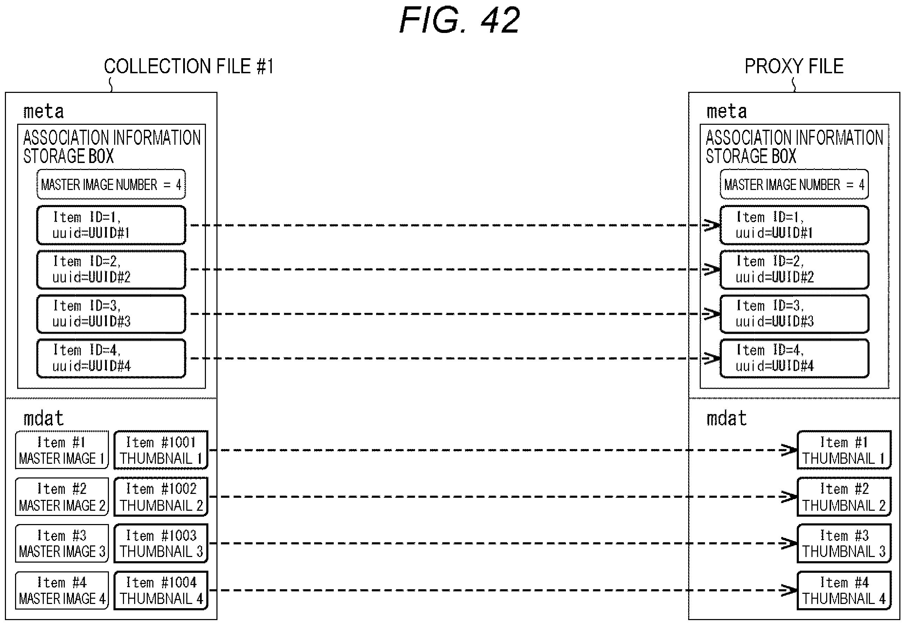

Fig. 42 is a view for explaining another example of generation of a proxy file with a first association-type collection file serving as a proxy target file.

In Fig. 42, the proxy target file is one first association-type collection file #1.

In the first association-type collection file #1 in Fig. 42, master images Item #1 to Item #4 of four, in other words a plurality of, frames, and thumbnail images Item #1001 to Item #1004 of their corresponding master images Item #1 to Item #4 are stored in the mdat box. Furthermore, the association information storage box having the association information that indicates that the number of master images is 4 and, for each of the master images Item #1 to Item #4 of four frames, correlates the item ID #i of the master image Item #i with the UUID #i as specification information of already associated external data associated with the master image is stored in the meta box.

In a case where the proxy file generation processing is performed by using a first association-type collection file #1 as a proxy target file as described above, the file control unit 43 can generate, as with the case in Fig. 41, a proxy file by using, in a shared manner, the UUID #i that is already used as specification information of already associated external data, as specification information of the master image Item #i that is external data to the proxy file.

That is, in the proxy file generation processing, while using the thumbnail images Item #1001 to Item #1004 stored in the first association-type collection file #1 as proxy items Item #1 to Item #4, using the thumbnail images (master images in a proxy file) as the proxy item Item #i as internal data in the proxy file, and using the master image Item #i corresponding to the thumbnail image as external data outside the proxy file, the file control unit 43 generates, as the proxy file, an association-type HEIF file in which the internal data (the thumbnail image as the proxy item Item #i) and specification information of the external data (the master image Item #i) are stored in association with each other.

For example, the file control unit 43 generates, as a proxy file, a first association-type collection file in which the meta box stores the association information storage box storing association information that correlates the item ID #i of the thumbnail image as the proxy item Item #i with specification information of the master image Item #i corresponding to the thumbnail image.

In the proxy file generation processing with the first association-type collection file #i as a proxy target file as described above, the UUID #i, which is specification information of the already associated external data associated with the master image Item #i in the first association-type collection file #i, can be used as specification information of the master image Item #i being external data to the proxy file.

In this case, concerning the UUID #i serving as specification information of the master image Item #i that is external data to the proxy file, unlike the description provided with reference to Fig. 38, it is not necessary to write the UUID #i into the first association-type collection file #i. This is because the first association-type collection file #i is in the state where the UUID #i has already been written thereto.

In the proxy file in Fig. 42, as with the third example of a proxy file in Fig. 38, for example, the master image Item #i of the item ID #i associated with the UUID #i, among the master images Item #1 to Item #4 in the first HEIF files #1 to #4, can be detected as the master image corresponding to the thumbnail image as the proxy item #i.

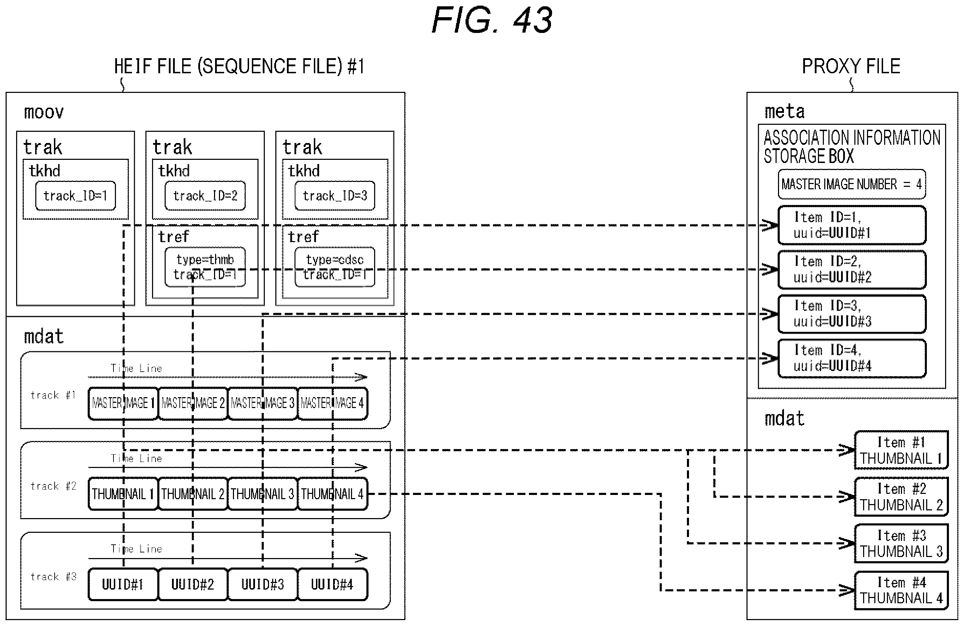

Fig. 43 is a view for explaining an example of generation of a proxy file with an association-type sequence file serving as a proxy target file.

In Fig. 43, the proxy target file is one association-type sequence file #1.

In the association-type sequence file #1 in Fig. 43, a track #1 including master images of four, in other words a plurality of, frames, a track #2 including thumbnail images of four frames of their corresponding master images, and a track #3 including UUID #1 to UUID #4 as specification information of already associated external data associated with the master images of four frames, respectively, are stored in the mdat box.

Moreover, in the association-type sequence file #1 in Fig. 43, trak boxes that manage the tracks #1 to #3, respectively, are stored in the moov box.

Each of the trak boxes managing the tracks #1 to #3 includes a tkhd box that stores a track ID of a track managed by the trak box.

The trak box managing the track #2 further includes a tref box that stores information indicating that another track related to the track #2 is the track #1 (track_ID = 1) and that the track #2 is a track of a thumbnail image (type = thmb).

The trak box managing the track #3 further includes a tref box that stores information indicating that another track related to the track #3 is the track #1 (track_ID = 1) and that the track #3 is a track of metadata (specification information) (type = cdsc).

In a case where the proxy file generation processing is performed by using the association-type sequence file #1 as a proxy target file as described above, the file control unit 43 can generate, as with the case in Fig. 41, a proxy file by using, in a shared manner, the UUID #i that is already used as specification information of already associated external data, as specification information of the master image Item #i that is external data to the proxy file.

That is, in the proxy file generation processing, the file control unit 43 causes the encoding control unit 42 to decode the thumbnail images of four frames stored in the association-type sequence file #1 and to further intra-code the thumbnail images.

Then, the file control unit 43 generates, as a proxy file, a first association-type collection file storing the intra-coded thumbnail images of four frames as proxy items Item #1 to Item #4.

Moreover, in the proxy file, while the thumbnail image as the proxy item Item #i (a master image in the proxy file) is used as internal data in the proxy file and the master image Item #i of the i-th frame in the track #1 in the sequence file #1 corresponding to the thumbnail image is used as external data outside the proxy file, the internal data (the thumbnail image as the proxy item Item #i) and specification information of the external data (the master image of the i-th frame) are stored in association with each other.

That is, the association information storage box storing association information that correlates the item ID #i of the thumbnail image as the proxy item Item #i with the specification information of the master image of the i-th frame corresponding to the thumbnail image is stored in the meta box in the proxy file.

In the proxy file generation processing with the association-type sequence file #1 as a proxy target file as described above, the UUID #i, which is specification information of the already associated external data associated with the master image of the i-th frame in the association-type sequence file #1, can be used as specification information of the master image of the i-th frame in the track #1 being external data to the proxy file.

In this case, concerning the UUID #i serving as specification information of the i-th frame master image that is external data to the proxy file, unlike the description provided with reference to Figs. 39 and 40, it is not necessary to write the UUID #i into the association-type sequence file #1. This is because the association-type sequence file #1 is in the state where the UUID #i has already been written thereto.

Concerning the proxy file in Fig. 43, as with the fourth example of a proxy file in Figs. 39 and 40, for example, the master image of the i-th frame in the track #1, as associated with the UUID #i, can be detected as the master image corresponding to the thumbnail image as the proxy item #i, from among the master images of four frames included in the track #1 in the association-type sequence file #1.

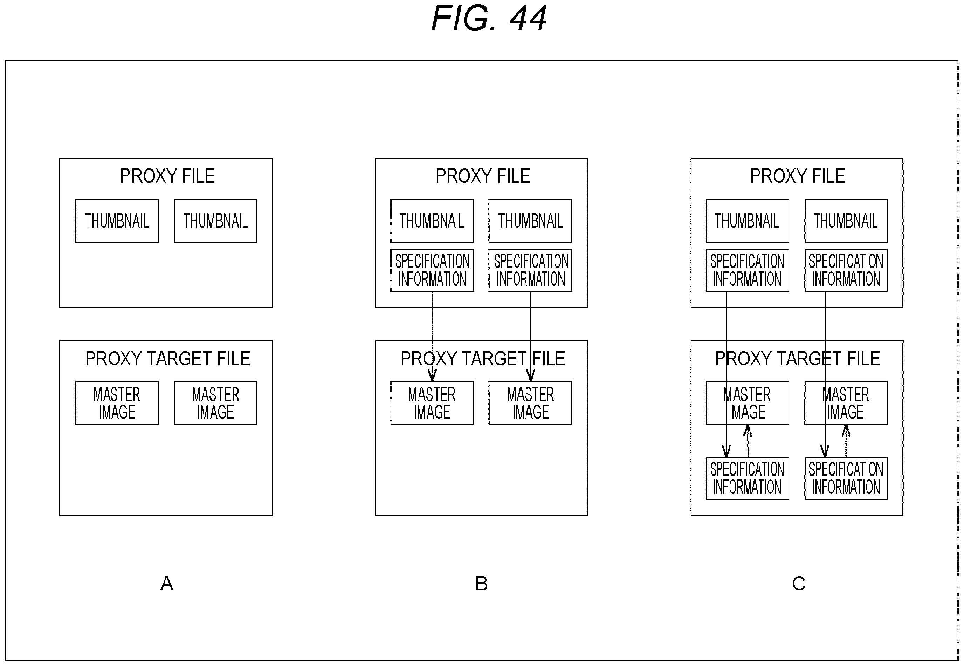

Fig. 44 is a view for explaining a mode taken by a set of a proxy target file and a proxy file generated by proxy file generation processing performed with the proxy target file.

A of Fig. 44 shows an example of a first mode taken by a set of a proxy target file and a proxy file.

In the first mode, the proxy file does not have specification information of the master image that is in the proxy target file and that corresponds to the thumbnail image as a proxy item in the proxy file. Likewise, the proxy target file does not have specification information of the master image that is in the proxy target file.

In the first mode, a master image that most closely matches the thumbnail image as a proxy item can be detected as the master image corresponding to the thumbnail image being a proxy item by, for example, matching thumbnail images that are proxy items in the proxy file with master images in the proxy target file.

B of Fig. 44 shows an example of a second mode taken by a set of a proxy target file and a proxy file.

In the second mode, the proxy file has specification information of the master image that is in the proxy target file and that corresponds to the thumbnail image as a proxy item in the proxy file.

On the other hand, the proxy target file does not have specification information of the master image that is in the proxy target file. In the second mode, as specification information of a master image, information that can be generated by using the master image, such as a hash value obtained by using the master image as an input, can be adopted.

In the second mode, for example, the master image that provides a hash value matching the hash value as specification information associated with the thumbnail image that is in the proxy file as a proxy item, among hash values generated by using master images in the proxy target file as inputs, can be detected as the master image corresponding to the thumbnail image as a proxy item.

C of Fig. 44 shows an example of a third mode taken by a set of a proxy target file and a proxy file.

In the third mode, the proxy file has specification information of the master image that is in the proxy target file and that corresponds to the thumbnail image as a proxy item in the proxy file.

Likewise, the proxy target file has specification information of the master image that is in the proxy target file. In the third mode, as the specification information of a master image, for example, information that can be used to specify the master image, such as a uuid, can be adopted.

In the third mode, for example, the master image associated with the specification information in the proxy target file, the specification information being the same as the specification information associated with a thumbnail image as a proxy item in the proxy file, can be detected as the master image corresponding to the thumbnail image as a proxy item.

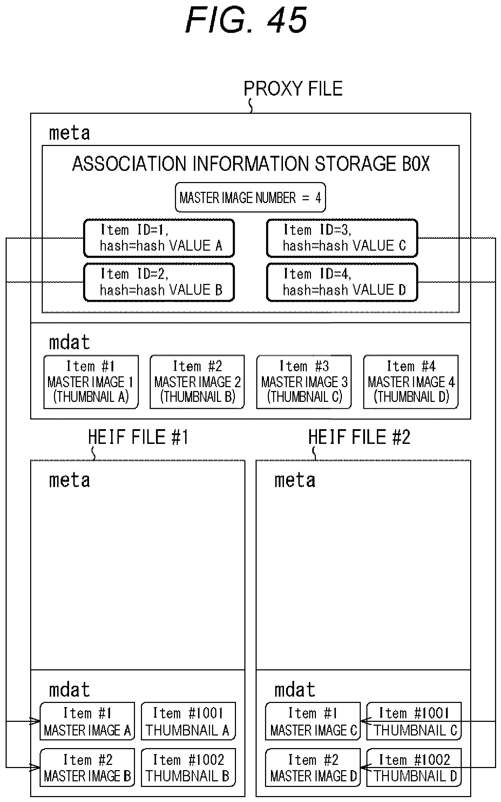

Fig. 45 is a view illustrating a detailed example of the second mode taken by a set of a proxy target file and a proxy file.

In Fig. 45, a proxy file is generated with two HEIF files #1 and #2 serving as proxy target files.

In Fig. 45, the HEIF file # 1 as a proxy target file stores two master images A and B and thumbnail images A and B of the master images A and B, respectively. The HEIF file # 2 as a proxy target file stores two master images C and D and thumbnail images C and D of the master images C and D, respectively.

In addition, the proxy file stores the thumbnail images A to D as master images in the proxy file, and further stores specification information of the master images A to D corresponding to the thumbnail images A to D. As the specification information of the master images A to D, hash values A to D obtained by using the master images A to D as inputs, respectively, are adopted.

In the second mode, when a thumbnail image stored in the proxy file is selected, the master image providing a hash value matching the hash value as the specification information associated with the thumbnail image selected in the proxy file, among hash values generated by using, as inputs, the individual master images A to D in the HEIF files #1 and #2 as proxy target files, can be detected as the master image corresponding to the thumbnail image selected in the proxy file.

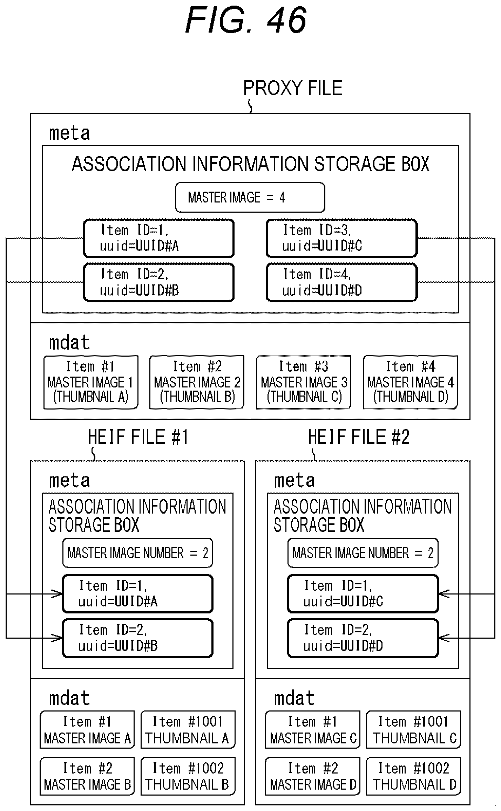

Fig. 46 is a view illustrating a detailed example of the third mode taken by a set of a proxy target file and a proxy file.

In Fig. 46, a proxy file is generated with two HEIF files #1 and #2 serving as proxy target files.

In Fig. 46, the HEIF file # 1 as a proxy target file stores two master images A and B and thumbnail images A and B of the master images A and B, respectively. The HEIF file # 2 as a proxy target file stores two master images C and D and thumbnail images C and D of the master images C and D, respectively.

In addition, the proxy file stores the thumbnail images A to D as master images in the proxy file, and further stores specification information of the master images A to D corresponding to the thumbnail images A to D. As the specification information of the master images A to D, uuids (UUID #A, UUID #B, UUID #C, and UUID # D) are adopted.

The UUID #A, the UUID #B, the UUID #C, and the UUID #D as the specification information of the master images A to D are stored (written) not only into the proxy file but also into the proxy target files. That is, the HEIF file #1 as a proxy target file storing the master images A and B stores the UUID #A and the UUID #B of the master images A and B, while the HEIF file #2 as a proxy target file storing the master images C and D stores the UUID #C and the UUID #D of the master images C and D.

In the third mode, when a thumbnail image stored in a proxy file is selected, the master image associated with the uuid in a proxy target file, the uuid being the same as the uuid associated with the thumbnail image selected in the proxy file, can be detected as the master image corresponding to the thumbnail image selected in the proxy file.

### <Index display employing proxy file>

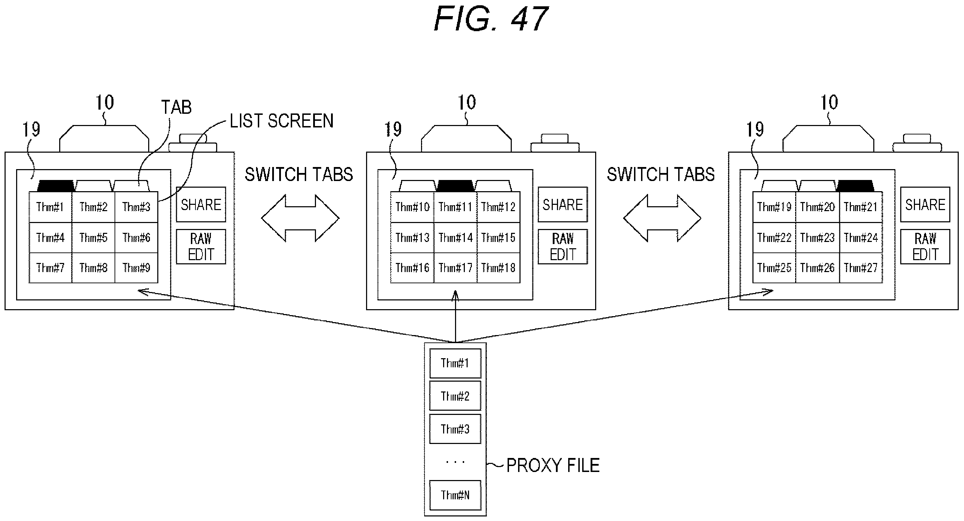

Fig. 47 is a view for explaining an example of index display employing a proxy file on the digital camera 10.

For index display, the digital camera 10 reads thumbnail images Thm #i stored in the proxy file, and displays, on the liquid crystal panel 19, a list screen in which the thumbnail images Thm #i are arranged in a matrix. As in Fig. 31, in Fig. 47, a list screen in which thumbnail images Thm #i are arranged in 3 rows × 3 columns is generated. In a case where the total number of thumbnail images Thm #i stored in the proxy file targeted for index display exceeds the number of thumbnail images (nine in this example) that can be arranged on the list screen, the necessary number of tabs are provided on top of the list screen.

By default, the first tab is selected, and the list screen in which thumbnail images Thm #1 to Thm #9 stored in the first nine proxy files targeted for index display are arranged is displayed. When the user selects the second tab, the list screen in which thumbnail images Thm #10 to Thm #18 stored in the next nine proxy files targeted for index display are arranged is displayed. Similarly, the list screen in which thumbnail images stored in the nine (or less) proxy files corresponding to the tab selected by the user are arranged is displayed.

Here, as with the case in Fig. 31, thumbnail images in the list screen are not limited to a 3 × 3 arrangement. In addition, the share button and the RAW edit button are as described with reference to Fig. 31.

According to the index display employing a proxy file as described above, index display can be appropriately performed.

That is, according to the index display employing a proxy file, it is only required to open/close the proxy file without the need for opening/closing HEIF files that store the master images corresponding to the thumbnail images Thm #i in the proxy file. Therefore, as compared with the case where HEIF files storing master image are opened/closed, the time period for displaying a list screen is shortened to achieve quick display of the list screen.

Furthermore, the thumbnail images Thm #i that are not inter-coded are stored in the proxy file targeted for the index display, that is, in the present embodiment, the thumbnail image are intra-coded and stored, thereby preventing the processing performed for the index display from being redundant. Specifically, when a certain thumbnail image Thm #i is going to be displayed on a list screen, unlike the case described with reference to Fig. 31 in which the thumbnail image Thm #i that is inter-coded by long GOP is stored in a sequence file, it is unnecessary to decode another thumbnail image Thm #i' in order to decode the thumbnail image Thm #i.

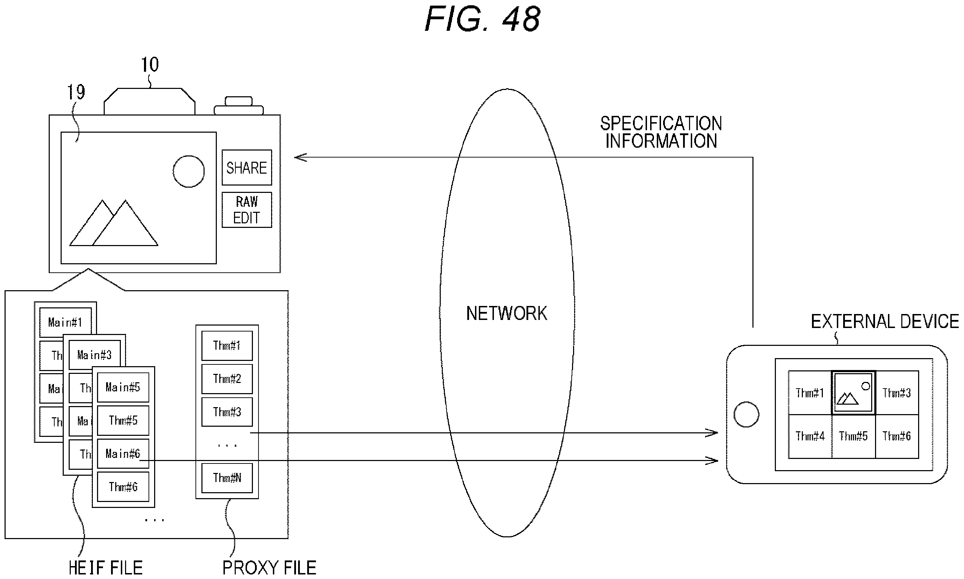

Fig. 48 is a view for explaining an example of index display employing a proxy file on an external device other than the digital camera 10.

In a case where index display is performed on an external device other than the digital camera 10, for example, instead of the HEIF file targeted for the index display, a proxy file generated by using the HEIF file as a proxy target file can be transmitted to the external device via a network.

The external device receives the proxy file from the digital camera 10. Then, as with the case where index display is performed on the digital camera 10 by using a proxy file, a list screen is generated and displayed on the external device by using the thumbnail image Thm #i stored in the proxy file.

Therefore, as with the case where index display is performed on the digital camera 10 by using a proxy file, index display can be appropriately performed on the external device. Therefore, the time period for displaying a list screen is shortened to achieve quick display of the list screen.

Moreover, it is made possible to prevent the processing performed for index display from being redundant.

Furthermore, the data amount of the proxy file storing a thumbnail image is smaller than the total data amount of the HEIF file storing the master image corresponding to the thumbnail image stored in the proxy file. Therefore, transmission of a proxy file from the digital camera 10 to the external device can be done in a shorter time than transmission of a HEIF file as described with reference to Fig. 32.

Consequently, it is made possible to improve responsiveness from when the user requests index display on an external device until a list screen is actually displayed.

Note that, after a list screen is displayed on the external device, the user can select any thumbnail image Thm #i in the list screen. When the user selects a thumbnail image Thm #i, the external device can transmit to the digital camera 10 the specification information of the master image Main #i that corresponds to the thumbnail image Thm #i and is associated with the thumbnail image Thm #i in the proxy file. The digital camera 10 can acquire the master image Main #i in the HEIF file as specified by the specification information from the external device or, for example, a RAW image in the RAW file corresponding to the master image Main #i as already associated external data, and transmit the acquired image to the external device for display.

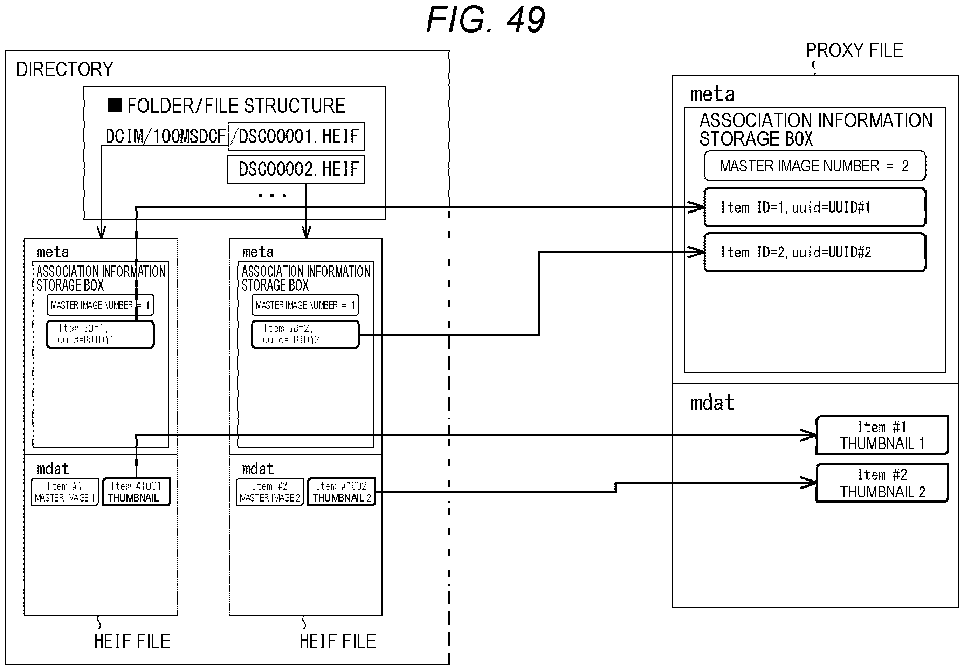

Fig. 49 is a view for explaining an example of selection of a HEIF file serving as a proxy target file.

In the proxy file generation processing, for example, as shown in Fig. 41, a plurality of collection files in which master images and thumbnail images of one frame (or more) are stored can be selected as proxy target files to generate a proxy file.

Furthermore, for example, as shown in Fig. 42, (at least) one collection file in which master images and thumbnail images of a plurality of frames are stored can be selected as a proxy target file to generate a proxy file.

Moreover, for example, as shown in Fig. 43, (at least) one sequence file can be selected as a proxy target file to generate a proxy file.

In addition, as shown in Fig. 49, a HEIF file stored in a specific directory can be selected as a proxy target file to generate a proxy file.

In Fig. 49, the DCIM directory exists in the root directory and the 100MSDCF directory exists in the DCIM directory. In addition, HEIF files in the 100MSDCF directory are selected as proxy target files to generate a proxy file.

In Fig. 49, the 100MSDCF directory stores two collection files (HEIF files) having file names "DSC00001.HEIF" and "DSC00002.HEIF", each of which stores a master image and a thumbnail image of one frame. Then, a proxy file is generated by using the two collection files as proxy target files.

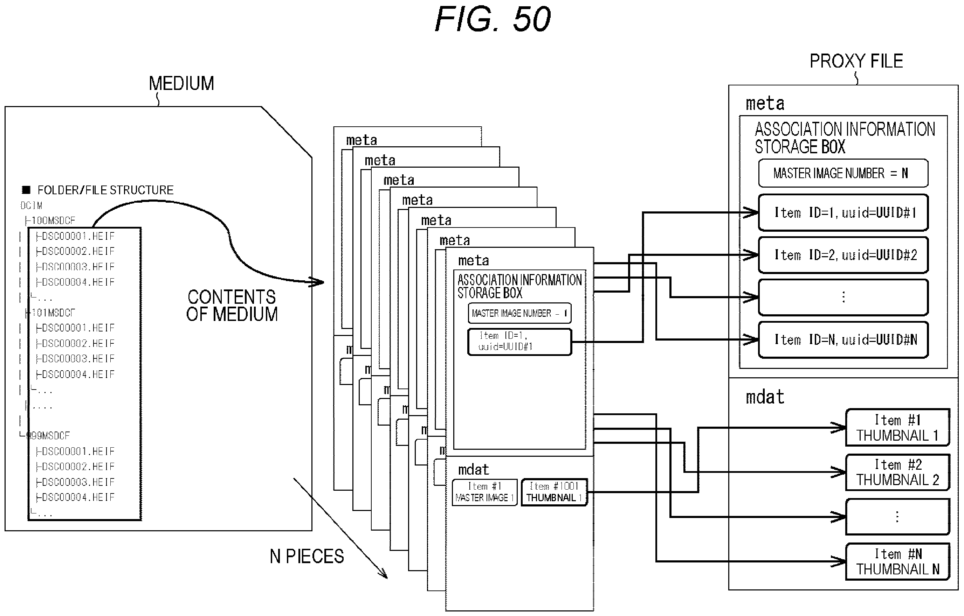

Fig. 50 is a view for explaining another example of selection of a HEIF file serving as a proxy target file.

As shown in Fig. 50, for example, a proxy file can be generated by selecting, as a proxy target file, a HEIF file stored in a certain medium (for example, the medium 14 attached to the digital camera 10).

In Fig. 50, the DCIM directory exists in the root directory in the medium, and the 100MSDCF directory, the 101MSDCF directory, ..., and the 999MSDCF directory exist in the DCIM directory. In addition, HEIF files in the 100MSDCF to 999MSDCF directories are selected as proxy target files to generate a proxy file.

In Fig. 50, the 100MSDCF to 999MSDCF directories store, as a whole, N collection files (HEIF files) each storing a master image and a thumbnail image of one frame, and a proxy file is generated by using such N collection files as proxy target files.

### <Proxy file generation processing for generating proxy file of first mode and addition processing for adding thumbnail image to proxy file>

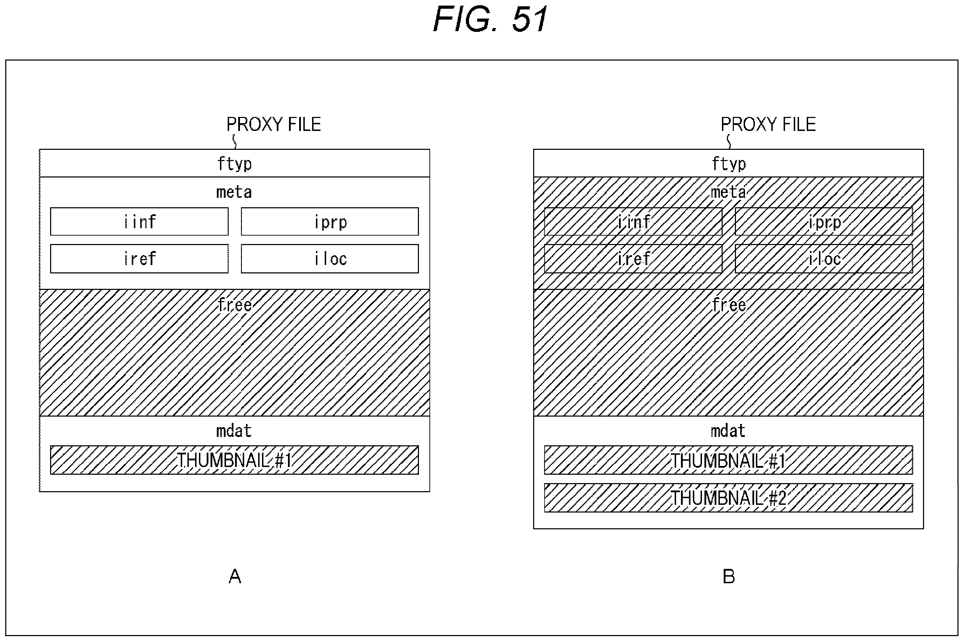

Fig. 51 is a view for explaining proxy file generation processing for generating a proxy file of the first mode and addition processing for adding a thumbnail image to the proxy file.

Fig. 51 shows an example of the structure of a proxy file of the first mode.

A of Fig. 51 shows an example of the structure of a proxy file that has been generated. Note here that it is assumed that the proxy file that has been generated stores a thumbnail image of one master image that is stored in a proxy target file.

For generating a proxy file, the file control unit 43 generates, as a proxy file, for example, a normal collection file that has the free box including an empty area (patting area) and has the mdat box in which a thumbnail image #1 of one master image stored in a proxy target file is stored as a proxy item.

The free box is a box capable of storing any data. The capacity of (the empty area of) the free box is determined according to, for example, the number of thumbnail images (planned) to be stored in the proxy file.

In Fig. 51, the free box is provided in a file hierarchy level between the meta box and the mdat box. However, the free box can also be provided in the meta box.

B of Fig. 51 shows an example of the structure of the proxy file to which a thumbnail image of another master image has been added.

A thumbnail image can be added to the proxy file that has already been generated. The process of adding a thumbnail image to the proxy file that has already been generated is also referred to as addition processing.

In a case where a thumbnail image #2 of another master image is to be stored in a proxy file that has already been generated, such as, for example, the proxy file illustrated in A of Fig. 51, the file control unit 43 stores the thumbnail image #2 of another master image as a proxy item by adding the thumbnail image #2 after the thumbnail image #1, which is already stored in the mdat box in the proxy file.

Moreover, the file control unit 43 rewrites the meta box to the state where metadata of the thumbnail image #2 as a proxy item is added, and reduces the capacity (size) of the free box by an increase in the capacity of the meta box increased by the rewriting. A thumbnail image of still another master image is added to the proxy file in a similar manner.

In a case where a thumbnail image as a proxy item is added after a proxy file is generated, it is necessary to add metadata of the additional thumbnail image to the meta box in the proxy file. In this case, in a case where no measure for adding metadata is taken, an offset of data already stored in the mdat box may be shifted when metadata is added to the proxy file.

In a case where the offset of the data stored in the mdat box is shifted, it is necessary to calculate an offset shift amount for each piece of the data stored in the mdat box and rewrite the iloc box with an offset reflecting the shift amount, which increases a load on the addition processing for adding a thumbnail image to a proxy file.

For this reason, in the present embodiment, the free box is provided in a proxy file when the proxy file is generated. Then, in a case where the addition processing for adding a thumbnail image to the proxy file is performed, metadata is added by using the free box, thereby preventing an offset of the data already stored in the mdat box from being shifted.

Note that, in the addition processing, the thumbnail image # 2 is stored (written) after the thumbnail image #1 already stored in the mdat box in the proxy file. Therefore, the addition itself of the thumbnail image #2 to the mdat box neither consumes (any empty area in) the free box nor causes any offset of the thumbnail image #1 already stored in the mdat box to be shifted.

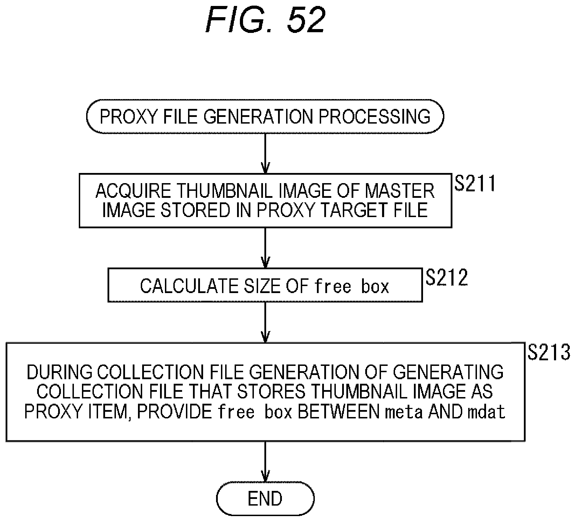

Fig. 52 is a flowchart for explaining an example of proxy file generation processing for generating a proxy file of the first mode.

In step S211, the file control unit 43 acquires, as a thumbnail image to be stored in the proxy file as a proxy item, the thumbnail image of the master image stored in the proxy target file, and the process proceeds to step S212.

For example, in a case where the proxy target file is a collection file or a sequence file in which all thumbnail images are intra-coded and stored, the file control unit 43 reads a thumbnail image from the collection file or sequence file serving as a proxy target file, thereby acquiring the thumbnail image as a proxy item to be stored in the proxy file.

In addition, for example, in a case where the proxy target file is a sequence file in which thumbnail images are inter-coded by long GOP and stored, the file control unit 43 generates a thumbnail image from the sequence file serving as a proxy target file, thereby acquiring the thumbnail image.

Specifically, for example, the file control unit 43 generates a YUV thumbnail image from the master image (or the RAW image corresponding to the master image) stored in the sequence file serving as a proxy target file and intra codes the thumbnail image, thereby acquiring the thumbnail image as a proxy item to be stored in the proxy file. Alternatively, the file control unit 43 decodes and intra codes an inter-coded YUV thumbnail image that is stored in a sequence file serving as a proxy target file, thereby acquiring the thumbnail image as a proxy item to be stored in the proxy file.

In step S212, the file control unit 43 calculates the size of the free box to be provided in the proxy file, and the process proceeds to step S213.

For example, the file control unit 43 determines the maximum value of the number of thumbnail images to be stored in the proxy file (hereinafter also referred to as the maximum number of thumbnails). Then, the file control unit 43 calculates, in accordance with the maximum number of thumbnails, the size of the free box allowing the metadata of at least the maximum number of thumbnails to be stored so that thumbnail images of the maximum number of thumbnails can be stored in the proxy file without shifting an offset of data stored in the mdat box in the proxy file.

The maximum number of thumbnails can be determined in accordance with, for example, the remaining capacity of the medium (such as the medium 14) in which the proxy target file and the proxy file are recorded.

Furthermore, assuming that, in contrast to continuous shooting by which a plurality of pictures is taken in a single shutter operation on the digital camera 10, taking one picture (image) is called single shooting, the maximum number of thumbnails can be determined in accordance with, for example, the imaging mode of the digital camera 10, where the imaging mode is either continuous shooting mode or single shooting mode and can be set for each of HEIF files as proxy target files.

Furthermore, the maximum number of thumbnails can be determined in accordance with, for example, a determined maximum number of master images that can be stored in one HEIF file serving as a proxy target file.

In addition, the maximum number of thumbnails can be determined in accordance with, for example, the number of master images having good evaluation, the evaluation being made by the file control unit 43 on master images stored in a proxy target file. In the evaluation of the master image, for example, by obtaining information regarding image quality such as S/N and sharpness of the master image, and the master image having the S/N, the sharpness, or the like equal to or greater than a threshold value can be determined as the master image having good evaluation.

In addition, the maximum number of thumbnails can be determined in accordance with a plurality of factors such as the remaining capacity of the medium described above.

Furthermore, in a case where a HEIF file stored in a predetermined directory or in a predetermined medium serves as a proxy target file, the maximum number of thumbnails can be determined in accordance with, for example, a determined maximum number of master images that can be stored in one HEIF file that is stored in a predetermined directory or in a predetermined medium and serves as a proxy target file.

In step S213, the file control unit 43 generates, as a proxy file, a normal collection file which includes the free box having the size calculated in step S212 and in which the thumbnail image of the master image stored in the proxy target file is stored as a proxy item in the mdat box, and the proxy file generation processing ends.

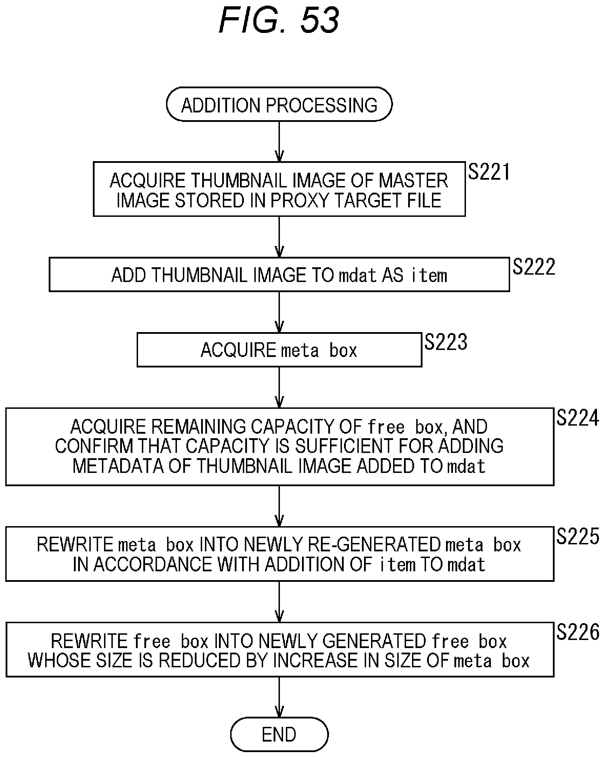

Fig. 53 is a flowchart for explaining an example of addition processing for adding a thumbnail image to a proxy file of the first mode.

In a case where a proxy file already exists, when a thumbnail image is to be added to the proxy file, the addition processing is performed on the proxy file as the target of the addition processing.

In step S221, the file control unit 43 acquires, as a thumbnail image being a proxy item to be added to the proxy file targeted for the addition processing (hereinafter also referred to as an additional thumbnail image), a thumbnail image of a master image stored in the proxy target file, and the process proceeds to step S222. The additional thumbnail image can be acquired in step S221 in a similar manner to step S211 in Fig. 52.

In step S222, the file control unit 43 adds the additional thumbnail image as a proxy item to the mdat box in the proxy file targeted for the addition processing, and the process proceeds to step S223.

In step S223, the file control unit 43 acquires the meta box by reading the meta box from the proxy file targeted for the addition processing, and the process proceeds to step S224.

In step S224, the file control unit 43 acquires the remaining capacity of the free box in the proxy file targeted for the addition processing, and confirms that the remaining capacity is sufficient for adding metadata of the additional thumbnail image, and then the process proceeds to step S225.

Note that, in step S224, in a case where the remaining capacity of the free box is insufficient for adding metadata of the additional thumbnail image, for example, information indicating such insufficiency is displayed on the liquid crystal panel 19, and the addition processing ends. Moreover, in this case, the proxy file generation processing for generating a new proxy file storing the additional thumbnail image can be performed.

In step S225, in accordance with the addition of the additional thumbnail image as a proxy item to the mdat box in the proxy file targeted for the addition processing, the file control unit 43 re-generates a new meta box by adding metadata of the additional thumbnail image to the meta box acquired in step S223. Moreover, the file control unit 43 rewrites the meta box in the proxy file targeted for the addition processing with the new meta box, and the process proceeds from step S225 to step S226.

In step S226, the file control unit 43 generates a new free box whose size is reduced by an increase in a size (data amount) of the new meta box with respect to the meta box before rewriting. Moreover, the file control unit 43 rewrites the free box in the proxy file targeted for the addition processing with the new free box, and the addition processing ends.

### <Proxy file generation processing for generating proxy file of second or third mode and addition processing for adding thumbnail image to proxy file>

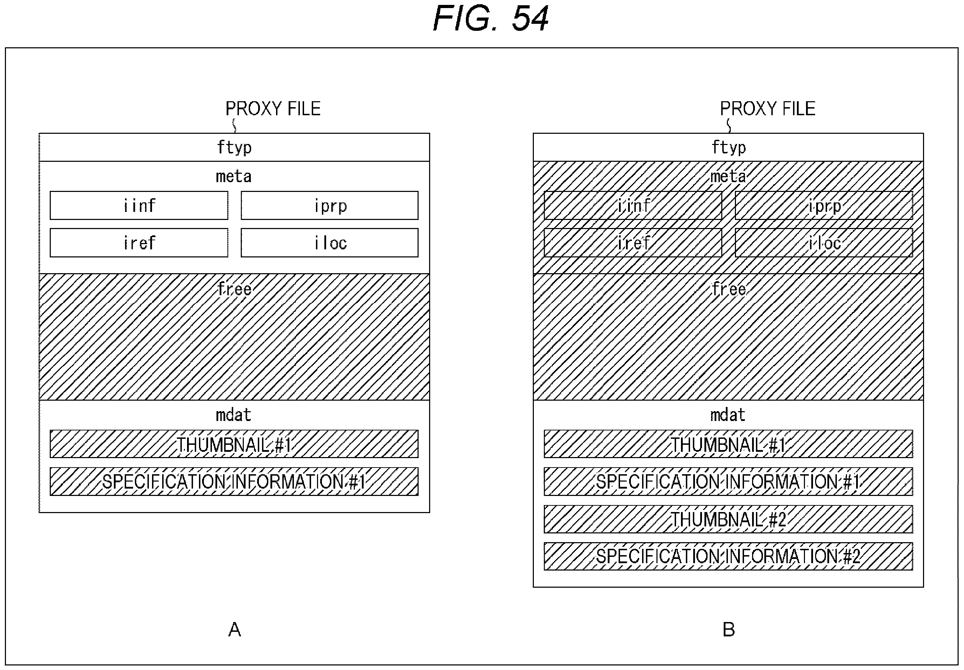

Fig. 54 is a view for explaining proxy file generation processing for generating a proxy file of the second or third mode and addition processing for adding a thumbnail image to the proxy file.

Fig. 54 shows an example of the structure of a proxy file of the second or third mode.

A of Fig. 54 shows an example of the structure of a proxy file that has been generated. Note here that it is assumed that the proxy file that has been generated stores a thumbnail image of one master image that is stored in a proxy target file.

For generating a proxy file, the file control unit 43 generates, as a proxy file, for example, an association-type collection file that has the free box and has the mdat box in which a thumbnail image #1 of one master image stored in a proxy target file is stored as a proxy item.

In the association-type collection file as a proxy file, the thumbnail image #1 is stored in association with (specification information of) the thumbnail image #1. That is, in the association-type collection file as a proxy file, the relationship information relating to the association between the thumbnail image in the proxy file and the specification information of the master image, as external data, corresponding to the thumbnail image is stored.

As the relationship information, for example, there is association information stored in the association information storage box of the first association-type collection file in Fig. 10.

Moreover, as the relationship information, for example, there are association information as the item Item #201 stored in the mdat box of the second association-type collection file in Fig. 11, the infe box for the item Item #201 stored in the iinf box of the meta box, an offset to a storage location of the item Item #201 stored in the iloc box in the iprp box of the meta box, and the like.

Furthermore, as the relationship information, for example, there are specification information as an item stored in the mdat box in the third association-type collection file in Fig. 12, and association information in which an item ID of a master image as an item stored in the cdsc box in the iref box in the meta box is correlated with an item ID of specification information as an item.

Moreover, as the relationship information, for example, there are the track #3 of the specification information stored in the mdat box of the association-type sequence file in Fig. 14, and a trak box that is stored in the moov box and manages the track #3 of the specification information.

In Fig. 54, the third association-type collection file is generated as a proxy file.

In addition, in A of Fig. 54, the specification information #1 is the specification information of the master image corresponding to the thumbnail image #1 and is part of the relationship information.

In the proxy file being the third association-type collection file, the specification information #1 is stored in the mdat box. Regarding the relationship information relating to the association between the thumbnail image #1 and the specification information #1, information other than the specification information #1, such as, for example, the association information correlating the item ID of the thumbnail image #1 with the item ID of the specification information #1 as stored in the cdsc box in the iref box in the meta box as described with reference to Fig. 12 and the metadata including an offset of the storage location of the specification information #1, is stored in the meta box in the proxy file being the third association-type collection file.

B of Fig. 54 shows an example of the structure of the proxy file to which a thumbnail image of another master image has been added.

In the addition processing for additionally storing a thumbnail image #2 of another master image in a proxy file that has already been generated, such as, for example, the proxy file illustrated in A of Fig. 54, the file control unit 43 stores, as a proxy item, the thumbnail image #2 of another master image by adding the thumbnail image #2 after the thumbnail image #1 and the specification information #1, which are already stored in the mdat box in the proxy file.

Moreover, the file control unit 43 rewrites the meta box to the state where metadata of the thumbnail image #2 as a proxy item is added.

The thumbnail image #2 of another master image is stored in association with the specification information #2 of the master image corresponding to the thumbnail image #2. That is, the file control unit 43 stores the specification information #2 as a proxy item by adding the specification information #2 to the thumbnail image #2 in the mdat box in the proxy file.

Moreover, the file control unit 43 rewrites the meta box to the state where metadata of the thumbnail image #2 as a proxy item is added and the relationship information, other than the specification information #2, relating to the association between the thumbnail image #2 and the specification information #2 is added.

The file control unit 43 reduces the capacity of the free box by an increase in the capacity of the meta box increased by rewriting the meta box. A thumbnail image of still another master image is added to the proxy file in a similar manner.

Note that, in the addition processing, the thumbnail image #2 and the specification information #2 are written so as to be added after the thumbnail image #1 and the specification information #1 already stored in the mdat box. Therefore, the addition itself of the thumbnail image #2 and the specification information #2 to the mdat box neither consumes the free box nor causes any offset of the thumbnail image #1 and the specification information #1 already stored in the mdat box to be shifted.

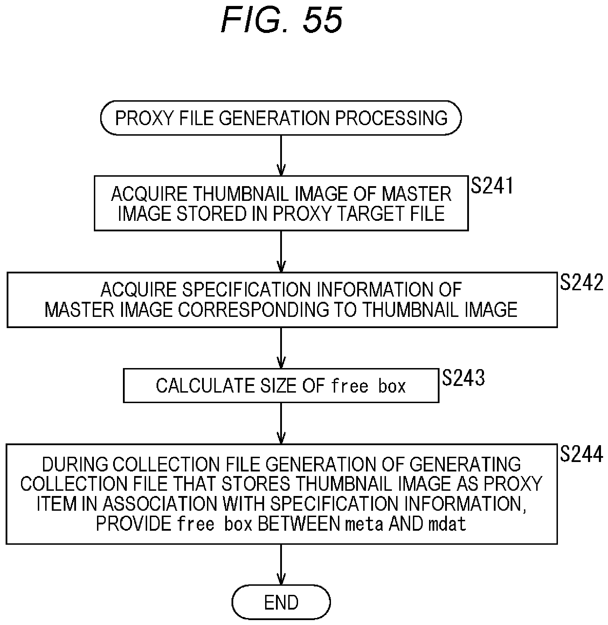

Fig. 55 is a flowchart for explaining an example of proxy file generation processing for generating a proxy file of the second or third mode.

As in step S211 in Fig. 52, in step S241, the file control unit 43 acquires, as a thumbnail image being a proxy item to be stored in the proxy file, the thumbnail image of the master image stored in the proxy target file, and the process proceeds to step S242.

In step S242, the file control unit 43 acquires specification information of the master image corresponding to the thumbnail image acquired in step S241, and the process proceeds to step S243.

In a case where the HEIF file as a proxy target file storing the master image is a collection file, as the specification information of the master image, for example, a uuid, a hash value calculated by using the master image as an input, a set of a URL assigned to the proxy target file storing the master image and an item ID of the master image, or the like can be adopted.

In a case where the HEIF file as a proxy target file storing the master image is a sequence file, as the specification information of the master image, for example, a uuid, a set of a URL assigned to the proxy target file storing the master image, a track ID of the track of the frame of the master image, and an ordinal number of the frame of the master image from the track head (frame offset), a set of a URL assigned to the proxy target file storing the master image and time information of the frame of the master image on a timeline, or the like can be adopted.

Note that, in a case where the specification information is capable of specifying the data (the master image) in the proxy target file when the specification information is written into the proxy target file, for example, in a case where the specification information is a uuid, in step S242, after specification information of the master image is generated, the specification information is written into the proxy target file storing the master image to be specified by the specification information.

In addition, in a case where the proxy target file is an association-type HEIF file and the specification information of external data associated with the master image stored in the association-type HEIF file is stored in the association-type HEIF file as a proxy target file, in step S242, the specification information of the external data can be acquired as the specification information of the master image. In this case, it is unnecessary to newly write the specification information of the master image because the specification information is already written into the association-type HEIF file as a proxy target file.

As in step S212 in Fig. 52, in step S243, the file control unit 43 calculates the size of the free box to be provided in the proxy file, and the process proceeds to step S244.

Note that, in a case where the proxy file of the second or third mode is subjected to the addition processing as a proxy file targeted for the addition processing, the meta box in the proxy file stores not only metadata of the thumbnail image to be added but also the relationship information (that is to be stored in the meta box) relating to the association between the thumbnail image to be added and the specification information of the master image corresponding to the thumbnail image.

Therefore, the size of the free box calculated in step S243 in Fig. 55 is greater than the size of the free box calculated in step S212 in Fig. 52 even if the maximum number of thumbnails of the thumbnail images stored in a proxy file of the second or third mode is the same as the maximum number of thumbnails of the thumbnail images stored in a proxy file of the first mode.

In step S244, the file control unit 43 generates, as a proxy file, an association-type collection file which includes the free box having the size calculated in step S243 and in which the thumbnail image of the master image stored in the proxy target file is stored as a proxy item in the mdat box, and the proxy file generation processing ends.

In the proxy file generation in step S244, an association-type collection file is generated as a proxy file in which the thumbnail image as a proxy item is stored in association with the specification information of the master image corresponding to the thumbnail image, that is, the specification information acquired in step S242. For example, there is generated a proxy file that stores, together with the thumbnail image as a proxy item, the relationship information relating to association between the thumbnail image and the specification information of the master image corresponding to the thumbnail image.

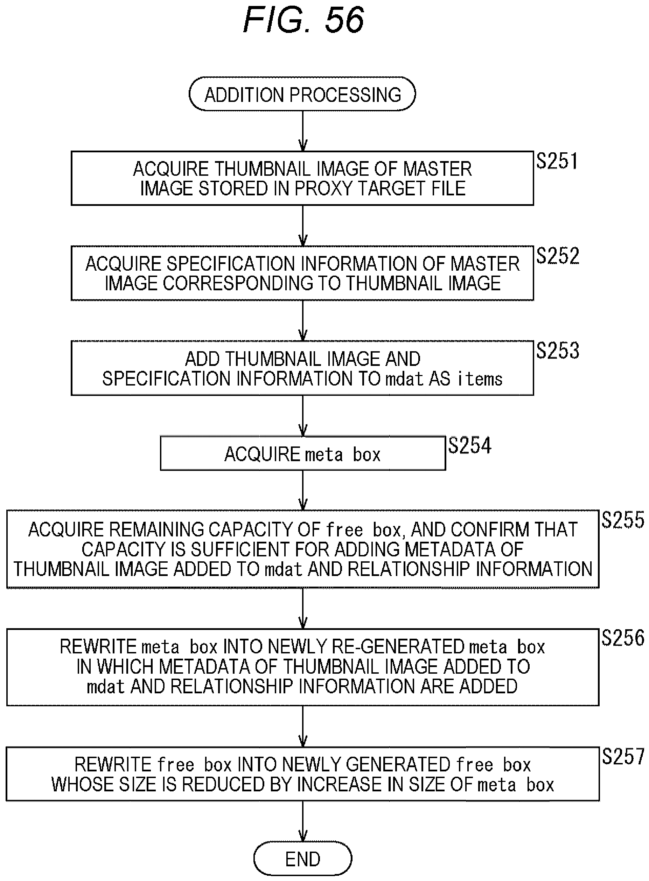

Fig. 56 is a flowchart for explaining an example of addition processing for adding a thumbnail image to a proxy file of the second or third mode.

In a case where a proxy file already exists, when a thumbnail image is to be added to the proxy file, the addition processing is performed on the proxy file as the target of the addition processing. It is assumed here that the proxy file targeted for the addition processing is, for example, a third association-type collection file (Fig. 12).

In step S251, the file control unit 43 acquires, as an additional thumbnail image being a proxy item to be added to the proxy file targeted for the addition processing, the thumbnail image of the master image stored in the proxy target file, and the process proceeds to step S252. The additional thumbnail image can be acquired in step S251 in a similar manner to step S241 in Fig. 55.

In step S252, the file control unit 43 performs processing similar to the processing in step S242 in Fig. 55, such as acquiring specification information of the master image corresponding to the additional thumbnail image acquired in step S241, and the process proceeds to step S253.

In step S253, the file control unit 43 adds, as proxy items, the additional thumbnail image and the specification information of the master image corresponding to the additional thumbnail image to the mdat box in the proxy file targeted for the addition processing, and the process proceeds to step S254.

In step S254, the file control unit 43 acquires the meta box by reading the meta box from the proxy file targeted for the addition processing, and the process proceeds to step S255.

In step S255, the file control unit 43 acquires the remaining capacity of the free box in the proxy file targeted for the addition processing, and confirms that the remaining capacity is sufficient for adding metadata of the additional thumbnail image and for adding the relationship information relating to association between the additional thumbnail image and the specification information of the master image corresponding to the additional thumbnail image (however, the specification information already added to the mdat box in step S253 is excluded here), and the process proceeds to step S256.

Note that, if it is confirmed in step S255 that the remaining capacity of the free box is insufficient for the addition, processing similar to the processing described with reference to step S224 in Fig. 53 may be performed.

In step S256, the file control unit 43 re-generates a new meta box from the meta box acquired in step S254.

The new meta box is generated by adding, to the meta box acquired in step S254, metadata of the additional thumbnail image as a proxy item added to the mdat box in the proxy file targeted for the addition processing, and the relationship information relating to association between the additional thumbnail image and the specification information of the master image corresponding to the additional thumbnail image (however, the specification information already added to the mdat box in step S253 is excluded here).

The file control unit 43 rewrites the meta box in the proxy file targeted for the addition processing with the new meta box, and the process proceeds from step S256 to step S257.

In step S257, the file control unit 43 generates a new free box whose size is reduced by an increase in a size (data amount) of the new meta box with respect to the meta box before rewriting. Moreover, the file control unit 43 rewrites the free box in the proxy file targeted for the addition processing with the new free box, and the addition processing ends.

### <Detection processing for detecting master image corresponding to thumbnail image stored in proxy file of second mode>

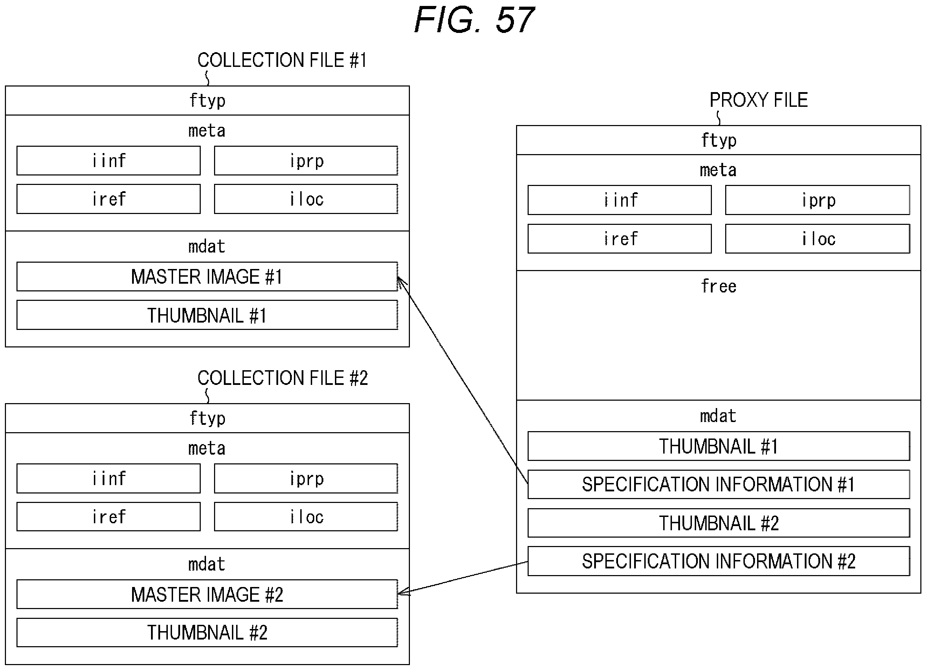

Fig. 57 is a view for explaining an example of detection processing for detecting a master image corresponding to a thumbnail image stored in a proxy file of the second mode.

Fig. 57 shows an example of a set of a proxy target file and a proxy file of the second mode.

In Fig. 57, a proxy file is generated with collection files #1 and #2 serving as proxy target files. As the proxy file, for example, a third association-type collection file is adopted.

In the collection file #i, the master image #i and the thumbnail image #i of the master image #i are stored in the mdat box.

In the proxy file, the thumbnail images #1 and #2 and the specification information #1 and #2 of the master images corresponding to the thumbnail images #1 and #2 are stored in such a way that the thumbnail image #i and the specification information #i are associated with each other.

The collection file #i serving as a proxy target file of the second mode does not include the specification information #i of the master image #i. Therefore, in the second mode, as the specification information #i of the master image #i, information capable of specifying the master image #i even if the specification information #i of the master image #i is not written to the collection file # i, such as, for example, a hash value obtained by using the master image #i as an input, is adopted.

Now, it is assumed that, for example, a hash value obtained by using the master image #i as an input is adopted as the specification information #i of the master image #i.

In this case, the master image #i that provides a hash value matching the hash value as the specification information #i associated with the thumbnail image #i as a proxy item in the proxy file, among hash values generated by using, as inputs, the master images #1 and #2 in the collection files #1 and #2 serving as proxy target files, respectively, is detected as the master image corresponding to the thumbnail image #i in the proxy file.

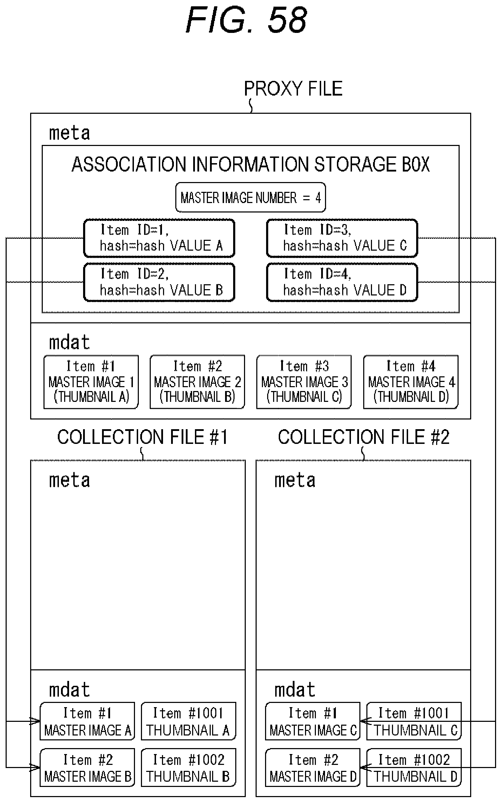

Fig. 58 is a view for further explaining an example of detection processing for detecting a master image corresponding to a thumbnail image stored in a proxy file of the second mode.

Fig. 58 shows an example of a set of a proxy target file and a proxy file of the second mode.

In Fig. 58, a proxy file is generated with collection files #1 and #2 serving as proxy target files. As the proxy file, for example, a first association-type collection file is adopted. As the collection files #1 and #2 serving as proxy target files, normal collection files are adopted.

In the collection file #1, master images A and B and thumbnail images A and B of the master images A and B are stored in the mdat box. In the collection file #2, master images C and D and thumbnail images C and D of the master images C and D are stored in the mdat box.

In the proxy file, the thumbnail images A to D and hash values #A to #D as specification information of the master images A to D are stored in such a way that the thumbnail images A to D are associated with the hash values #A to #D as specification information, respectively. That is, in the proxy file, the association information storage box stores association information that correlates item IDs of the thumbnail images A to D with the hash values #A to #D as specification information, respectively. The hash values #A to #D as specification information are hash values obtained by using the master images A to D as inputs, respectively.

In this case, the master image that provides a hash value matching the hash value as the specification information associated with a certain thumbnail image X (where X is any one of A to D) as a proxy item in the proxy file, among hash values generated by using, as inputs, the master images A and D in the collection files #1 and #2 serving as proxy target files, respectively, is detected as the master image corresponding to the thumbnail image X in the proxy file.

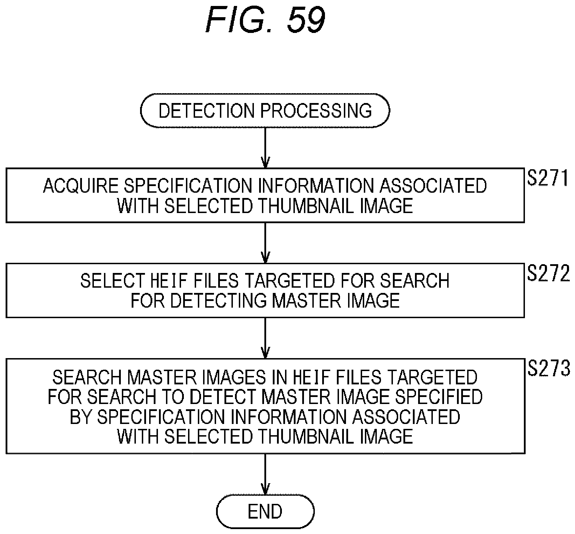

Fig. 59 is a flowchart for explaining an example of detection processing for detecting a master image corresponding to a thumbnail image stored in a proxy file of the second mode.

For example, the UI control unit 47 causes the file control unit 43 or the like to perform index display of generating a list screen using thumbnail images stored in the proxy file and displaying the list screen on the liquid crystal panel 19.

For example, the file control unit 43 generates a list of handles for identifying individual thumbnail images (that are master images for the proxy file) stored in the proxy file. The UI control unit 47 requests the file control unit 43 to perform index display of thumbnail images stored in the proxy file in response to, for example, an operation or the like by the user.

In response to the request made by the UI control unit 47 to perform index display, the file control unit 43 reads, from the proxy file, (frames of) thumbnail images identified by the handles in the handle list, and supplies the thumbnail images to the display control unit 46 via the encoding control unit 42.

The display control unit 46 generates a list screen of the thumbnail images from the file control unit 43 and displays the list screen on the liquid crystal panel 19.

Thereafter, for example, when the user selects a desired thumbnail image from the list screen, in step S271, the file control unit 43 acquires the specification information associated with the thumbnail image selected from the list screen (hereinafter also referred to as a selected thumbnail image) by reading the specification information from the proxy file, and the process proceeds to step S272.

That is, for example, the file control unit 43 specifies the handle of the selected thumbnail image (selected related image) in the handle list, and acquires the specification information associated with the selected thumbnail image identified by the handle by reading the specification information in the proxy file.

In step S272, the file control unit 43 selects HEIF files that are to be searched for detecting the master image, and the process proceeds to step S273.

Here, as described with reference to Figs. 49, 50, and the like, in the proxy file generation processing (and the addition processing), one or more collection files, one or more sequence files, HEIF files stored in a specific directory, or HEIF files in a specific medium can be selected as proxy target files.

The file control unit 43 selects, as the search target, HEIF files that are selected as proxy target files for the proxy file. Information necessary for specifying the proxy target files, such as, for example, information for specifying a specific directory or medium in a case where HEIF files stored in the specific directory or medium are selected as proxy target files can be stored in, for example, the meta box or the mdat box in the proxy file.

In step S273, the file control unit 43 searches the search target HEIF files for a master image to detect the master image specified by the specification information associated with the selected thumbnail image, and the detection processing ends.

For example, in a case where a hash value calculated by sha-256 or the like by using a master image as an input is adopted as specification information of the master image, the file control unit 43 obtains hash values calculated by using (individual) master images in the HEIF files as inputs for each of the search target HEIF files.

That is, for example, in a case where the search target HEIF files are collection files, the file control unit 43 obtains a list of item IDs of master images (master image list) in a collection file for each of the search target collection files.

Furthermore, for each item ID in the master image list, the file control unit 43 reads, from the mdat box, (data of) the master image as an item specified by the item ID, in accordance with the information in the iloc box in the search target collection file. The file control unit 43 calculates a hash value using, as an input, the master image read from the mdat box in the search target collection file.

Then, the file control unit 43 detects, as the master image corresponding to the selected thumbnail image, the master image #i providing a hash value that matches the hash value as the specification information associated with the selected thumbnail image.

### <Detection processing for detecting master image corresponding to thumbnail image stored in proxy file of third mode>

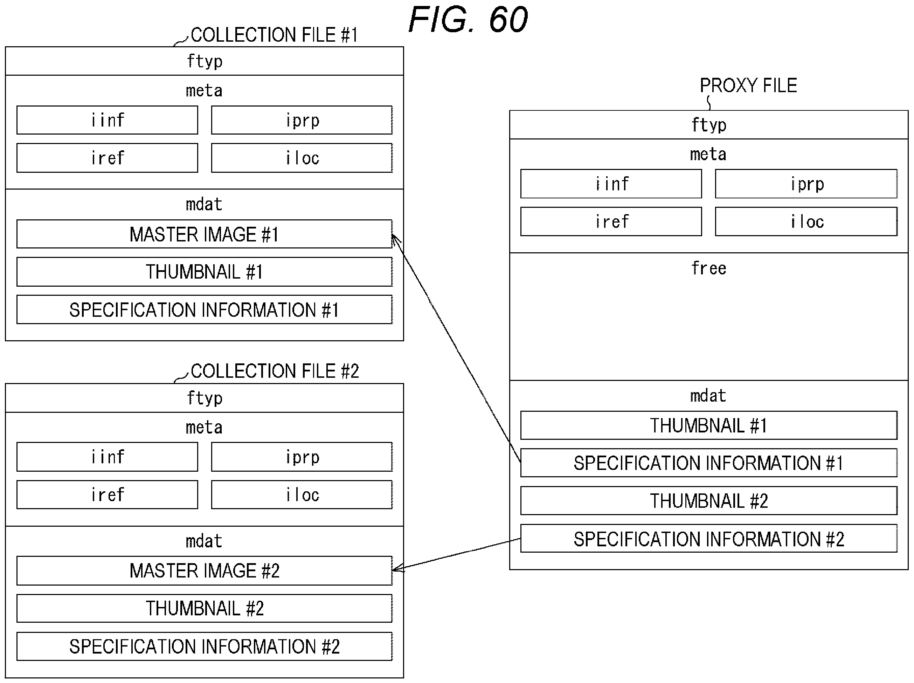

Fig. 60 is a view for explaining an example of detection processing for detecting a master image corresponding to a thumbnail image stored in a proxy file of the third mode.

Fig. 60 shows an example of a set of a proxy target file and a proxy file of the third mode.

In Fig. 60, a proxy file is generated with collection files #1 and #2 serving as proxy target files.

As the proxy file, for example, a third association-type collection file is adopted. A third association-type collection file is also adopted as the collection files #1 and #2 serving as proxy target files.

As with the case in Fig. 57, in the collection file #i, the master image #i and the thumbnail image #i of the master image #i are stored in the mdat box.

Moreover, in the collection file #i, the master image #i and the specification information #i of the master image #i are stored in such a way that the master image #i and the specification information #i are associated with each other.

In the proxy file, as with the case in Fig. 57, the thumbnail images #1 and #2 and the specification information #1 and #2 of the master images are stored in such a way that the thumbnail image #i and the specification information #i are associated with each other.

The collection file #i serving as a proxy target file of the third mode includes the specification information #i of the master image #i. Therefore, in the third mode, any information can be adopted as specification information of a master image as long as the specification information of the master image can be written into the collection file #i serving as a proxy target file.

Now, it is assumed that, for example, a uuid is adopted as the specification information #i of the master image #i

In this case, the master image #i, which is either one of the master images #1 and #2 in the collection files #1 and #2 as proxy target files, respectively, and which is associated with the uuid that matches the uuid as the specification information #i associated with the thumbnail image #i as a proxy item in the proxy file, is detected as the master image corresponding to the thumbnail image #i in the proxy file.

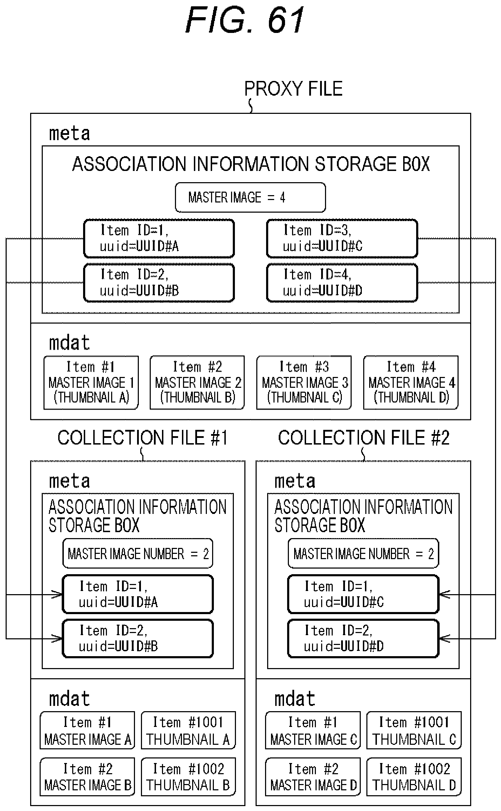

Fig. 61 is a view for further explaining an example of detection processing for detecting a master image corresponding to a thumbnail image stored in a proxy file of the third mode.

Fig. 61 shows an example of a set of a proxy target file and a proxy file of the third mode.

In Fig. 61, a proxy file is generated with collection files #1 and #2 serving as proxy target files.

As the proxy file, for example, a first association-type collection file is adopted. A first association-type collection file is also adopted as the collection files #1 and #2 serving as proxy target files.

In the collection file #1, master images A and B and thumbnail images A and B of the master images A and B are stored in the mdat box.

In addition, in the collection file #1, the association information storage box in the meta box stores association information that correlates item IDs of the master images A and B with UUIDs #A and #B, respectively, as the specification information of the master images A and B.

In the collection file #2, master images C and D and thumbnail images C and D of the master images C and D are stored in the mdat box.

In addition, in the collection file #2, the association information storage box in the meta box stores association information that correlates item IDs of the master images C and D with UUIDs #C and #D, respectively, as the specification information of the master images C and D.

In the proxy file, the thumbnail images A to D and hash values #A to #D as specification information of the master images A to D are stored in such a way that the thumbnail images A to D are associated with the hash values #A to #D as specification information, respectively.

That is, in the proxy file, the association information storage box stores association information that correlates item IDs of the thumbnail images A to D with the UUID #A to UUID #D as specification information, respectively.

In this case, the master image, which is one of the master images A to D in the collection files #1 and #2 as proxy target files, and which is associated with the specification information associated with a certain thumbnail image X as a proxy item in the proxy file, that is, the master image associated with the uuid that matches the uuid correlated with the item ID of the thumbnail image X in the association information storage box in the proxy file, is detected as the master image corresponding to the thumbnail image X in the proxy file.

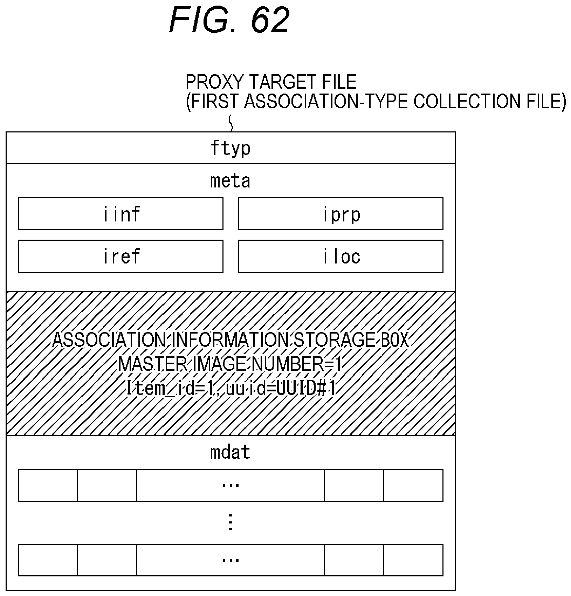

Fig. 62 is a view for explaining a first example of detection processing for detecting a master image corresponding to a thumbnail image stored in a proxy file of the third mode.

Fig. 62 shows an example of a proxy target file in a case where a first association-type collection file (Fig. 10) is adopted as the proxy target file in a set of a proxy target file and a proxy file of the third mode.

In the first example of the detection processing, it is assumed that a first association-type collection file is adopted as the proxy target file.

In a first association-type collection file as the proxy target file, the association information storage box is stored in the meta box. In the association information storage box in Fig. 62, information indicating that the number of master images is 1 is stored, and the item ID = 1 of the master image and the UUID #1 as the specification information of the master image are stored in correlation with each other.

In a case where a first association-type collection file is adopted as a proxy target file, the file control unit 43 detects, in the detection processing, the proxy target file in which the association information storage box stores the uuid that matches the uuid as the specification information associated with the selected thumbnail image in the proxy file.

Then, in the proxy target file, the file control unit 43 detects, as the master image corresponding to the selected thumbnail image, the master image of the item ID correlated with the uuid that matches the uuid as the specification information associated with the selected thumbnail image.

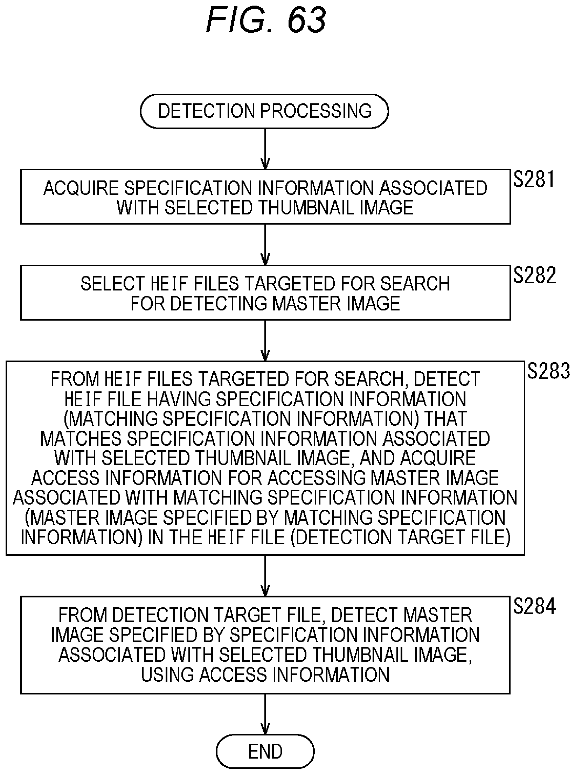

Fig. 63 is a flowchart for explaining a first example of detection processing for detecting a master image corresponding to a thumbnail image stored in a proxy file of the third mode.

For example, as described with reference to Fig. 59, the UI control unit 47 causes index display of generating a list screen using thumbnail images stored in the proxy file and displaying the list screen on the liquid crystal panel 19 to be performed.

Thereafter, for example, when the user selects a desired thumbnail image from the list screen, in step S281, the file control unit 43 acquires, as in step S271 in Fig. 59, the specification information associated with the selected thumbnail image selected from the list screen from the proxy file by reading the specification information, and the process proceeds to step S282.

In step S282, the file control unit 43 selects, as in step S272 in Fig. 59, HEIF files that are to be searched for detecting the master image, and the process proceeds to step S283.

In step S283, the file control unit 43 detects, from the search target HEIF files, the HEIF file in which the association information storage box stores the specification information that matches the specification information associated with the selected thumbnail image (hereinafter also referred to as matching specification information), as the detection target file for detecting a master image corresponding to the selected thumbnail image.

Moreover, the file control unit 43 acquires the access information for accessing the master image associated with the matching specification information (the master image specified by the matching specification information) in the detection target file by reading the access information from the association information storage box in the detection target file, and the process proceeds from step S283 to step S284.

As described with reference to Fig. 62, in the first example of the detection processing, a first association-type collection file is adopted as the proxy target file. Accordingly, in the first example of the detection processing, the detection target file is a first association-type collection file.

In the first association-type collection file as the detection target file, as described with reference to Fig. 62, the association information storage box stores the item ID of the master image and the specification information (a uuid or the like) of the master image in association with each other.

In the association information storage box in the first association-type collection file as the detection target file, the file control unit 43 acquires, as access information, the item ID (of the master image) associated with the matching specification information.

In step S284, the file control unit 43 uses the access information to detect, from the detection target file, the master image specified by the specification information associated with the selected thumbnail image, and the detection processing ends.

That is, the file control unit 43 detects, from the detection target file, the master image specified by the item ID as access information, by reading the master image as the master image specified by the specification information associated with the selected thumbnail image. The master image specified by the item ID as access information can be read from the detection target file as in a manner described with reference to Fig. 18.

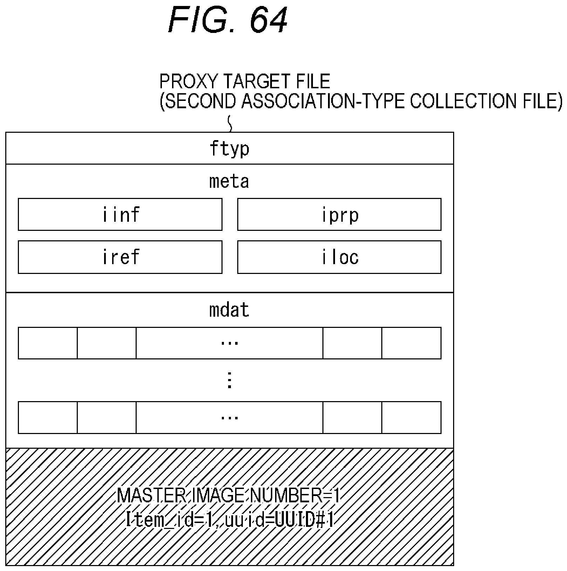

Fig. 64 is a view for explaining a second example of detection processing for detecting a master image corresponding to a thumbnail image stored in a proxy file of the third mode.

Fig. 64 shows an example of a proxy target file in a case where a second association-type collection file (Fig. 11) is adopted as the proxy target file in a set of a proxy target file and a proxy file of the third mode.

In the second example of the detection processing, it is assumed that a second association-type collection file is adopted as the proxy target file.

In the second association-type collection file as the proxy target file, the association information, which is stored in the association information storage box in a first association-type collection file and which includes the number of master images and the item ID of the master image correlated with a uuid as specification information of the master image, is stored as an item in the mdat box.

In a case where a second association-type collection file is adopted as a proxy target file, the file control unit 43 detects, in the detection processing, the proxy target file in which the mdat box stores association information including the uuid that matches the uuid as the specification information associated with the selected thumbnail image in the proxy file.

Then, in the proxy target file, the file control unit 43 detects, as the master image corresponding to the selected thumbnail image, the master image of the item ID correlated with the uuid that matches the uuid as the specification information associated with the selected thumbnail image.

In the second example of the detection processing for detecting the master image corresponding to the thumbnail image stored in a proxy file of the third mode, processing similar to the first example of the detection processing in Fig. 63 is performed.

Note that, however, in the second example of the detection processing, in step S283 in Fig. 63, with regard to the search target HEIF file (a second association-type collection file (Fig. 11)), the file control unit 43 acquires, as the item ID of the association information as an item, the item ID that is in the Infe box and that includes an item type of IDIF in the infe box in the iinf box.

Moreover, with regard to the search target HEIF file, the file control unit 43 searches the iloc box for the item ID of the association information as an item, and reads the offset and size correlated with the item ID.

Then, in accordance with the offset and size correlated with the item ID of the association information as an item, the file control unit 43 reads the association information as an item stored in the mdat box in the search target HEIF file.

As described above, the file control unit 43 detects, from the association information read from the search target HEIF file, the association information including the specification information (matching specification information) that matches the specification information associated with the selected thumbnail image.

Thereafter, the file control unit 43 detects, as a detection target file, the search target HEIF file that has, as an item, the association information including the matching specification information. Then, in the association information in the detection target file, the file control unit 43 acquires, as access information for accessing the master image, the item ID (of the master image) associated with the matching specification information.

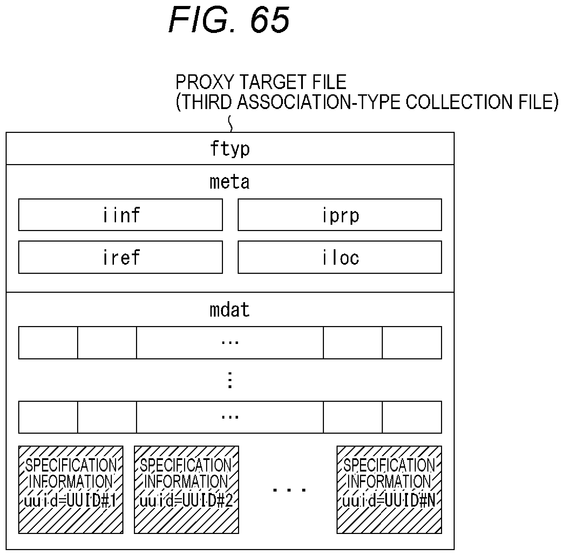

Fig. 65 is a view for explaining a third example of detection processing for detecting a master image corresponding to a thumbnail image stored in a proxy file of the third mode.

Fig. 65 shows an example of a proxy target file in a case where a third association-type collection file (Fig. 12) is adopted as the proxy target file in a set of a proxy target file and a proxy file of the third mode.

In the third example of the detection processing, it is assumed that a third association-type collection file is adopted as the proxy target file.

In the third association-type collection file as a proxy target file, a uuid as the specification information of the master image is stored as an item in the mdat box.

Moreover, association information correlating the item ID of the master image with the item ID of the specification information of the master image is stored in the cdsc box in the iref box in the meta box (Fig. 12) .

In a case where a third association-type collection file is adopted as a proxy target file, the file control unit 43 detects, in the detection processing, the proxy target file in which the mdat box stores the uuid that matches the uuid as the specification information associated with the selected thumbnail image in the proxy file.

Then, in the proxy target file, the file control unit 43 detects, as the master image corresponding to the selected thumbnail image, the master image of the item ID correlated with the uuid that matches the uuid as the specification information associated with the selected thumbnail image.

In the third example of the detection processing for detecting the master image corresponding to the thumbnail image stored in a proxy file of the third mode, processing similar to the first example of the detection processing in Fig. 63 is performed.

Note that, however, in the third example of the detection processing, in step S283 in Fig. 63, with regard to the search target HEIF file (a third association-type collection file (Fig. 12)), the file control unit 43 acquires, as the item ID of the specification information as an item, the item ID that is in the Infe box and that includes an item type of IDIF in the infe box in the iinf box.

Moreover, with regard to the search target HEIF file, the file control unit 43 searches the iloc box for the item ID of the specification information as an item, and reads the offset and size correlated with the item ID.

Then, in accordance with the offset and size correlated with the item ID of the specification information as an item, the file control unit 43 reads the specification information as an item stored in the mdat box in the search target HEIF file.

As described above, the file control unit 43 detects, from the specification information read from the search target HEIF file, the specification information (matching specification information) that matches the specification information associated with the selected thumbnail image.

Thereafter, the file control unit 43 detects, as a detection target file, the search target HEIF file that has the matching specification information as an item.

Then, in the association information in the cdsc box in the iref box in the meta box (Fig. 12) in the detection target file, the file control unit 43 acquires, as access information for accessing the master image, the item ID (of the master image) correlated with the item ID of the matching specification information as an item, that is, the item ID being the reference source correlated with the reference destination, which is the item ID of the matching specification information as an item.

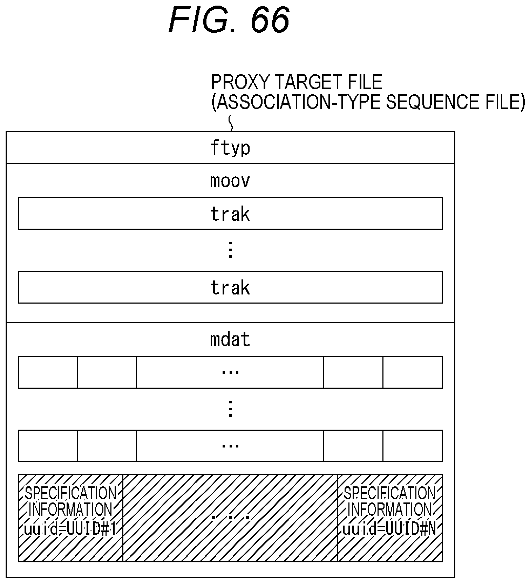

Fig. 66 is a view for explaining a fourth example of detection processing for detecting a master image corresponding to a thumbnail image stored in a proxy file of the third mode.

Fig. 66 shows an example of a proxy target file in a case where an association-type sequence file (Fig. 14) is adopted as the proxy target file in a set of a proxy target file and a proxy file of the third mode.

In the fourth example of the detection processing, it is assumed that an association-type sequence file is adopted as a proxy target file.

In the association-type sequence file as a proxy target file, the track of a uuid as specification information of a master image is stored in the mdat box. In the association-type sequence file as a proxy target file, (a frame of) a master image in a track of the master image (hereinafter also referred to as a master image track) and a uuid in a track of specification information (hereinafter also referred to as a specification information track) as specification information of the master image are associated with each other and stored in accordance with time information on a timeline (or the ordinal number in arrangement on a track).

In a case where an association-type sequence file is adopted as a proxy target file, the file control unit 43 detects, in the detection processing, the proxy target file in which the mdat box stores the uuid that matches the uuid as the specification information associated with the selected thumbnail image in the proxy file.

Then, in the proxy target file, the file control unit 43 detects, as the master image corresponding to the selected thumbnail image, the master image specified by the uuid as the specification information associated with the selected thumbnail image.

In the fourth example of the detection processing for detecting the master image corresponding to the thumbnail image stored in a proxy file of the third mode, processing similar to the first example of the detection processing in Fig. 63 is performed.

Note that, however, in the fourth example of the detection processing, in step S283 in Fig. 63, with regard to the search target HEIF file (an association-type sequence file (Fig. 14)), the file control unit 43 searches the trak boxes in the moov box for a trak box in which a type in the tref box is cdsc, as a trak box managing a specification information track.

Moreover, the file control unit 43 reads the track ID of the specification information track from the tkhd box in the trak box managing the specification information track, and reads the specification information in the track of the track ID, that is, the specification information in the specification information track. As described above, the file control unit 43 detects, from the specification information read from the search target HEIF file, the specification information (matching specification information) that matches the specification information associated with the selected thumbnail image.

Thereafter, the file control unit 43 detects, as a detection target file, the search target HEIF file that has the specification information track including the matching specification information.

Then, in the detection target file, the file control unit 43 acquires, as access information for accessing the master image, the track ID (the track ID of the master image track) in the tref box in the trak box (Fig. 14) managing a specification information track including the matching specification information and also acquires the time information of the matching specification information on a timeline (or the ordinal number of the matching specification information arranged in the specification information track).

### <Proxy file generation processing and addition processing performed in case where thumbnail image to be stored in proxy file is generated when proxy target file is generated>

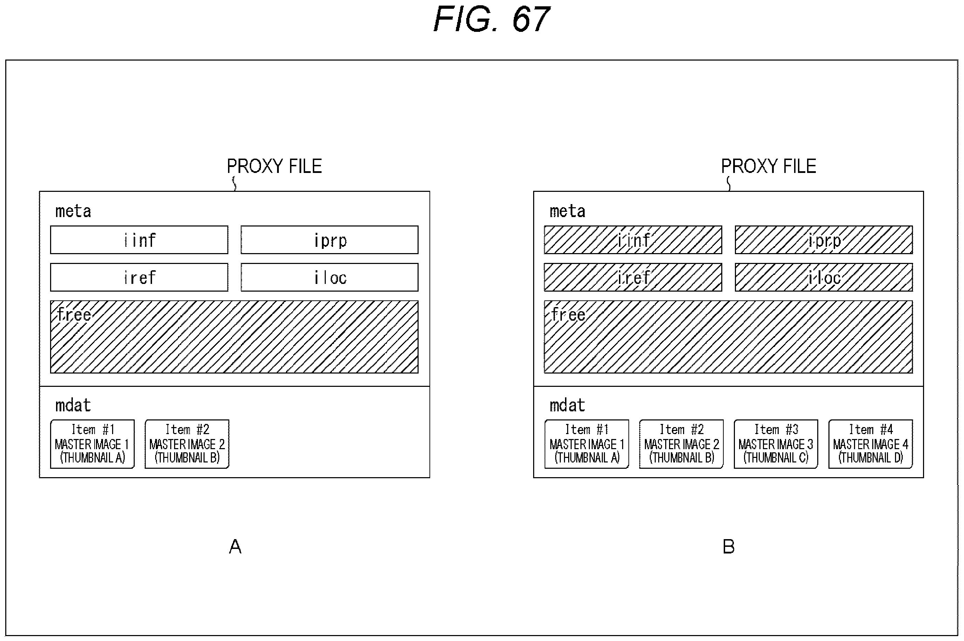

Fig. 67 is a view for explaining proxy file generation processing and addition processing performed in a case where a thumbnail image to be stored in a proxy file of the first mode is generated when a proxy target file is generated.

Fig. 67 shows an example of the structure of a proxy file of the first mode.

A of Fig. 67 shows an example of the structure of a proxy file generated by the proxy file generation processing.

In the proxy file generation processing performed in a case where a thumbnail image to be stored in a proxy file of the first mode is generated when a proxy target file is generated, the file control unit 43 generates, by using an original image used for generating a thumbnail image stored in the proxy target file (hereinafter also referred to as the present thumbnail image) when generating the proxy target file, a thumbnail image to be stored in the proxy file of the first mode (hereinafter also referred to as a proxy thumbnail image).

As the proxy thumbnail image, an image (copy) being the same as the present thumbnail image may be adopted, or an image being different from the present thumbnail image in image quality, data amount, or the like (an image having lower image quality or a smaller data amount) may be adopted.

For example, in a case where the YUV signal format of the present thumbnail image is 4:2:2, 4:2:0 can be adopted as the signal format of the proxy thumbnail image. Furthermore, for example, in a case where the gradation of the present thumbnail image is 10 bits, 8 bits can be adopted as the signal format of the proxy thumbnail image. Moreover, for example, as the proxy thumbnail image, an image having a smaller size (number of pixels) than the present thumbnail image can be adopted.

Furthermore, for example, for the proxy thumbnail image, coding with a compression ratio different from the compression ratio for the present thumbnail image, for example, coding with a compression ratio higher than the compression ratio for the present thumbnail image can be adopted.

Moreover, for example, for the proxy thumbnail image, a codec of a different type from the codec for the present thumbnail image can be adopted. For example, HEVC can be adopted for the present thumbnail image and JPEG can be adopted for the proxy thumbnail image.

The file control unit 43 generates, for example, as a proxy file of the first mode, a normal collection file having the free box and the mdat box that stores, as a proxy item, a proxy thumbnail image as a thumbnail image of the master image stored in the proxy target file.

In A of Fig. 67, a proxy file storing (as master images) two proxy thumbnail images A and B has been generated by the proxy file generation processing.

Furthermore, the free box is provided in the meta box. Metadata of the proxy thumbnail images A and B is stored in the meta box in the proxy file generated by the proxy file generation processing.

B of Fig. 67 shows an example of the structure of the proxy file to which a proxy thumbnail image of another master image has been added by the addition processing.

In the addition processing performed in a case where a proxy thumbnail image to be stored in a proxy file of the first mode is generated when a proxy target file is generated, for example, while a HEIF file generated after the proxy file is generated serves as a new proxy target file, a proxy thumbnail image of a master image stored in the new proxy target file is added to the proxy file that has already been generated (hereinafter also referred to as an existing proxy file).

That is, the file control unit 43 generates a proxy thumbnail image to be added to the proxy file of the first mode, using an original image used for generating the present thumbnail image that is stored in a new proxy target file when the new proxy target file is generated.

In B of Fig. 67, two proxy thumbnail images C and D have been added (as master images) by the addition processing after the proxy thumbnail images A and B that are already stored in the mdat box in the existing proxy file in A of Fig. 67.

When adding the proxy thumbnail images C and D, the file control unit 43 rewrites the meta box to the state where metadata of the proxy thumbnail images C and D is added, and reduces the capacity of the free box by an increase in the capacity of the meta box increased by the rewriting. A proxy thumbnail image of a master image stored in a still new proxy target file is added to the existing proxy file in a similar manner.

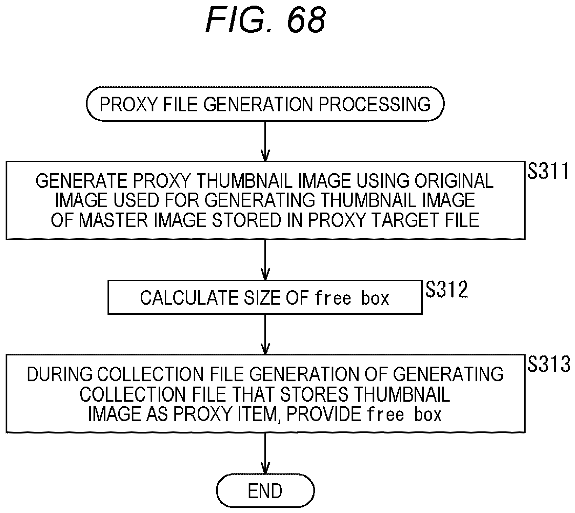

Fig. 68 is a flowchart for explaining an example of proxy file generation processing performed in a case where a thumbnail image to be stored in a proxy file of the first mode is generated when a proxy target file is generated.

In a case where a HEIF file is generated and a proxy file generation processing execution condition for executing the proxy file generation processing using the HEIF file as a proxy target file is satisfied, the file control unit 43 executes the following proxy file generation processing.

As the proxy file generation processing execution condition, for example, the fact that the proxy file is not present in the directory or medium storing the proxy target file can be adopted. In addition, as the proxy file generation processing execution condition, for example, in a case where the proxy file is present in the directory or medium storing the proxy target file, the fact that the number of thumbnail images stored in the proxy file has reached an upper limit can be adopted.

In step S311, the file control unit 43 generates a proxy thumbnail image to be stored in a proxy file of the first mode using, for example, the original image used for generating the present thumbnail image stored in the proxy target file, and the process proceeds to step S312.

Note that, in step S311, the present thumbnail image generated from the original image may be acquired (copied) as it is as a proxy thumbnail image, instead of generating a proxy thumbnail image from the original image.

As in step S212 in Fig. 52, in step S312, the file control unit 43 calculates the size of the free box to be provided in the proxy file, and the process proceeds to step S313.

In step S313, the file control unit 43 generates, as a proxy file, a normal collection file which includes the free box having the size calculated in step S312 and in which the proxy thumbnail image generated in step S311, that is, for example, the thumbnail image of the master image stored in the proxy target file, is stored as a proxy item in the mdat box, and the proxy file generation processing ends.

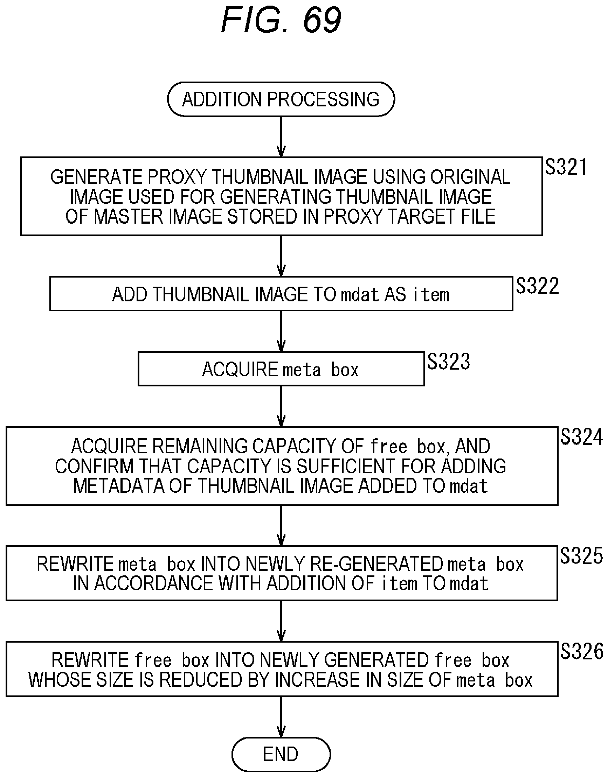

Fig. 69 is a flowchart for explaining an example of addition processing performed in a case where a thumbnail image to be stored in a proxy file of the first mode is generated when a proxy target file is generated.

In a case where a HEIF file is generated and an addition processing execution condition for executing the addition processing using the HEIF file as a proxy target file is satisfied, the file control unit 43 executes the following addition processing.

As the addition processing execution condition, for example, the fact that the proxy file is present in the directory or medium storing the proxy target file and the number of thumbnail images stored in the proxy file has not reached an upper limit can be adopted.

The addition processing is performed with the already existing proxy file (existing proxy file) targeted for the addition processing.

As in step S311 in Fig. 68, in step S321, the file control unit 43 generates a proxy thumbnail image as an additional thumbnail image, and the process proceeds to step S322.

In steps S322 to S326, processing similar to that in steps S222 to S226 respectively in Fig. 53 is performed, and the addition processing ends.

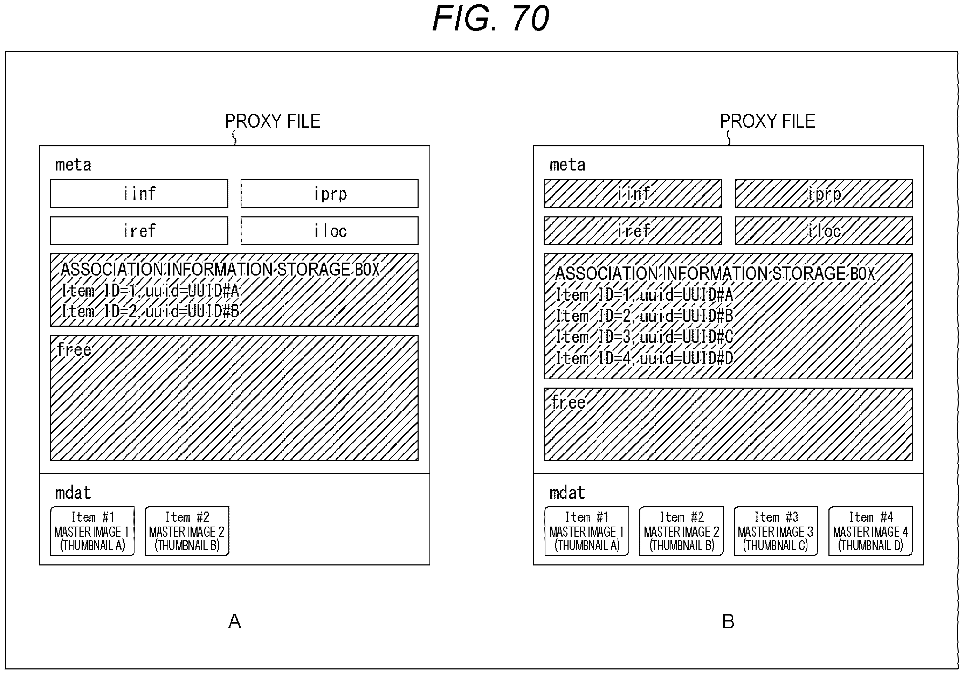

Fig. 70 is a view for explaining proxy file generation processing and addition processing performed in a case where a thumbnail image to be stored in a proxy file of the third mode is generated when a proxy target file is generated.

Note that description of the proxy file generation processing and the addition processing performed in a case where a thumbnail image to be stored in a proxy file of the second mode is generated when a proxy target file is generated is omitted because the processing is similar to that for a proxy file of the third mode except that specification information is not written into the proxy target file and that information not needed to be written into the proxy target file is adopted as specification information.

Fig. 70 shows an example of the structure of a proxy file of the third mode.

A of Fig. 70 shows an example of the structure of a proxy file generated by the proxy file generation processing.

In the proxy file generation processing performed in a case where a thumbnail image to be stored in a proxy file of the third mode is generated when a proxy target file is generated, as with the proxy file generation processing for generating a proxy file of the first mode (Fig. 67), the file control unit 43 generates a proxy thumbnail image to be stored in the proxy file of the third mode by using an original image used for generating the present thumbnail image stored in the proxy target file.

The file control unit 43 generates, for example, as a proxy file of the third mode, an association-type collection file having the free box and the mdat box that stores, as a proxy item, a proxy thumbnail image as a thumbnail image of the master image stored in the proxy target file.

In A of Fig. 70, a proxy file storing (as master images) two proxy thumbnail images A and B has been generated by the proxy file generation processing. Furthermore, the free box is provided in the meta box. Metadata of the proxy thumbnail images A and B is stored in the meta box in the proxy file generated by the proxy file generation processing.

Moreover, in Fig. 70, a first association-type collection file is adopted as the proxy file, and the proxy file has the association information storage box in the meta box. The association information storage box stores the association information that correlates the item ID = 1 of the proxy thumbnail image A with the UUID #A as specification information of the master image corresponding to the proxy thumbnail image A and the association information that correlates the item ID = 2 of the proxy thumbnail image B with the UUID #B as specification information of the master image corresponding to the proxy thumbnail image B.

B of Fig. 70 shows an example of the structure of the proxy file to which a proxy thumbnail image of another master image has been added by the addition processing.

In the addition processing performed in a case where a proxy thumbnail image to be stored in a proxy file of the third mode is generated when a proxy target file is generated, for example, while a HEIF file generated after the proxy file is generated serves as a new proxy target file, a proxy thumbnail image of a master image stored in the new proxy target file is added to the existing proxy file that has already been generated.

That is, the file control unit 43 generates a proxy thumbnail image to be added to the proxy file of the third mode, using an original image used for generating the present thumbnail image that is stored in a new proxy target file when the new proxy target file is generated.

In B of Fig. 70, two proxy thumbnail images C and D have been added (as master images) by the addition processing after the proxy thumbnail images A and B that are already stored in the mdat box in the existing proxy file in A of Fig. 70.

When adding the proxy thumbnail images C and D, the file control unit 43 rewrites the meta box to the state where metadata of the proxy thumbnail images C and D is added.

Moreover, the file control unit 43 rewrites (the association information storage box in) the meta box to the state where the association information that correlates the item ID = 3 of the proxy thumbnail image C with the UUID #C as specification information of the master image corresponding to the proxy thumbnail image C and the association information that correlates the item ID = 4 of the proxy thumbnail image D with the UUID #D as specification information of the master image corresponding to the proxy thumbnail image D are added.

Then, the file control unit 43 reduces the capacity of the free box by an increase in the capacity of the meta box increased by rewriting the meta box. A proxy thumbnail image of a master image stored in a still new proxy target file is added to the existing proxy file in a similar manner.

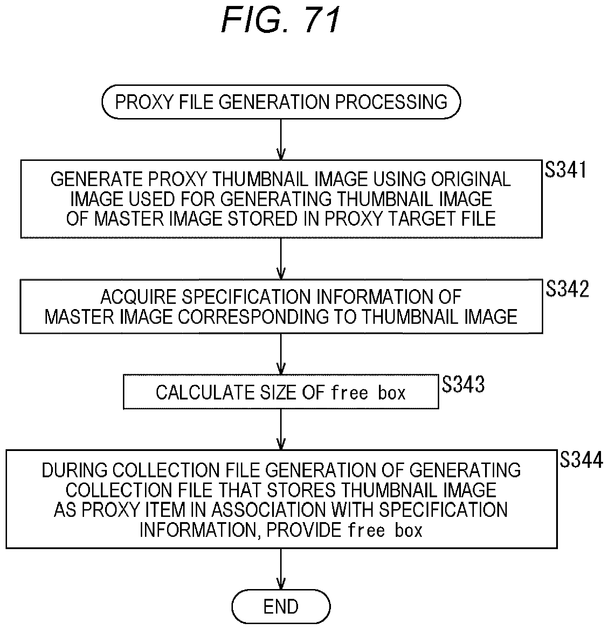

Fig. 71 is a flowchart for explaining an example of proxy file generation processing performed in a case where a thumbnail image to be stored in a proxy file of the third mode is generated when a proxy target file is generated.

In a case where a HEIF file is generated, the HEIF file is used as a proxy target file, and a proxy file generation processing execution condition as described with reference to Fig. 68 is satisfied, the file control unit 43 executes the following proxy file generation processing.

As in step S311 in Fig. 68, in step S341, the file control unit 43 generates a proxy thumbnail image, and the process proceeds to step S342.

In step S342, the file control unit 43 acquires, for example, a uuid by generating the uuid as specification information of the master image corresponding to the proxy thumbnail image generated in step S341, and the process proceeds to step S343.

As in step S243 in Fig. 55, in step S343, the file control unit 43 calculates the size of the free box to be provided in the proxy file, and the process proceeds to step S344.

In step S344, the file control unit 43 generates, as a proxy file, for example, a first association-type collection file which includes the free box having the size calculated in step S343 and in which the proxy thumbnail image generated in step S341, that is, the thumbnail image of the master image stored in the proxy target file, is stored as a proxy item in the mdat box, and the proxy file generation processing ends.

In the proxy file generation in step S344, a first association-type collection file is generated in which the proxy thumbnail image is stored in association with the specification information, for example, the uuid acquired in step S342, of the master image corresponding to the proxy thumbnail image.

That is, there is generated, as a proxy file, a first association-type collection file in which the proxy thumbnail image is stored in the mdat box and the association information correlating the item ID of the proxy thumbnail image with the uuid of the master image corresponding to the proxy thumbnail image is stored in the association information storage box.

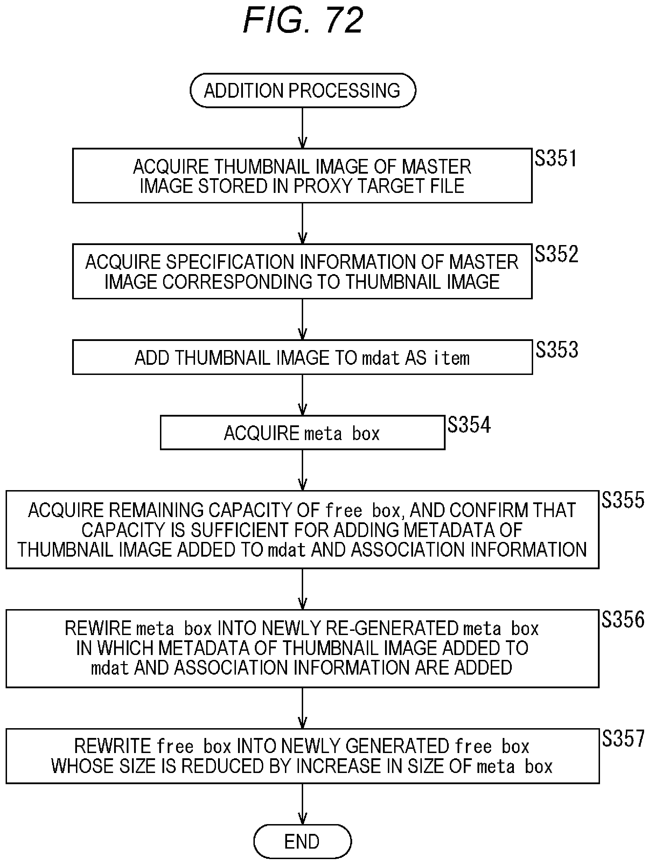

Fig. 72 is a flowchart for explaining an example of addition processing performed in a case where a thumbnail image to be stored in a proxy file of the third mode is generated when a proxy target file is generated.

In a case where a HEIF file is generated, the HEIF file is used as a proxy target file, and an addition processing execution condition as described with reference to Fig. 69 is satisfied, the file control unit 43 executes the following addition processing.

The addition processing is performed with the already existing proxy file (existing proxy file) targeted for the addition processing. It is assumed here that the existing proxy file is a first association-type collection file, as with the cases in Figs. 70 and 71.

As in step S321 in Fig. 69, in step S351, the file control unit 43 generates a proxy thumbnail image as an additional thumbnail image, and the process proceeds to step S352.

In step S352, the file control unit 43 acquires, for example, a uuid as specification information of the master image corresponding to the additional thumbnail image generated in step S351, and the process proceeds to step S353.

In step S353, the file control unit 43 adds the additional thumbnail image as a proxy item to the mdat box in the proxy file targeted for the addition processing, and the process proceeds to step S354.

In step S354, the file control unit 43 acquires the meta box by reading the meta box from the proxy file targeted for the addition processing, and the process proceeds to step S355.

In step S355, the file control unit 43 acquires the remaining capacity of the free box in the proxy file targeted for the addition processing, and confirms that the remaining capacity is sufficient for adding metadata of the additional thumbnail image and for adding the association information correlating the item ID of the additional thumbnail image with the uuid as specification information of the master image corresponding to the additional thumbnail image, and the process proceeds to step S356.

Note that, if it is confirmed in step S355 that the remaining capacity of the free box is insufficient for the addition, processing similar to the processing described with reference to step S224 in Fig. 53 may be performed.

In step S356, the file control unit 43 re-generates a new meta box from the meta box acquired in step S354.

The new meta box is generated by adding, to the meta box acquired in step S354, metadata of the additional thumbnail image as a proxy item added to the mdat box in the proxy file targeted for the addition processing, and by adding, to the association information storage box in the meta box, the association information correlating the item ID of the additional thumbnail image with the uuid as specification information of the master image corresponding to the additional thumbnail image.

The file control unit 43 rewrites the meta box in the proxy file targeted for the addition processing with the new meta box, and the process proceeds from step S356 to step S357.

In step S357, the file control unit 43 generates a new free box whose size is reduced by an increase in a size of the new meta box with respect to the meta box before rewriting. Moreover, the file control unit 43 rewrites the free box in the proxy file targeted for the addition processing with the new free box, and the addition processing ends.

### <Proxy file generation processing and addition processing in which already existing HEIF file is used as proxy target file>

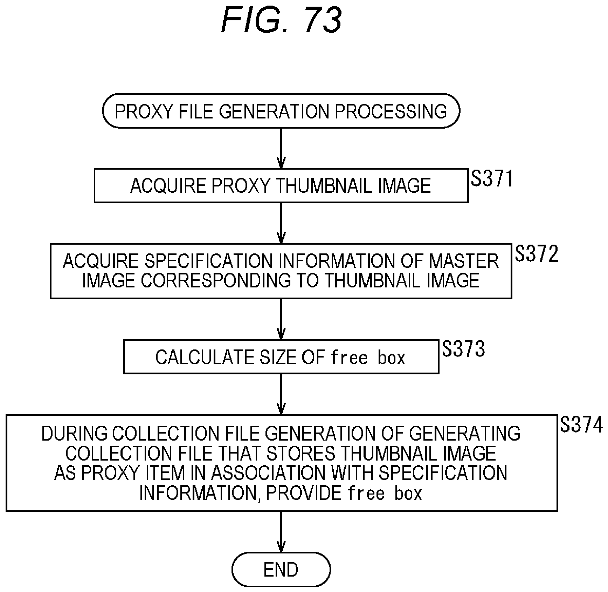

Fig. 73 is a flowchart for explaining an example of proxy file generation processing in which an already existing HEIF file is used as a proxy target file.

For example, in a case where the user or an application makes a request for generation of a proxy file and a proxy file generation processing execution condition as described with reference to Fig. 68 is satisfied, the file control unit 43 executes the following proxy file generation processing. It is assumed here that, in the proxy file generation processing, a proxy file of the second or third mode, which is a first association-type collection file, is generated, for example.

In step S371, the file control unit 43 selects, for example, (all or some of) HEIF files already existing in a predetermined directory or medium, as a proxy target file. Moreover, the file control unit 43 acquires, as a proxy thumbnail image, a thumbnail image of a master image in the proxy target file, and the process proceeds from step S371 to step S372.

The file control unit 43 acquires, for example, a copy of the present thumbnail image of the master image stored in the proxy target file, as a proxy thumbnail image. Furthermore, the file control unit 43 generates a proxy thumbnail image by, for example, thinning the master image stored in the proxy target file or the present thumbnail image, converting the signal format of the master image or the present thumbnail image, re-coding the master image or the present thumbnail image, or the like.

In step S372, the file control unit 43 acquires, for example, a uuid by generating the uuid as specification information of the master image corresponding to the proxy thumbnail image generated in step S371, and the process proceeds to step S373.

As in step S243 in Fig. 55, in step S373, the file control unit 43 calculates the size of the free box to be provided in the proxy file, and the process proceeds to step S374.

In step S374, the file control unit 43 generates, as a proxy file, for example, a first association-type collection file which includes the free box having the size calculated in step S373 and in which the proxy thumbnail image generated in step S371 is stored as a proxy item in the mdat box, and the proxy file generation processing ends.

In the proxy file generation in step S374, a first association-type collection file is generated in which the proxy thumbnail image is stored in association with the uuid acquired in step S372 as specification information of the master image corresponding to the proxy thumbnail image.

That is, there is generated, as a proxy file, a first association-type collection file in which the proxy thumbnail image is stored in the mdat box and the association information correlating the item ID of the proxy thumbnail image with the uuid of the master image corresponding to the proxy thumbnail image is stored in the association information storage box.

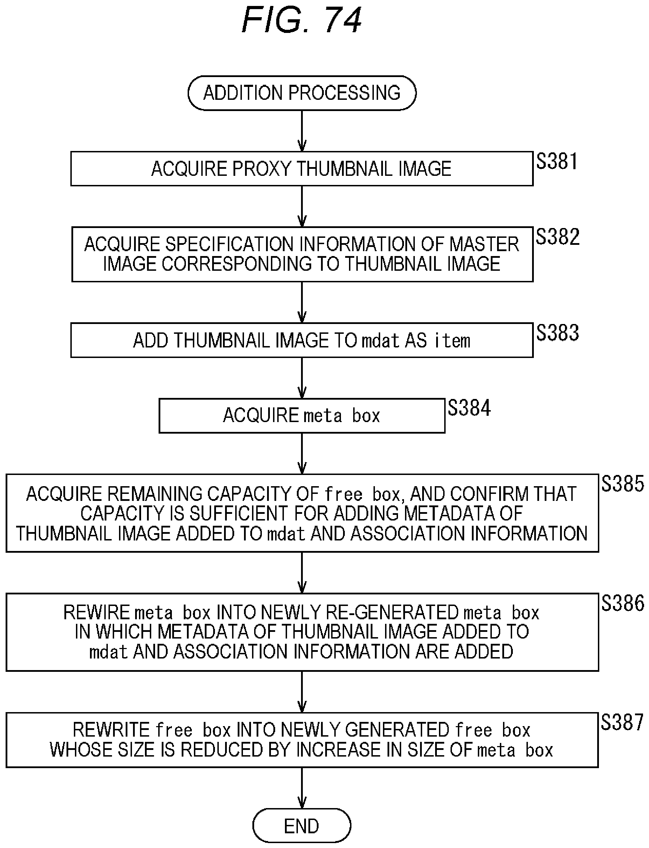

Fig. 74 is a flowchart for explaining an example of addition processing in which an already existing HEIF file is used as a proxy target file.

For example, in a case where the user or an application makes a request for generation of a proxy file and an addition processing execution condition as described with reference to Fig. 69 is satisfied, the file control unit 43 executes the following addition processing. The addition processing is performed with the already existing proxy file (existing proxy file) targeted for the addition processing. It is assumed here that the existing proxy file is a proxy file of the second or third mode, which is a first association-type collection file.

In step S381, using, for example, (all or some of) HEIF files already exiting in a predetermined directory or medium as a proxy target file, the file control unit 43 acquires, as an additional thumbnail image, a proxy thumbnail image of a master image stored in the proxy target file, and the process proceeds to step S382.

The file control unit 43 acquires, for example, a copy of the present thumbnail image of the master image stored in the proxy target file, as an additional thumbnail image. Furthermore, the file control unit 43 generates an additional thumbnail image by, for example, thinning the master image stored in the proxy target file or the present thumbnail image, converting the signal format of the master image or the present thumbnail image, re-coding the master image or the present thumbnail image, or the like.

In step S382, the file control unit 43 acquires, for example, a uuid as specification information of the master image corresponding to the additional thumbnail image generated in step S381, and the process proceeds to step S383.

In step S383, the file control unit 43 adds the additional thumbnail image as a proxy item to the mdat box in the existing proxy file targeted for the addition processing, and the process proceeds to step S384.

In step S384, the file control unit 43 acquires the meta box by reading the meta box from the proxy file targeted for the addition processing, and the process proceeds to step S385.

In step S385, the file control unit 43 acquires the remaining capacity of the free box in the proxy file targeted for the addition processing, and confirms that the remaining capacity is sufficient for adding metadata of the additional thumbnail image and for adding the association information correlating the item ID of the additional thumbnail image with the uuid as specification information of the master image corresponding to the additional thumbnail image, and the process proceeds to step S386.

Note that, if it is confirmed in step S385 that the remaining capacity of the free box is insufficient for the addition, processing similar to the processing described with reference to step S224 in Fig. 53 may be performed.

In step S386, the file control unit 43 re-generates a new meta box from the meta box acquired in step S384. The new meta box is generated by adding, to the meta box acquired in step S384, metadata of the additional thumbnail image as a proxy item added to the mdat box in the existing proxy file targeted for the addition processing, and by adding, to the association information storage box in the meta box, the association information correlating the item ID of the additional thumbnail image with the uuid as specification information of the master image corresponding to the additional thumbnail image.

The file control unit 43 rewrites the meta box in the proxy file targeted for the addition processing with the new meta box, and the process proceeds from step S386 to step S387.

In step S387, the file control unit 43 generates a new free box whose size is reduced by an increase in a size of the new meta box with respect to the meta box before rewriting. Moreover, the file control unit 43 rewrites the free box in the proxy file targeted for the addition processing with the new free box, and the addition processing ends.

### <Description of computer applied with present technology>

Next, a series of processes of each block constituting the above-described file control unit 43 and another signal processing unit 13 (Fig. 1) can be performed by hardware or software. In a case where the series of processes is performed by software, a program that forms the software is installed in a computer and the like.

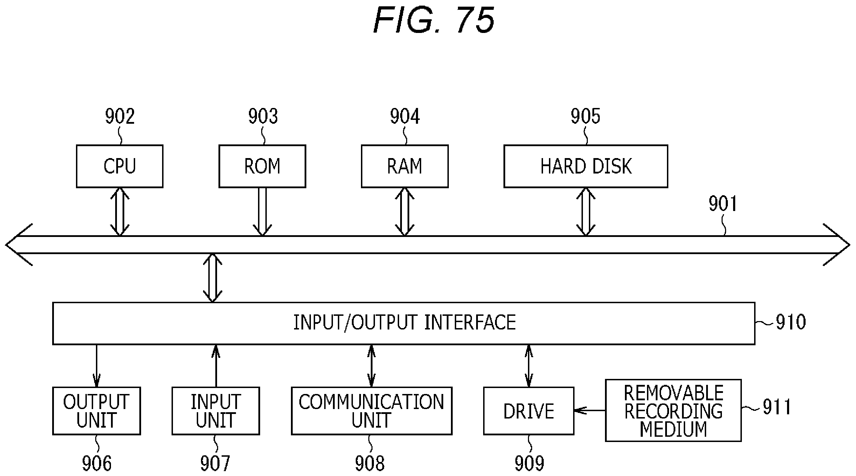

Fig. 75 is a block diagram illustrating a configuration example of an embodiment of a computer to be installed with a program for executing the series of processes described above.

The program can be recorded in advance on a hard disk 905 or a ROM 903 as a recording medium built in the computer.

Alternatively, the program can be stored (recorded) in a removable recording medium 911 driven by a drive 909. Such a removable recording medium 911 can be provided as so-called package software. Here, examples of the removable recording medium 911 include, for example, a flexible disk, a compact disc read only memory (CD-ROM), a magneto optical (MO) disk, a digital versatile disc (DVD), a magnetic disk, a semiconductor memory, and the like.

Note that the program can be installed in the computer from the removable recording medium 911 as described above, or can be downloaded to the computer via a communication network or a broadcast network and installed in the built-in hard disk 905. That is, for example, the program can be wirelessly transferred from a download site to the computer via an artificial satellite for digital satellite broadcasting, or can be transferred by wire to the computer via a network such as a local area network (LAN) and the Internet.

The computer incorporates a central processing unit (CPU) 902, and an input/output interface 910 is connected to the CPU 902 via a bus 901.

When a command is inputted by a user operating an input unit 907 or the like via the input/output interface 910, in response to this, the CPU 902 executes a program stored in the read only memory (ROM) 903. Alternatively, the CPU 902 loads a program stored in the hard disk 905 into a random access memory (RAM) 904 and executes the program.

Therefore, the CPU 902 performs the processing according to the above-described flowchart or the processing performed by the configuration of the above-described block diagram. Then, as necessary, the CPU 902 causes a processing result to be outputted from an output unit 906 or transmitted from a communication unit 908 via the input/output interface 910, for example, and further to be recorded on the hard disk 905, and the like.

Note that the input unit 907 includes a keyboard, a mouse, a microphone, and the like. Furthermore, the output unit 906 includes a liquid crystal display (LCD), a speaker, and the like.

Here, in this specification, the processing performed by the computer according to the program needs not necessarily be performed in chronological order with the order described as the flowchart. That is, the processing performed by the computer according to the program includes processing executed in parallel or individually (for example, parallel processing or processing by an object).

Furthermore, the program may be processed by one computer (processor), or may be distributed and processed by a plurality of computers. Moreover, the program may be transferred to a remote computer to be executed.

Moreover, in this specification, a system means a set of a plurality of components (devices, modules (parts), and the like), and it does not matter whether or not all components are in a same housing. Therefore, a plurality of devices housed in separate housings and connected via a network, and a single device with a plurality of modules housed in one housing are both systems.

Note that the embodiment of the present technology is not limited to the above-described embodiment, and various modifications can be made without departing from the scope of the present technology.

For example, the present technology can have a cloud computing configuration in which one function is shared and processed in cooperation by a plurality of devices via a network.

Furthermore, each step described in the above-described flowchart can be executed by one device, and also shared and executed by a plurality of devices.

Moreover, in a case where one step includes a plurality of processes, the plurality of processes included in the one step can be executed by one device, and also shared and executed by a plurality of devices.

Furthermore, the effects described in this specification are merely examples and are not limited, and other effects may be present.

Note that the present technology can have the following configurations.

<1> A file processing device including:
   a file control unit configured to generate a proxy file storing a related image related to an image in a high efficiency image file format (HEIF) file, the proxy file being another HEIF file.
<2> The file processing device according to <1>, in which
   the file control unit generates, as the proxy file, a collection file which is a HEIF file in an image item format and in which the related image is stored as an item.
<3> The file processing device according to <2>, in which
   the file control unit generates the proxy file storing association information that associates the related image with specification information specifying the image corresponding to the related image.
<4> The file processing device according to <3>, in which
   the file control unit generates the proxy file storing the association information in which an item ID specifying the related image is correlated with the specification information.
<5> The file processing device according to <4>, in which
   the file control unit generates the proxy file in which the association information is stored in a meta box or an mdat box.
<6> The file processing device according to <3>, in which
   the file control unit generates the proxy file in which
   the specification information is stored, as an item, in an mdat box in the proxy file, and
   the association information is stored in a meta box, the association information correlating an item ID specifying the related image with an item ID specifying the specification information stored in the mdat box.
<7> The file processing device according to any one of <1> to <6>, in which
   the related image is different from the image in image quality or data amount.
<8> The file processing device according to any one of <1> to <6>, in which
   the related image is different from the image in number of pixels or in size and same as the image in content, is different from the image in signal format and same as the image in content, or is different from the image in gradation and same as the image in content.
<9> The file processing device according to any one of <1> to <6>, in which
   the HEIF file stores the image and a thumbnail image of the image, and
   the related image is: the thumbnail image stored in the HEIF file; an image for which coding with a compression ratio different from the compression ratio for the thumbnail image is adopted; or an image for which a codec different from the codec for the thumbnail image is adopted.
<10> A file processing method including:
   generating a proxy file storing a related image related to an image in a high efficiency image file format (HEIF) file, the proxy file being another HEIF file.
<11> A program for causing a computer to function as:
   a file control unit configured to generate a proxy file storing a related image related to an image in a high efficiency image file format (HEIF) file, the proxy file being another HEIF file.
<12> A file processing device including:
   a file control unit configured to detect an image in a high efficiency image file format (HEIF) file, the image corresponding to a selected related image selected from a related image that is related to the image and stored in a proxy file being another HEIF file.
<13> The file processing device according to <12>, in which
   the proxy file is a HEIF file in an image item format, the HEIF file storing the related image as an item.
<14> The file processing device according to <13>, in which
   the proxy file stores association information that associates the related image with specification information specifying the image corresponding to the related image, and
   the file control unit detects, as the image corresponding to the selected related image, the image specified by the specification information associated with the selected related image.
<15> The file processing device according to <14>, in which
   the proxy file stores the association information in which an item ID specifying the related image is correlated with the specification information, and
   the file control unit detects, as the image corresponding to the selected related image, the image specified by the specification information correlated with the item ID of the selected related image.
<16> The file processing device according to any one of <12> to <15>, in which
   the related image is different from the image in image quality or data amount.
<17> The file processing device according to any one of <12> to <15>, in which
   the related image is different from the image in number of pixels or in size and same as the image in content, is different from the image in signal format and same as the image in content, or is different from the image in gradation and same as the image in content.
<18> The file processing device according to any one of <12> to <15>, in which
   the HEIF file stores the image and a thumbnail image of the image, and
   the related image is: the thumbnail image stored in the HEIF file; an image for which coding with a compression ratio different from the compression ratio for the thumbnail image is adopted; or an image for which a codec different from the codec for the thumbnail image is adopted.
<19> A file processing method including:
   detecting an image in a high efficiency image file format (HEIF) file, the image corresponding to a selected related image selected from a related image that is related to the image and stored in a proxy file being another HEIF file.
<20> A program for causing a computer to function as:
   a file control unit configured to detect an image in a high efficiency image file format (HEIF) file, the image corresponding to a selected related image selected from a related image that is related to the image and stored in a proxy file being another HEIF file.

### REFERENCE SIGNS LIST

- 10: Digital camera
- 11: Optical system
- 13: Signal processing unit
- 14: Medium
- 15, 16: Interface
- 17: Button/key
- 18: Touch panel
- 19: Liquid crystal panel
- 20: Viewfinder
- 21: Interface
- 41: Optical system/image sensor control unit
- 42: Encoding control unit
- 43: File control unit
- 44: Medium control unit
- 45: Operation control unit
- 46: Display control unit
- 47: UI control unit
- 901: Bus
- 902: CPU
- 903: ROM
- 904: RAM
- 905: Hard disk
- 906: Output unit
- 907: Input unit
- 908: Communication unit
- 909: Drive
- 910: Input/output interface
- 911: Removable recording medium

## Claims

1. A file processing device comprising:
a file control unit configured to generate a proxy file storing a related image related to an image in a high efficiency image file format (HEIF) file, the proxy file being another HEIF file.

2. The file processing device according to claim 1, wherein
the file control unit generates, as the proxy file, a collection file which is a HEIF file in an image item format and in which the related image is stored as an item.

3. The file processing device according to claim 2, wherein
the file control unit generates the proxy file storing association information that associates the related image with specification information specifying the image corresponding to the related image.

4. The file processing device according to claim 3, wherein
the file control unit generates the proxy file storing the association information in which an item ID specifying the related image is correlated with the specification information.

5. The file processing device according to claim 4, wherein
the file control unit generates the proxy file in which the association information is stored in a meta box or an mdat box.

6. The file processing device according to claim 3, wherein
the file control unit generates the proxy file in which
the specification information is stored, as an item, in an mdat box in the proxy file, and
the association information is stored in a meta box, the association information correlating an item ID specifying the related image with an item ID specifying the specification information stored in the mdat box.

7. The file processing device according to claim 1, wherein
the related image is different from the image in image quality or data amount.

8. The file processing device according to claim 1, wherein
the related image is different from the image in number of pixels or in size and same as the image in content, is different from the image in signal format and same as the image in content, or is different from the image in gradation and same as the image in content.

9. The file processing device according to claim 1, wherein
the HEIF file stores the image and a thumbnail image of the image, and
the related image is: the thumbnail image stored in the HEIF file; an image for which coding with a compression ratio different from the compression ratio for the thumbnail image is adopted; or an image for which a codec different from the codec for the thumbnail image is adopted.

10. A file processing method comprising:
generating a proxy file storing a related image related to an image in a high efficiency image file format (HEIF) file, the proxy file being another HEIF file.

11. A program for causing a computer to function as:
a file control unit configured to generate a proxy file storing a related image related to an image in a high efficiency image file format (HEIF) file, the proxy file being another HEIF file.

12. A file processing device comprising:
a file control unit configured to detect an image in a high efficiency image file format (HEIF) file, the image corresponding to a selected related image selected from a related image that is related to the image and stored in a proxy file being another HEIF file.

13. The file processing device according to claim 12, wherein
the proxy file is a HEIF file in an image item format, the HEIF file storing the related image as an item.

14. The file processing device according to claim 13, wherein
the proxy file stores association information that associates the related image with specification information specifying the image corresponding to the related image, and
the file control unit detects, as the image corresponding to the selected related image, the image specified by the specification information associated with the selected related image.

15. The file processing device according to claim 14, wherein
the proxy file stores the association information in which an item ID specifying the related image is correlated with the specification information, and
the file control unit detects, as the image corresponding to the selected related image, the image specified by the specification information correlated with the item ID of the selected related image.

16. The file processing device according to claim 12, wherein
the related image is different from the image in image quality or data amount.

17. The file processing device according to claim 12, wherein
the related image is different from the image in number of pixels or in size and same as the image in content, is different from the image in signal format and same as the image in content, or is different from the image in gradation and same as the image in content.

18. The file processing device according to claim 12, wherein
the HEIF file stores the image and a thumbnail image of the image, and
the related image is: the thumbnail image stored in the HEIF file; an image for which coding with a compression ratio different from the compression ratio for the thumbnail image is adopted; or an image for which a codec different from the codec for the thumbnail image is adopted.

19. A file processing method comprising:
detecting an image in a high efficiency image file format (HEIF) file, the image corresponding to a selected related image selected from a related image that is related to the image and stored in a proxy file being another HEIF file.

20. A program for causing a computer to function as:
a file control unit configured to detect an image in a high efficiency image file format (HEIF) file, the image corresponding to a selected related image selected from a related image that is related to the image and stored in a proxy file being another HEIF file.
